(19) Europäisches Patentamt
European Patent Office
Office européen des brevets

(11) **EP 4 768 737 A1**

(12) **EUROPEAN PATENT APPLICATION**
published in accordance with Art. 153(4) EPC

(43) Date of publication:
**01.07.2026  Bulletin 2026/27**

(21) Application number: **24856324.9**

(22) Date of filing: **08.08.2024**

(51) International Patent Classification (IPC):
**F04F 5/18** (2006.01)      **F04F 5/44** (2006.01)
**F25B 1/00** (2006.01)      **F25B 41/42** (2021.01)

(52) Cooperative Patent Classification (CPC):
**F04F 5/18; F04F 5/44; F25B 1/00; F25B 41/42**

(86) International application number:
**PCT/JP2024/028436**

(87) International publication number:
**WO 2025/041633 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.08.2023  JP 2023134625
12.07.2024  JP 2024112472**

(71) Applicant: **DENSO CORPORATION
Kariya-city, Aichi 448-8661 (JP)**

(72) Inventors:
• **NISHIJIMA, Haruyuki
Kariya-city, Aichi 448-8661 (JP)**

• **YOKOYAMA, Yoshiyuki
Kariya-city, Aichi 448-8661 (JP)**
• **TANAKA, Kota
Kariya-city, Aichi 448-8661 (JP)**
• **OUCHI, Riku
Kariya-city, Aichi 448-8661 (JP)**
• **KUSHIDA, Yohei
Kariya-city, Aichi 448-8661 (JP)**
• **SUWA, Yuji
Kariya-city, Aichi 448-8661 (JP)**

(74) Representative: **TBK
Bavariaring 4-6
80336 München (DE)**

(54)     **EJECTOR AND REFRIGERATION CYCLE DEVICE**

(57)      An ejector includes a nozzle portion (71) and a body portion (72). A suction port (721), a mixing portion (722), and an outlet (724) are formed in the body portion (72). The mixing portion (722) includes a tapered mixing portion (722a) and a divergent mixing portion (722b). The tapered mixing portion (722a) accelerates a velocity of mixed fluid to a value equal to or higher than a speed of sound. The divergent mixing portion (722b) generates a shock wave in the mixed fluid flowing out of the tapered mixing portion (722a) and eliminates the generated shock wave. The tapered mixing portion (722a) forms a fluid passage having a shape with a passage cross-sectional area reduced in the flow direction of the mixed fluid. The divergent mixing portion (722b) forms a fluid passage having a shape with a passage cross-sectional area increased in the flow direction of the mixed fluid.

FIG. 2

EP 4 768 737 A1

## Description

CROSS REFERENCE TO RELATED APPLICATION

The present application is based on Japanese Patent Applications No. 2023-134625 filed on August 22, 2023 and No. 2024-112472 filed on July 12, 2024. The entire disclosures of all of the above applications are incorporated herein by reference.

TECHNICAL FIELD

The present disclosure relates to an ejector configured to increase pressure of fluid by action of a shock wave, and a refrigeration cycle device including the ejector.

BACKGROUND ART

Patent Literature 1 discloses an ejector applied to a refrigeration cycle device and configured to increase pressure of refrigerant that is a fluid.

The ejector disclosed in Patent Literature 1 employs a passage shape for rapidly bringing a velocity of particles (hereinafter referred to as droplets) of a liquid-phase refrigerant contained in mixed refrigerant obtained by mixing a jetted refrigerant jetted from a nozzle portion and a suction refrigerant drawn from a suction port formed in a body portion close to a terminal velocity. Accordingly, in the ejector disclosed in Patent Literature 1, energy transmission loss between the gas-phase refrigerant and the liquid-phase refrigerant contained in the mixed refrigerant is suppressed to improve the pressure-increasing capacity of the ejector.

PRIOR ART LITERATURE

PATENT LITERATURE

PATENT LITERATURE 1: JP2010-116927A

SUMMARY OF INVENTION

However, in the ejector of Patent Literature 1, for example, under the operating condition where the jetted refrigerant becomes the gas-phase refrigerant, the velocity energy of the jetted refrigerant is consumed to accelerate the droplets included in the suction refrigerant, so that the jetted refrigerant jetted from the nozzle portion cannot be accelerated. Therefore, even when the refrigerant is accelerated to reach the speed of sound in the refrigerant passage of the nozzle portion, the refrigerant enters an over-expanded state, and shock waves occur in the refrigerant passage of the nozzle portion.

For this reason, in the ejector of Patent Literature 1, shock waves cannot be generated in the mixed refrigerant obtained by mixing the jetted refrigerant and the suction refrigerant, and pressure of the mixed refrigerant cannot be effectively increased by the action of shock waves. That is, in the ejector of Patent Literature 1, a sufficient fluid pressure-increasing effect by the action of shock waves may not be exerted.

In view of the above points, a first object of the present disclosure is to provide an ejector capable of exerting a sufficient fluid pressure-increasing effect by the action of shock waves.

Further, a second object of the present disclosure is to provide a refrigeration cycle device with sufficiently improved operating efficiency.

According to a first aspect of the present disclosure, an ejector comprises: a nozzle portion; and a body portion. The nozzle portion is configured to accelerate and jet drive-side fluid. The body portion has a suction port, a mixing portion, and an outlet.

The suction port is configured to draw suction-side fluid. The mixing portion is configured to mix jetted fluid, which is jetted from the nozzle portion, with suction fluid, which is drawn from the suction port. The outlet is configured to cause mixed fluid, which is mixed in the mixing portion, to flow out.

The mixing portion includes a tapered mixing portion and a divergent mixing portion. The tapered mixing portion is configured to accelerate velocity of the mixed fluid to a value equal to or higher than speed of sound. The divergent mixing portion is configured to generate a shock wave in the mixed fluid, which flows out of the tapered mixing portion and eliminate the generated shock wave.

The tapered mixing portion forms a fluid passage having a shape with a passage cross-sectional area reduced in a flow direction of the mixed fluid. The divergent mixing portion forms a fluid passage having a shape with a passage cross-sectional area increased in the flow direction of the mixed fluid.

According to this, the velocity of the mixed fluid can be accelerated to a value equal to or higher than the speed of sound in the fluid passage formed in the tapered mixing portion. In addition, shock waves can be generated in the mixed fluid in the fluid passage formed in the divergent mixing portion, and can be eliminated.

Therefore, in the divergent mixing portion, the mixed fluid can be effectively increased in pressure and allowed to flow out of the outlet by the action of shock waves. That is, pressure of the fluid flowing out of the outlet can be sufficiently increased to exceed pressure of the suction fluid at the suction port.

That is, according to the ejector of a first aspect, a sufficient fluid pressure-increasing effect can be exerted by the action of shock waves.

A refrigeration cycle device according to a second aspect of the present disclosure includes a compressor, an upstream branch section, a heating section, a heating-section-side pressure-reducing section, a bypass passage, a bypass-side flow rate regulating section, and an ejector.

The compressor is configured to compress and discharge refrigerant. The upstream branch section is configured to branch a flow of refrigerant discharged from the compressor into flows of refrigerant. The heating section is configured to heat a heating target using, as a heat source, one of the flows of refrigerant branched at the upstream branch section. The heating-section-side pressure-reducing section is configured to reduce pressure of the refrigerant flowing out of the heating section. The bypass passage is configured to cause an other of the flows of refrigerant, which is branched at the upstream branch section, to flow therethrough to bypass the heating section. The bypass-side flow rate regulating section is configured to regulate a flow rate of refrigerant flowing through the bypass passage.

The ejector includes a nozzle portion and a body portion. The nozzle portion is configured to accelerate and jet refrigerant, which flows out of the bypass passage. The body portion has a suction port, a mixing portion, and an outlet.

The suction port is configured to draw refrigerant, which is reduced in pressure in the heating-section-side pressure-reducing section. The mixing portion is configured to mix jetted refrigerant, which is jetted from the nozzle portion, with suction refrigerant, which is drawn from the suction port. The outlet is configured to cause mixed refrigerant, which is mixed in the mixing portion, to flow out to an intake port side of the compressor.

The mixing portion includes a tapered mixing portion and a divergent mixing portion. The tapered mixing portion is configured to accelerate velocity of the mixed refrigerant to a value equal to or higher than speed of sound. The divergent mixing portion is configured to generate a shock wave in the mixed refrigerant, which flows out of the tapered mixing portion and eliminate the generated shock wave.

The tapered mixing portion forms a refrigerant passage having a shape with a passage cross-sectional area reduced in a flow direction of the mixed refrigerant. The divergent mixing portion forms a refrigerant passage having a shape with a passage cross-sectional area increased in the flow direction of the mixed refrigerant.

According to this, the heating section can heat a heating target using heat generated by the compression work of the compressor.

At this time, since the ejector according to the first aspect is provided, pressure of the refrigerant flowing out of the outlet to the intake port side of the compressor can be sufficiently increased to exceed pressure of the suction refrigerant at the suction port by the action of shock waves. As a result, the density of an intake refrigerant drawn into the compressor can be increased to increase compression workload of the compressor. As a result, power saving of the compressor can be achieved.

Therefore, according to the refrigeration cycle device of the second aspect, the operating efficiency can be sufficiently improved when the heating target is heated.

Further, a refrigeration cycle device according to a third aspect includes a compressor, a heat dissipating section, a suction-side evaporating section, and an ejector.

The compressor compresses and discharges refrigerant. The heat dissipating section dissipates heat of the refrigerant discharged from the compressor. The suction-side evaporating section evaporates the refrigerant.

The ejector includes a nozzle portion and a body portion. The nozzle portion accelerates and jets the other refrigerant branched at a downstream branch section. A suction port, a mixing portion, and an outlet are formed in the body portion.

The suction port is a portion that draws the refrigerant flowing out of the suction-side evaporating section. The mixing portion is a portion that mixes the jetted refrigerant jetted from the nozzle portion and the suction refrigerant drawn from the suction port. The outlet is a portion that allows the mixed refrigerant mixed in the mixing portion to flow out to the intake port side of the compressor.

The mixing portion includes a tapered mixing portion and a divergent mixing portion. The tapered mixing portion accelerates the velocity of the mixed refrigerant to a value equal to or higher than the speed of sound. The divergent mixing portion generates shock waves in the mixed refrigerant flowing out of the tapered mixing portion and eliminates the generated shock waves.

The tapered mixing portion forms a refrigerant passage having a shape with a passage cross-sectional area reduced in the flow direction of the mixed fluid. The divergent mixing portion forms a refrigerant passage having a shape with a passage cross-sectional area increased in the flow direction of the mixed fluid.

According to this, the heat dissipating section can dissipate heat contained in the refrigerant to heat the heating target. The suction-side evaporating section can evaporate the refrigerant to cool a cooling target.

At this time, since the ejector according to the first aspect is provided, pressure of the refrigerant flowing out of the outlet to the intake port side of the compressor can be sufficiently increased to exceed pressure of the suction refrigerant at the suction port by the action of shock waves. Accordingly, the refrigerant evaporating pressure at the suction-side evaporating section can be lowered below pressure of the refrigerant drawn into the compressor.

Therefore, according to the refrigeration cycle device of the third aspect, the operating efficiency can be sufficiently improved.

BRIEF DESCRIPTION OF THE DRAWINGS

The above objects, other objects, features, and advantages of the present disclosure will become more apparent from the following detailed description with reference to the accompanying drawings.

FIG. 1 is a schematic diagram of an overall configuration of a vehicular air conditioner according to a first embodiment.
FIG. 2 is a cross-sectional view of an ejector according to the first embodiment.
FIG. 3 is an explanatory diagram for explaining a change in pressure of refrigerant in a mixing portion when the usage mode of the ejector according to the first embodiment is a suction mode.
FIG. 4 is an explanatory diagram illustrating a relationship between a dryness and a required relaxation distance ratio in a tapered mixing portion of the ejector according to the first embodiment.
FIG. 5 is an explanatory diagram illustrating a relationship between a dryness and an extinction distance ratio in a divergent mixing portion of the ejector according to the first embodiment.
FIG. 6 is a schematic configuration diagram of an interior air conditioning unit of the first embodiment.
FIG. 7 is a block diagram illustrating an electric control section of the vehicular air conditioner of the first embodiment.
FIG. 8 is a Mollier diagram illustrating a change in a state of refrigerant in a hot-gas air-heating mode in a refrigeration cycle device according to the first embodiment.
FIG. 9 is an explanatory diagram illustrating a pressure change in the ejector in the hot-gas air-heating mode according to the first embodiment.
FIG. 10 is an explanatory diagram illustrating a pressure change in the ejector in a hot-gas start-up mode according to the first embodiment.
FIG. 11 is a schematic diagram of an overall configuration of a vehicular air conditioner according to a second embodiment.
FIG. 12 is a Mollier diagram illustrating a change in a state of refrigerant in a cooling and air-cooling mode of a refrigeration cycle device according to the second embodiment.
FIG. 13 is a schematic diagram of an overall configuration of a vehicular air conditioner according to a third embodiment.
FIG. 14 is a Mollier diagram illustrating a change in a state of refrigerant in a cooling and air-cooling mode during normal operation of a refrigeration cycle device according to the third embodiment.
FIG. 15 is a Mollier diagram illustrating a change in the state of the refrigerant in the cooling and air-cooling mode during high-load operation of the refrigeration cycle device according to the third embodiment.
FIG. 16 is a schematic diagram of an overall configuration of a vehicular air conditioner according to a fourth embodiment.
FIG. 17 is a Mollier diagram illustrating a change in a state of refrigerant in an air-cooling mode during normal operation of a refrigeration cycle device according to the fourth embodiment.
FIG. 18 is a Mollier diagram illustrating a change in the state of the refrigerant in the air-cooling mode during high-load operation of the refrigeration cycle device according to the fourth embodiment.

DESCRIPTION OF EMBODIMENTS

Hereinafter, a plurality of embodiments for carrying out the present disclosure will be described with reference to the drawings. In each embodiment, parts corresponding to items described in the prior embodiment are denoted by the same reference numerals, and redundant description may be omitted. When only a portion of the configuration is described in each embodiment, another embodiment described previously may be applied to the other portions of the configuration. Not only a combination of parts that are specifically indicated as combinable in each embodiment, but also a partial combination of embodiments without being explicitly indicated is possible when no particular obstacle to the combination arises.

(First Embodiment)

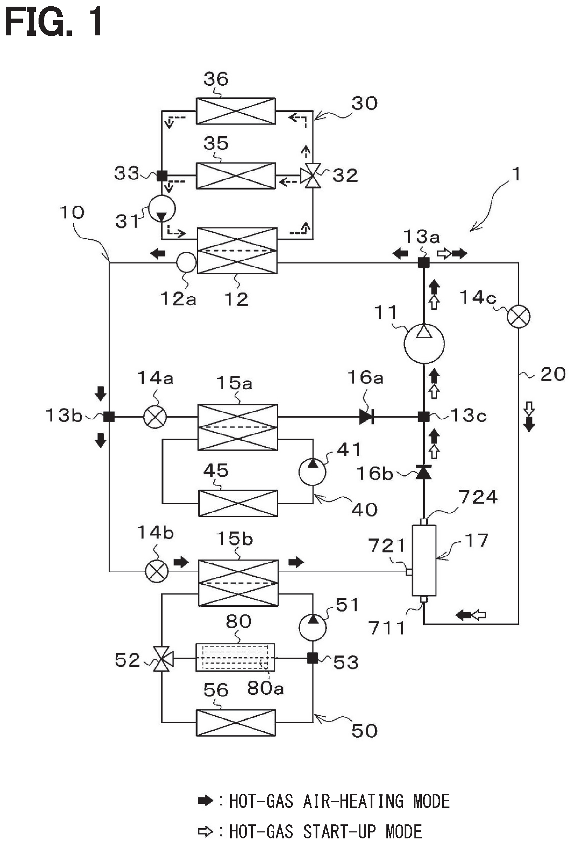

A first embodiment of a refrigeration cycle device including an ejector according to the present disclosure will be described with reference to FIGS. 1 to 10. In the present embodiment, the refrigeration cycle device according to the present disclosure is applied to a vehicular air conditioner 1 mounted on an electric vehicle. The vehicular air conditioner 1 performs air conditioning of a vehicle interior, which is a space to be air-conditioned, and regulates a temperature of an in-vehicle device that generates heat during operation. Therefore, the vehicular air conditioner 1 is an air conditioner with an in-vehicle device temperature regulation function.

In the vehicular air conditioner 1, a temperature of a battery 80 is regulated as an in-vehicle device serving as a temperature regulation target. The battery 80 is a secondary battery that stores electric power supplied to a plurality of in-vehicle devices operated by electricity. The battery 80 is an assembled battery formed by electrically connecting a plurality of stacked battery cells in series or in parallel. The battery cell of the present embodiment is a lithium-ion battery.

The battery 80 generates heat during operation (i.e., during charging and discharging). The battery 80 tends to decrease in output at low temperatures and deteriorates at high temperatures. It is thus necessary to maintain the temperature of the battery 80 within an appropriate temperature range (15°C or higher and 55°C or lower in the present embodiment). Therefore, in the electric vehicle of the present embodiment, the battery 80 is cooled using the vehicular air conditioner 1.

The vehicular air conditioner 1 includes a refrigeration cycle 10, an air-heating heat medium circuit 30, an air-cooling heat medium circuit 40, a cooling heat medium circuit 50, an interior air conditioning unit 60, a control device 70, and the like.

First, the refrigeration cycle 10 will be described with reference to an overall configuration diagram of FIG. 1. The refrigeration cycle 10 is a vapor compression refrigeration cycle that regulates temperatures of an air-heating heat medium circulating through the air-heating heat medium circuit 30, an air-cooling heat medium circulating through the air-cooling heat medium circuit 40, and a cooling heat medium circulating through the cooling heat medium circuit 50.

The refrigeration cycle 10 is configured to switch a refrigerant circuit according to various operating modes to be described later in order to perform air conditioning of the vehicle interior and temperature regulation of the in-vehicle device. The refrigeration cycle 10 employs a hydrofluoroolefin (HFO) refrigerant (specifically, R1234yf) as refrigerant. The refrigeration cycle 10 constitutes a subcritical refrigeration cycle in which pressure of a high-pressure-side refrigerant does not exceed the critical pressure of the refrigerant.

Refrigerating machine oil for lubricating a compressor 11 is mixed in the refrigerant. The refrigerating machine oil is PAG oil (i.e., polyalkylene glycol oil) having compatibility with a liquid-phase refrigerant or POE (i.e., polyol ester). A portion of the refrigerating machine oil circulates through the refrigeration cycle 10 together with the refrigerant.

In the refrigeration cycle 10, the compressor 11 draws, compresses, and discharges the refrigerant. The compressor 11 is an electric compressor in which a fixed capacity type compression mechanism having a fixed discharge capacity is rotationally driven by an electric motor. The rotation speed (i.e., refrigerant discharge capacity) of the compressor 11 is controlled by a control signal output from the control device 70 to be described later.

The compressor 11 is disposed in a drive device compartment formed on the front side of the vehicle interior. The drive device compartment forms a space in which at least some of devices used for generating or regulating driving power for vehicle traveling (e.g., a motor generator to be described later) and other devices are disposed.

The inflow port side of a first three-way joint 13a is connected to a discharge port of the compressor 11. The first three-way joint 13a has three inflow/outflow ports communicating with each other. As the first three-way joint 13a, a joint portion formed by joining a plurality of pipes or a joint portion formed by providing a plurality of refrigerant passages in a metal block or a resin block can be employed.

As described later, the refrigeration cycle 10 further includes a second three-way joint 13b and a third three-way joint 13c. The basic configurations of the second three-way joint 13b and the third three-way joint 13c are similar to that of the first three-way joint 13a. Moreover, the basic configuration of each three-way joint described in embodiments to be described later is also similar to that of the first three-way joint 13a.

This type of three-way joint branches a flow of refrigerant when one of the three inflow/outflow ports is used as an inflow port and the remaining two are used as outflow ports. The three-way joint merges flows of the refrigerant when two of the three inflow/outflow ports are used as inflow ports and the remaining one is used as an outflow port. The first three-way joint 13a is an upstream branch section that branches the flow of the discharge refrigerant discharged from the compressor 11.

The inlet side of a refrigerant passage of a water-refrigerant heat exchanger 12 is connected to one outflow port of the first three-way joint 13a. The water-refrigerant heat exchanger 12 is a heat exchanger that exchanges heat between the discharge refrigerant flowing out of one outflow port of the first three-way joint 13a and the air-heating heat medium circulating through the air-heating heat medium circuit 30. The water-refrigerant heat exchanger 12 is a heat dissipating section that dissipates heat of the discharge refrigerant to the air-heating heat medium.

The inlet side of a receiver 12a is connected to the outlet of the refrigerant passage of the water-refrigerant heat exchanger 12. The receiver 12a is a high-pressure-side gas-liquid separator that separates the high-pressure refrigerant flowing out of the water-refrigerant heat exchanger 12 into gas and liquid. The receiver 12a is a high-pressure-side liquid storage section that allows a portion of the separated liquid-phase refrigerant to flow out to the downstream side and stores the remaining liquid-phase refrigerant as surplus refrigerant in the cycle.

The inflow port side of the second three-way joint 13b is connected to the outlet of the receiver 12a. The inlet side of an air-cooling expansion valve 14a is connected to one outflow port of the second three-way joint 13b. The inlet side of a cooling expansion valve 14b is connected to the other outflow port of the second three-way joint 13b.

The air-cooling expansion valve 14a is an air-cooling pressure-reducing section that reduces pressure of the refrigerant flowing out of the second three-way joint 13b and flowing into an air-cooling chiller 15a at least during an air-cooling mode to be described later. Moreover, the air-cooling expansion valve 14a is an air-cooling flow rate regulating section that regulates the flow rate of the refrigerant flowing into the air-cooling chiller 15a.

The air-cooling expansion valve 14a is an electric variable throttle mechanism including a valve body that changes a throttle opening and an electric actuator (specifically, a stepping motor or a brushless DC motor) as a drive portion that displaces the valve body. The operation of the air-cooling expansion valve 14a is controlled by a control signal output from the control device 70.

The air-cooling expansion valve 14a has a full-open function of functioning as a simple refrigerant passage while hardly exerting a refrigerant pressure-reducing effect and a flow rate regulating effect by setting the throttle opening to a fully open state. The air-cooling expansion valve 14a has a full-close function of closing the refrigerant passage by bringing the throttle opening into a fully closed state.

The refrigeration cycle 10 further includes the cooling expansion valve 14b and a bypass-side flow rate regulating valve 14c. The basic configuration of each of the cooling expansion valve 14b and the bypass-side flow rate regulating valve 14c is similar to that of the air-cooling expansion valve 14a. Moreover, the basic configuration of an expansion valve or a flow rate regulating valve described in an embodiment to be described later is also similar to that of the air-cooling expansion valve 14a.

The air-cooling expansion valve 14a, the cooling expansion valve 14b, and the bypass-side flow rate regulating valve 14c can switch the refrigerant circuit by exerting the full-close function. Therefore, the air-cooling expansion valve 14a, the cooling expansion valve 14b, and the bypass-side flow rate regulating valve 14c also function as a refrigerant circuit switching portion.

Alternatively, the air-cooling expansion valve 14a, the cooling expansion valve 14b, and the bypass-side flow rate regulating valve 14c each may be formed by combining a variable throttle mechanism that does not have a full-close function and an on/off valve that opens and closes a throttle passage. In this case, each on/off valve serves as a refrigerant circuit switching portion.

The inlet side of a refrigerant passage of the air-cooling chiller 15a is connected to the outlet of the air-cooling expansion valve 14a. The air-cooling chiller 15a is a heat exchanger that exchanges heat between the refrigerant flowing out of the air-cooling expansion valve 14a and the air-cooling heat medium circulating through the air-cooling heat medium circuit 40. The air-cooling chiller 15a is an air-cooling heat absorbing section that causes the refrigerant reduced in pressure by the air-cooling expansion valve 14a to absorb heat of the air-cooling heat medium.

One inflow port side of the third three-way joint 13c is connected to the outlet of the refrigerant passage of the air-cooling chiller 15a via a first check valve 16a. The first check valve 16a allows the refrigerant to flow from the air-cooling chiller 15a side to the third three-way joint 13c side, and prohibits the refrigerant from flowing from the third three-way joint 13c side to the air-cooling chiller 15a side.

The cooling expansion valve 14b is a cooling pressure-reducing section that reduces pressure of the refrigerant flowing out of the second three-way joint 13b and flowing into a cooling chiller 15b at least during an operating mode for cooling the battery 80. The cooling expansion valve 14b serves as a heating-section-side pressure-reducing section that reduces pressure of the refrigerant flowing out of the water-refrigerant heat exchanger 12 as the heating section during a hot-gas air-heating mode to be described later. Moreover, the cooling expansion valve 14b is a cooling flow rate regulating section that regulates the flow rate of the refrigerant flowing into the cooling chiller 15b.

The inlet side of a refrigerant passage of the cooling chiller 15b is connected to the outlet of the cooling expansion valve 14b. The cooling chiller 15b is a heat exchanger that exchanges heat between the refrigerant flowing out of the cooling expansion valve 14b and the cooling heat medium circulating through the cooling heat medium circuit 50. The cooling chiller 15b is a cooling heat absorbing section that causes the refrigerant reduced in pressure by the cooling expansion valve 14b to absorb heat of the cooling heat medium.

The side of a suction port 721 formed in a body portion 72 of an ejector 17 is connected to the outlet of the refrigerant passage of the air-cooling chiller 15a.

The inlet side of the bypass-side flow rate regulating valve 14c is connected to the other outflow port of the first three-way joint 13a connected to the discharge port of the compressor 11. The side of a nozzle inlet 711 of a nozzle portion 71 of the ejector 17 is connected to the outlet of the bypass-side flow rate regulating valve 14c.

The refrigerant passage from the other outflow port of the first three-way joint 13a to the nozzle portion 71 of the ejector 17 is a bypass passage 20 through which the other refrigerant branched at the first three-way joint 13a, which is an upstream branch section, flows while bypassing the water-refrigerant heat exchanger 12.

The bypass-side flow rate regulating valve 14c is a bypass-side pressure-reducing section that reduces pressure of the refrigerant flowing out of the first three-way joint 13a and flowing into the nozzle portion 71 of the ejector 17 during the hot-gas air-heating mode or the like to be described later. Moreover, the bypass-side flow rate regulating valve 14c is a bypass-side flow rate regulating section that regulates the flow rate of the refrigerant flowing through the bypass passage 20 and flowing into the nozzle portion 71 of the ejector 17.

The ejector 17 accelerates and jets the refrigerant serving as drive-side fluid in the nozzle portion 71. The ejector 17 is a fluid transport section that draws and transports the refrigerant serving as suction-side fluid from the suction port 721 by the action of a jetted refrigerant (i.e., jetted fluid) jetted from the nozzle portion 71. The ejector 17 is also a fluid pressure-increasing section that increases pressure of mixed refrigerant (i.e., mixed fluid) obtained by mixing a jetted refrigerant and a suction refrigerant (i.e., suction fluid) drawn from the suction port 721.

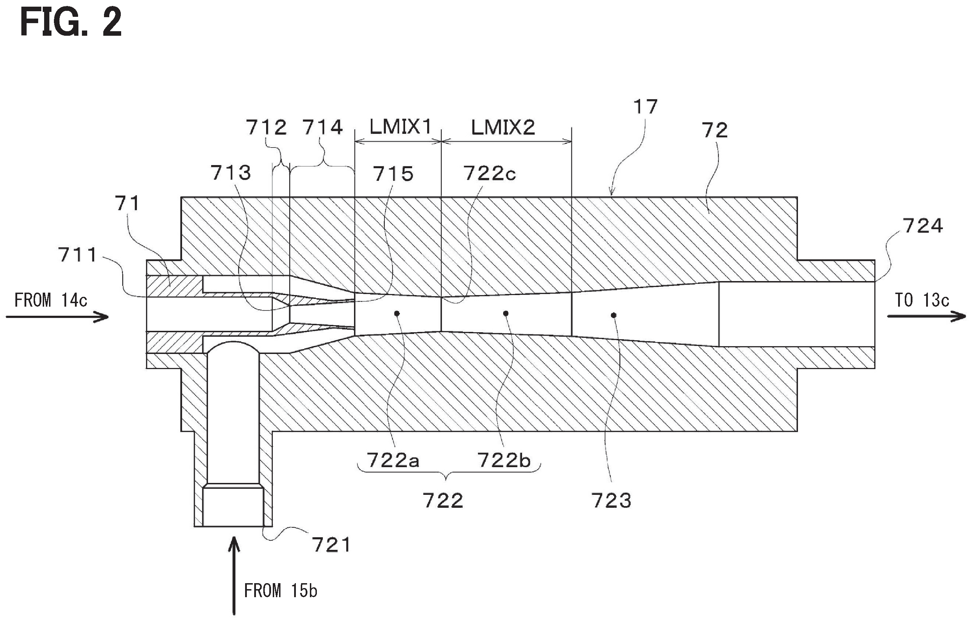

A detailed configuration of the ejector 17 will be described with reference to FIG. 2. The ejector 17 includes the nozzle portion 71 and the body portion 72.

The nozzle portion 71 accelerates the refrigerant flowing in from the nozzle inlet 711 until reaching supersonic speed, and jets the refrigerant into a mixing portion 722 formed in the body portion 72. The nozzle portion 71 is formed by plastically working or cutting a cylindrical member made of metal (made of stainless steel in the present embodiment).

The nozzle inlet 711 through which the refrigerant flowing out of the bypass-side flow rate regulating valve 14c disposed in the bypass passage 20 is allowed to flow is formed in the most upstream portion of the refrigerant passage of the nozzle portion 71. A jetting port 715 for jetted refrigerant is formed in the most downstream portion in the refrigerant flow of the nozzle portion 71.

A tapered portion 712, a throat portion 713, and a divergent portion 714 are formed in the refrigerant passage of the nozzle portion 71. The tapered portion 712 is a portion that reduces the passage cross-sectional area of the refrigerant flowing in from the nozzle inlet 711 toward the refrigerant-flow downstream side. The throat portion 713 is a portion that minimizes the passage cross-sectional area of the refrigerant. The divergent portion 714 is a portion that increases the passage cross-sectional area of the refrigerant from the throat portion 713 toward the jetting port 715.

That is, in the ejector 17, a so-called Laval nozzle is employed as the nozzle portion 71. The nozzle portion 71 is formed in a dimensional shape capable of accelerating the refrigerant to the speed of sound in almost all operating modes to be described later.

The body portion 72 is a cylindrical member forming the outer shell of the ejector 17 and also forming a refrigerant passage inside. The nozzle portion 71 is fixed to the inside of one longitudinal end of the body portion 72 by means of press fitting, screw fastening, or the like. The central axis of the refrigerant passage of the nozzle portion 71 and the central axis of the refrigerant passage of the body portion 72 are disposed coaxially with each other. The body portion 72 is made of metal (specifically, an aluminum alloy). The body portion 72 may be made of resin.

The body portion 72 includes the suction port 721, the mixing portion 722, an area-expanding portion 723, an outlet 724, and the like.

The suction port 721 is formed in a portion on the outer peripheral side of the nozzle portion 71 on the cylindrical side surface of the body portion 72. The suction port 721 is a through hole through which the refrigerant flowing out of the refrigerant passage of the cooling chiller 15b is drawn into the ejector 17 when the usage mode of the ejector 17 is a suction mode. In the ejector 17, the refrigerant is drawn from the suction port 721 using a pressure decrease due to an expansion wave generated by the jetted refrigerant.

Here, the suction mode is one of the usage modes of the ejector 17, and is a usage mode in which the refrigerant is allowed to flow into the nozzle portion 71 of the ejector 17 and the refrigerant is drawn from the suction port 721.

The mixing portion 722 is a portion that forms a refrigerant passage (i.e., fluid passage) that mixes the jetted refrigerant and the suction refrigerant to increase pressure during the suction mode. In the mixing portion 722, a refrigerant passage having a rotational body shape is formed. Therefore, at the inlet portion of the mixing portion 722, the jetted refrigerant flows into the central axis side of the mixing portion 722, and the suction refrigerant flows into the inner wall surface side of the mixing portion 722. Moreover, the mixing portion 722 is roughly divided into a tapered mixing portion 722a and a divergent mixing portion 722b.

The tapered mixing portion 722a is disposed on the refrigerant-flow upstream side of the divergent mixing portion 722b. The tapered mixing portion 722a forms a refrigerant passage for accelerating the mixed refrigerant of the jetted refrigerant and the suction refrigerant to a speed equal to or higher than the speed of sound. Specifically, the tapered mixing portion 722a forms a refrigerant passage having a truncated cone shape with a passage cross-sectional area reduced in the flow direction of the mixed refrigerant.

The divergent mixing portion 722b generates shock waves in the mixed refrigerant flowing out of the tapered mixing portion 722a to form a refrigerant passage for eliminating the generated shock waves. Specifically, the divergent mixing portion 722b forms a refrigerant passage having a truncated cone shape with a passage cross-sectional area increased in the flow direction of the mixed refrigerant.

Therefore, a neck portion 722c that minimizes the passage cross-sectional area of the refrigerant passage formed in the mixing portion 722 is formed at a connection portion between the tapered mixing portion 722a and the divergent mixing portion 722b of the mixing portion 722. Therefore, the neck portion 722c is an outlet portion of the tapered mixing portion 722a and an inlet portion of the divergent mixing portion 722b.

The tapered mixing portion 722a reduces the passage cross-sectional area of the refrigerant passage in the flow direction of the mixed refrigerant, so that the velocity of the mixed refrigerant can be accelerated while the jetted refrigerant and the suction refrigerant are mixed during the suction mode.

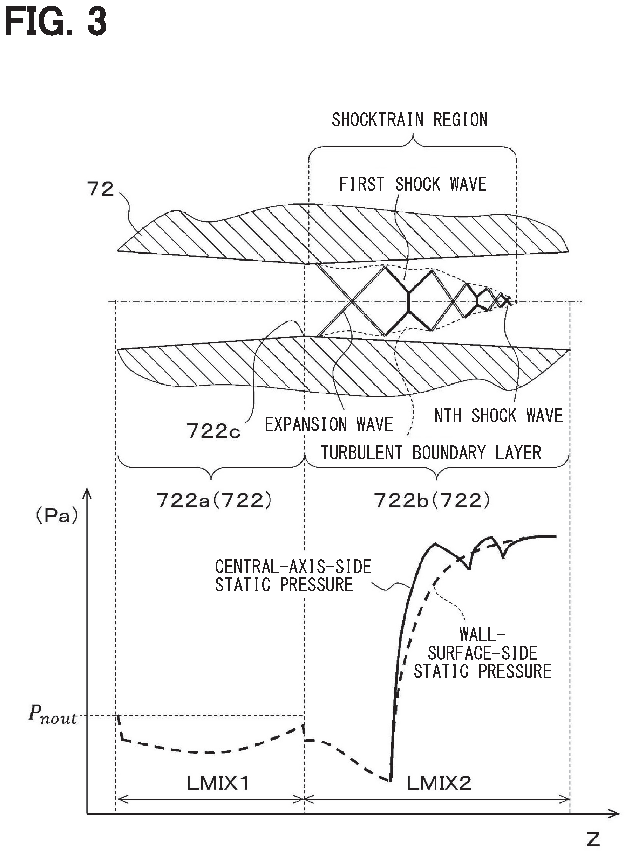

Moreover, as illustrated in FIG. 3, the tapered mixing portion 722a reduces the passage cross-sectional area such that the static pressure of at least a portion of the mixed refrigerant (the refrigerant on the wall surface side in FIG. 3) in the tapered mixing portion 722a is lower than pressure Pnout of the jetted refrigerant at the jetting port 715 of the nozzle portion 71.

More preferably, the area ratio between the passage cross-sectional area at the inlet portion of the tapered mixing portion 722a and the passage cross-sectional area at the neck portion 722c may be determined such that the static pressure of the mixed refrigerant at the neck portion is lower than the pressure Pnout of the jetted refrigerant.

As a result, in the tapered mixing portion 722a of the present embodiment, both the jetted refrigerant and the suction refrigerant are accelerated on the downstream side of the nozzle portion 71, and the velocity of the mixed refrigerant is accelerated to a value equal to or higher than a two-phase speed of sound in the vicinity of the neck portion 722c.

FIG. 3 illustrates a change in pressure of the refrigerant in the mixing portion 722 during the suction mode. In FIG. 3, the refrigerant static pressure on the central axis side of the mixing portion 722 is indicated by a thick line, and the refrigerant static pressure on the wall surface side of the mixing portion 722 is indicated by a thick broken line.

In the ejector 17, as illustrated in FIGS. 2 and 3, when the length in the central axis direction of the tapered mixing portion 722a (i.e., the flow direction of the mixed fluid) is defined as a tapered mixing distance LMIX1, the tapered mixing distance LMIX1 is set to satisfy Mathematical Expressions F1 and F2 below.

[Mathematical Expression 1]

$$Lv < LMIX1 \leq 3 \times Lv1 \quad \ldots \quad (F1)$$

[Mathematical Expression 2]

$$Lv1 = \frac{u_{snin}\rho_{l1}D_{l1}^2}{18\mu_{g1}} \quad \ldots \quad (F2)$$

$u_{snin}$ corresponds to an average mass flow velocity of the refrigerant at the suction port 721 during an operating mode in which the ejector 17 draws refrigerant in a gas-liquid two-phase state from the suction port 721. $u_{snin}$ is an average axial velocity of the refrigerant at the inlet portion of the tapered mixing portion 722a during the suction mode.

$\rho_{l1}$ is a density of droplets that are particles of the liquid-phase refrigerant in the mixed refrigerant (i.e., liquid-phase fluid) at the suction port 721 during the operating mode in which the ejector 17 draws the refrigerant in the gas-liquid two-phase state from the suction port 721.

$D_{l1}$ is an average diameter of droplets at the suction port 721 during the operating mode in which the ejector 17 draws the refrigerant in the gas-liquid two-phase state from the suction port 721.

$\mu_{g1}$ is a viscosity of the gas-phase refrigerant (i.e., gas-phase fluid) in the mixed refrigerant at the suction port 721 during the operating mode in which the ejector 17 draws the refrigerant in the gas-liquid two-phase state from the suction port 721.

Lv1 is a first relaxation distance obtained by integrating a dimensionless relaxation number represented by a ratio of an inertia force to a viscosity of droplets with an average mass flow velocity $u_{snin}$ of the mixed refrigerant at the inlet portion of the tapered mixing portion 722a.

More specifically, the first relaxation distance Lv1 is a value obtained by integrating a first velocity relaxation time $\tau v1$ required until the flow velocity of the gas-phase refrigerant in the mixed refrigerant becomes equal to the flow velocity of droplets with the average mass flow velocity $u_{snin}$ that is the initial velocity of the mixed refrigerant at the inlet portion of the tapered mixing portion 722a. Details of the first velocity relaxation time $\tau v1$ will be described later.

In addition, since the passage cross-sectional area of the refrigerant passage is increased in the flow direction of the mixed refrigerant in the divergent mixing portion 722b, an expansion wave can be generated in the supersonic mixed refrigerant flowing from the neck portion 722c into the divergent mixing portion 722b during the suction mode. As illustrated in FIG. 3, the expansion wave generated by the divergent mixing portion 722b generates a shock wave with the inner wall surface side of the body portion 72 as a front edge. Pressure of the refrigerant is increased by the action of the shock wave.

Pseudo shock waves in which a plurality of shock waves and expansion waves are repeatedly generated occur in the mixed refrigerant flowing through the divergent mixing portion 722b according to the Mach number of the mixed refrigerant. Specifically, when the Mach number of the mixed refrigerant in the central portion exceeds approximately 1.3, a pseudo shock wave occurs in the central portion of a shock wave. The mixed refrigerant increases pressure and enthalpy when passing through repeatedly generated shock waves.

When pseudo shock waves occur, central-axis-side static pressure, which is the refrigerant pressure on the central axis side of the divergent mixing portion 722b, and wall-surface-side static pressure, which is the refrigerant pressure on the wall surface side, change at different values, thereby causing an energy loss due to friction of the mixed refrigerant.

Therefore, to improve the pressure increasing performance of the ejector 17, it is desirable to quickly eliminate the pseudo shock waves in the divergent mixing portion 722b and make the static pressure of the refrigerant on the central axis side in the divergent mixing portion 722b and the static pressure of the refrigerant on the wall surface side in the divergent mixing portion 722b the same value. Furthermore, it has been found that the velocity of the mixed refrigerant only need be reduced to a subsonic speed to eliminate the pseudo shock waves.

Therefore, in the divergent mixing portion 722b of the present embodiment, the passage cross-sectional area is enlarged such that the velocity of the mixed refrigerant at the outlet portion of the divergent mixing portion 722b becomes a subsonic speed. More specifically, the area ratio between the passage cross-sectional area at the neck portion 722c and the passage cross-sectional area at the outlet portion of the divergent mixing portion 722b is determined such that the velocity of the mixed refrigerant at the outlet portion of the divergent mixing portion 722b becomes a subsonic speed.

As a result, in the divergent mixing portion 722b of the present embodiment, shock waves are generated in the mixed refrigerant, and pseudo shock waves caused by the generated shock waves and interference of a turbulent boundary layer are eliminated.

In the ejector 17, as illustrated in FIGS. 2 and 3, when the length in the central axis direction of the divergent mixing portion 722b (i.e., the flow direction of the mixed fluid) is defined as a divergent mixing distance LMIX2, the divergent mixing distance LMIX2 is set to satisfy Mathematical Expressions F3 and F4 below.

[Mathematical Expression 3]

$$Lv2 < LMIX2 \leq 6 \times Lv2 \quad \dots \quad (F3)$$

[Mathematical Expression 4]

$$Lv2 = \frac{u_{neck}\rho_{l2}D_{l2}^2}{18\mu_{g2}} \quad \dots \quad (F4)$$

$u_{neck}$ corresponds to the average mass flow velocity of the refrigerant in the neck portion 722c that is the outlet portion of the tapered mixing portion 722a during the operating mode in which the ejector 17 draws the refrigerant in the gas-liquid two-phase state from the suction port 721. $u_{neck}$ is an average axial velocity of the refrigerant in the neck portion 722c during the suction mode.

$\rho_{l2}$ is a density of particles of the liquid-phase refrigerant (hereinafter referred to as droplets) in the mixed refrigerant at the neck portion 722c during the operating mode in which the ejector 17 draws the refrigerant in the gas-liquid two-phase state from the suction port 721.

$D_{l2}$ is an average diameter of droplets in the neck portion 722c during the operating mode in which the ejector 17 draws the refrigerant in the gas-liquid two-phase state from the suction port 721.

$\mu_{g2}$ is a viscosity of the gas-phase refrigerant in the mixed refrigerant at the neck portion 722c during the operating mode in which the ejector 17 draws the refrigerant in the gas-liquid two-phase state from the suction port 721.

Lv2 is a second relaxation distance obtained by integrating a dimensionless relaxation number represented by a ratio of an inertia force to a viscosity of droplets with an average mass flow velocity $u_{neck}$ of the mixed refrigerant in the neck portion 722c.

More specifically, the second relaxation distance Lv2 represents a distance obtained by integrating a second velocity relaxation time $\tau v2$ required until the flow velocity of the gas-phase refrigerant in the mixed refrigerant becomes equal to the flow velocity of droplets with the average mass flow velocity $u_{neck}$ that is the initial velocity of the mixed refrigerant in the neck portion 722c.

Here, the first relaxation distance Lv1 and the second relaxation distance Lv2 will be described. First, it has been found that droplets flowing through the ejector 17 applied to the refrigeration cycle 10 are relatively fine. The equation of motion for a fluid resistance force acting on fine droplets can be expressed by Mathematical Expression F5 below using the Stokes resistance equation.

[Mathematical Expression 5]

$$m\frac{du_l}{dt} = 3\pi\mu_g D_p\left(u_g - u_l\right) \quad \ldots \text{ (F5)}$$

m is an average mass of droplets in the mixing portion 722 during the operating mode in which the ejector 17 draws the refrigerant in the gas-liquid two-phase state from the suction port 721.

$u_l$ is an average axial velocity of droplets in the mixing portion 722 during the operating mode in which the ejector 17 draws the refrigerant in the gas-liquid two-phase state from the suction port 721.

$u_g$ is an average axial velocity of the gas-phase refrigerant in the mixing portion 722 during the operating mode in which the ejector 17 draws the refrigerant in the gas-liquid two-phase state from the suction port 721.

Moreover, when the velocity relaxation time $\tau v$ is defined as shown in Mathematical Expression F6, Mathematical Expression F5 can be modified as shown in Mathematical Expression F7 below.

[Mathematical Expression 6]

$$\tau_v = \frac{m}{3\pi\mu_g D_p} \quad \ldots \text{ (F6)}$$

$D_p$ is an average diameter of droplets in the mixing portion 722 during the operating mode in which the ejector 17 draws the refrigerant in the gas-liquid two-phase state from the suction port 721.

$\mu_g$ is a viscosity of the gas-phase refrigerant in the mixed refrigerant in the mixing portion 722 during the operating mode in which the ejector 17 draws the refrigerant in the gas-liquid two-phase state from the suction port 721.

[Mathematical Expression 7]

$$\frac{du_l}{dt} = \frac{u_g - u_l}{\tau_v} \quad \ldots \text{ (F7)}$$

Moreover, when the density $\rho_l$ of droplets in the mixing portion 722 during the operating mode in which the ejector 17 draws the refrigerant in the gas-liquid two-phase state from the suction port 721 is used, the velocity relaxation time $\tau v$ defined by Mathematical Expression F6 can be expressed by Mathematical Expression F8 below.

[Mathematical Expression 8]

$$\tau_v = \frac{m}{3\pi\mu_g D_p} = \rho_l \cdot \pi \frac{D_p^3}{6} \cdot \frac{1}{3\pi\mu_g D_p} = \frac{\rho_l D_p^2}{18\mu_g} \quad \ldots \text{ (F8)}$$

When the average axial velocity $u_g$ of the gas-phase refrigerant is constant and the axial velocity of droplets at the time t=0 is solved for Mathematical Expression F7, the average axial velocity $u_l$ of droplets can be expressed by Mathematical Expressions F9 and F10 below. Mathematical Expression F9 represents the average axial velocity $u_l$ of droplets in the tapered mixing portion 722a in an acceleration process. Mathematical Expression F10 represents the average axial velocity $u_l$ of droplets in the divergent mixing portion 722b in a deceleration process.

[Mathematical Expression 9]

$$u_l = \left(u_g - u_{l\ at\ t=0}\right)\left(1 - e^{-\frac{t}{\tau_v}}\right) + u_g \quad \ldots \text{ (F9)}$$

[Mathematical Expression 10]

$$u_l = u_{l\,at\,t=0} - \left(u_{l\,at\,t=0} - u_g\right)\left(1 - e^{-\frac{t}{\tau_v}}\right) \quad \dots \ (F10)$$

As a result, it is possible to calculate the velocity relaxation time $\tau v$ required until the average axial velocity $u_l$ of droplets becomes equal to the average axial velocity $u_g$ of the gas-phase refrigerant. The time calculated using Mathematical Expression F9 representing the acceleration process is the first velocity relaxation time $\tau v1$. The time calculated using Mathematical Expression F10 representing the deceleration process is the second velocity relaxation time $\tau v2$.

Therefore, in the neck portion 722c, at least the tapered mixing distance LMIX1 needs to be longer than the first relaxation distance Lv1 to make the average axial velocity of the droplets included in the mixed refrigerant equal to the average axial velocity of the gas-phase refrigerant. Furthermore, to bring the mixed refrigerant in the neck portion 722c into an equilibrium state, at least the tapered mixing distance LMIX1 needs to be longer than the first relaxation distance Lv1.

Here, the equilibrium state means a state in which a temperature distribution, a pressure distribution, and a flow velocity distribution hardly exist in the mixed refrigerant.

For example, when the mixed refrigerant is a gas-liquid two-phase refrigerant, the equilibrium state means a state in which droplets are uniformly distributed in gas-phase refrigerant, and the temperature, pressure, and flow velocity of the gas-phase refrigerant and the droplets in the gas-liquid two-phase refrigerant are approximately uniform. When the mixed refrigerant is gas-phase refrigerant, the equilibrium state means a state in which the temperature, pressure, and flow velocity of the gas-phase refrigerant are approximately uniform. However, even in the equilibrium state, a velocity distribution according to a power law or the like is generated in the turbulent boundary layer or the like on the wall surface side of the mixing portion 722.

The present inventors have investigated the relationship between a dryness $X_{snin}$ of the suction refrigerant at the suction port 721 and a required relaxation distance Ln actually required until the velocity of the droplets included in the mixed refrigerant becomes equal to or higher than the speed of sound.

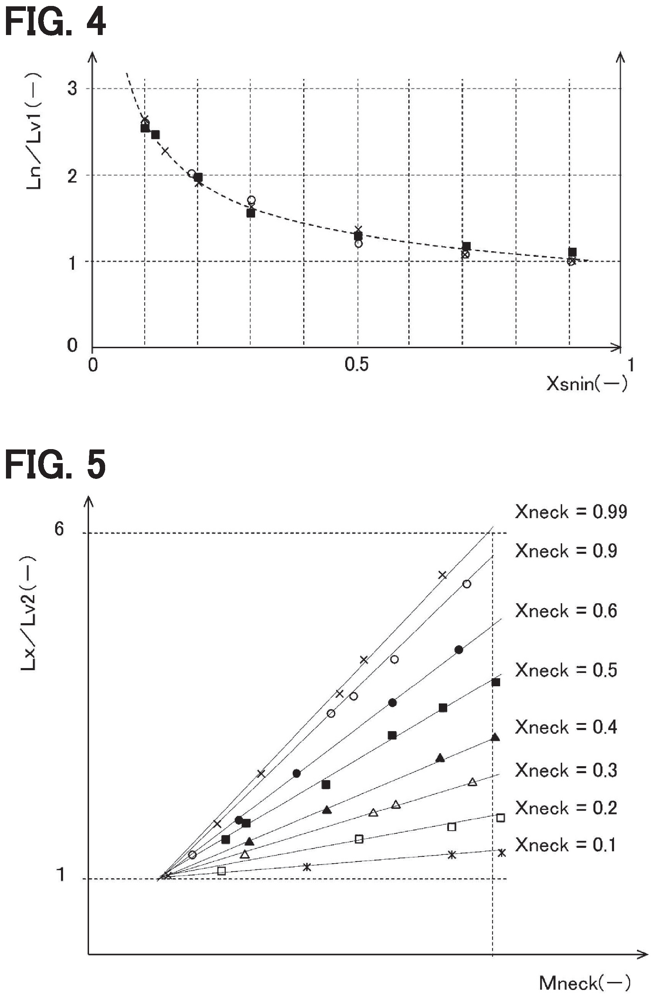

According to this, as illustrated in FIG. 4, a tendency has been confirmed that the required relaxation distance Ln decreases as the dryness $X_{snin}$ increases. This is because as the dryness $X_{snin}$ increases, the number density of the droplets increases, and the velocity difference between the gas-phase refrigerant and the droplets becomes easier to reduce.

Considering the actual dryness $X_{snin}$ in the ejector 17, it has been found that the mixed refrigerant can be reliably brought into the velocity equilibrium state in the tapered mixing portion 722a even when the dryness $X_{snin}$ changes over a wide range by setting a required relaxation distance ratio (Ln/Lv1) to about three times. Furthermore, it has been confirmed that the mixed refrigerant can be accelerated to a value equal to or higher than the speed of sound at the neck portion 722c by setting the required relaxation distance ratio (Ln/Lv1) to about three times.

Here, the vertical axis in FIG. 4 represents the required relaxation distance ratio (Ln/Lv1) of the required relaxation distance Ln to the first relaxation distance Lv1. Further, FIG. 4 illustrates changes in the required relaxation distance ratio (Ln/Lv1) with respect to the dryness $X_{snin}$ for a plurality of refrigerant types (specifically, R1234yf, R744, and R290).

Similarly, at least the divergent mixing distance LMIX2 needs to be longer than the second relaxation distance Lv2 to make the average axial velocity of the droplets included in the mixed refrigerant equal to the average axial velocity of the gas-phase refrigerant at the outlet portion of the divergent mixing portion 722b. Furthermore, to bring the mixed refrigerant at the outlet portion of the divergent mixing portion 722b into the equilibrium state, at least the divergent mixing distance LMIX2 needs to be longer than the second relaxation distance Lv2.

The present inventors have investigated the relationship between the Mach number $M_{neck}$ of the mixed refrigerant in the neck portion 722c and an extinction distance Lx from the neck portion 722c to a final end position of pseudo shock waves (i.e., a position where a pseudo shock wave has been eliminated) when the pseudo shock waves occur.

According to this, as illustrated in FIG. 5, a tendency has been confirmed that an extinction distance ratio (Lx/Lv2) increases as the Mach number $M_{neck}$ increases. This is because the length of a Shocktrain region where pseudo shock waves exist increases as the Mach number $M_{neck}$ increases.

In addition, as illustrated in FIG. 5, a tendency has been confirmed that the extinction distance ratio (Lx/Lv2) increases as a dryness $X_{neck}$ of the refrigerant at the neck portion 722c increases. This is because, as the dryness $X_{neck}$ increases, the number density of droplets decreases and the relaxation effect of pressure waves on the upstream side by the droplets decreases, so that the length of the Shocktrain region where the pseudo shock waves exist increases.

Considering the actual Mach number $M_{neck}$ in the ejector 17, it has been confirmed that when the divergent mixing distance LMIX2 is set to about six times the relaxation distance Lv, the pseudo shock waves can be eliminated in the divergent mixing portion 722b even when the dryness $X_{neck}$ changes over a wide range.

Here, the vertical axis in FIG. 5 represents the extinction distance ratio (Lx/Lv2) of the extinction distance Lx to the second relaxation distance Lv2. Further, FIG. 5 illustrates a state in which a flow rate ratio between a flow rate Gd of the jetted refrigerant and a flow rate Gs of the suction refrigerant is regulated such that the refrigerant flowing out of the outlet 724 becomes gas-phase refrigerant having superheat.

When the Mach number of the jetted refrigerant immediately after being jetted from the jetting port 715 of the nozzle portion 71 exceeds approximately 1.3 to 1.5, expansion waves generated at the jetting port 715 are reflected at a velocity boundary layer with the suction flow, whereby pseudo shock waves are also generated inside the tapered mixing portion 722a.

In contrast, in the ejector 17 of the present embodiment, the divergent mixing distance LMIX2 is set such that Mathematical Expressions F3 and F4 are satisfied. Therefore, in the divergent mixing portion 722b, the pseudo shock waves generated with the inner wall of the divergent mixing portion 722b as the leading edge can be eliminated, and at the same time, the pseudo shock waves generated inside the tapered mixing portion 722a can also be eliminated. As a result, in the ejector 17, a stable pressure-increasing effect can be obtained.

Next, the area-expanding portion 723 is formed in a truncated cone shape with a passage cross-sectional area increased in the flow direction of the mixed refrigerant. The area-expanding portion 723 forms a refrigerant passage for smoothly connecting the outlet portion of the divergent mixing portion 722b and the outlet 724. The area-expanding portion 723 may be formed in a columnar shape with a constant passage cross-sectional area as long as a shape with a passage cross-sectional area reduced in a flow direction of the mixed refrigerant is not used.

As illustrated in FIG. 1, the outlet 724 of the ejector 17 is connected to the other inflow port side of the third three-way joint 13c via a second check valve 16b. The second check valve 16b allows the refrigerant to flow from the outlet 724 side of the ejector 17 to the third three-way joint 13c side, and prohibits the refrigerant from flowing from the third three-way joint 13c side to the ejector 17 side. The intake port side of the compressor 11 is connected to the outflow port of the third three-way joint 13c.

The usage mode of the ejector 17 of the present embodiment changes according to various operating modes to be described later. Examples of the usage mode of the ejector 17 include a passage mode and a nozzle mode in addition to the suction mode described above.

The passage mode is a usage mode in which the refrigerant flowing into the mixing portion 722 from the suction port 721 is allowed to flow out of the outlet 724 without allowing the refrigerant to flow into the nozzle portion 71 of the ejector 17.

In the passage mode, since the refrigerant is not allowed to flow into the nozzle portion 71, the ejector 17 does not exert a refrigerant suction effect or a refrigerant pressure-increasing effect. Therefore, the ejector 17 in the passage mode functions as a refrigerant passage that guides the refrigerant flowing in from the suction port 721 to the outlet 724 via the mixing portion 722.

The nozzle mode is a usage mode in which the refrigerant is allowed to flow into the nozzle portion 71 of the ejector 17 and the refrigerant flow path communicating with the suction port 721 is closed.

In other words, the nozzle mode is a usage mode in which the refrigerant is allowed to flow into the nozzle portion 71 of the ejector 17 and suction of the refrigerant from the suction port 721 is suppressed or restricted. Alternatively, the nozzle mode is a usage mode in which the refrigerant is allowed to flow into the nozzle portion 71 of the ejector 17 and suction of the refrigerant from the suction port 721 is substantially prohibited.

Next, the air-heating heat medium circuit 30 will be described. The air-heating heat medium circuit 30 is a heat medium circuit that circulates the air-heating heat medium. In the present embodiment, an ethylene glycol aqueous solution is employed as the air-heating heat medium. In the air-heating heat medium circuit 30, an air-heating heat medium pump 31, a heat medium passage of the water-refrigerant heat exchanger 12, an air-heating heat medium three-way valve 32, a heater core 35, a high-temperature-side radiator 36, and the like are disposed.

The air-heating heat medium pump 31 is an air-heating heat medium pumping section that draws the air-heating heat medium flowing out of a high-temperature-side three-way joint 33 and pumps the air-heating heat medium to the heat medium passage of the water-refrigerant heat exchanger 12. The air-heating heat medium pump 31 is an electric water pump with its rotation speed (i.e., pumping capacity) controlled by a control voltage output from the control device 70. The basic configuration of the high-temperature-side three-way joint 33 is similar to that of the first three-way joint 13a for refrigerant.

The inflow port side of the air-heating heat medium three-way valve 32 is connected to the outlet of the heat medium passage of the water-refrigerant heat exchanger 12. The air-heating heat medium three-way valve 32 is an electric three-way flow rate regulating valve having one inflow port and two outflow ports, and capable of continuously regulating the passage area ratio of the two outflow ports.

The heat medium inlet side of the heater core 35 is connected to one outflow port of the air-heating heat medium three-way valve 32. The heat medium inlet side of the high-temperature-side radiator 36 is connected to the other outflow port of the air-heating heat medium three-way valve 32.

The air-heating heat medium three-way valve 32 can direct the entire flow of the air-heating heat medium flowing into the valve to either the heater core 35 side or the high-temperature-side radiator 36 side. Therefore, the air-heating heat medium three-way valve 32 also functions as an air-heating heat medium circuit switching portion that switches the circuit configuration of the air-heating heat medium circuit 30.

The heater core 35 is disposed in an air conditioning case 61 of the interior air conditioning unit 60 to be described later. The heater core 35 is a high-temperature-side air heat exchange section that exchanges heat between the air-heating heat medium flowing out of the water-refrigerant heat exchanger 12 and ventilation air having passed through a cooler core 45 to be described later. In the heater core 35, the heat of the air-heating heat medium is dissipated to the ventilation air to heat the ventilation air. One inflow port side of the high-temperature-side three-way joint 33 is connected to the heat medium outlet of the heater core 35.

The high-temperature-side radiator 36 is a high-temperature-side outside air heat exchange section that exchanges heat between the air-heating heat medium flowing out of the water-refrigerant heat exchanger 12 and outside air blown by an outside air fan (not illustrated). The high-temperature-side radiator 36 is disposed on the front side in the drive device compartment. Therefore, when the vehicle is traveling, traveling air can be applied to the high-temperature-side radiator 36. The other inflow port side of the high-temperature-side three-way joint 33 is connected to the heat medium outlet of the high-temperature-side radiator 36.

In the air-heating heat medium circuit 30, the air-heating heat medium can be heated by heat exchange in the water-refrigerant heat exchanger 12 between the refrigerant discharged from the compressor 11 and the air-heating heat medium. Furthermore, in the heater core 35, the ventilation air can be heated by heat exchange between the air-heating heat medium heated by the water-refrigerant heat exchanger 12 and the ventilation air.

Therefore, each component disposed in the water-refrigerant heat exchanger 12 and the air-heating heat medium circuit 30 of the present embodiment is a heating section that heats ventilation air serving as a heating target using one refrigerant branched at the upstream branch section as a heat source.

Next, the air-cooling heat medium circuit 40 will be described. The air-cooling heat medium circuit 40 is a heat medium circuit that circulates the air-cooling heat medium. In the present embodiment, the same type of fluid as the air-heating heat medium is employed as the air-cooling heat medium. In the air-cooling heat medium circuit 40, an air-cooling heat medium pump 41 and the cooler core 45 are disposed.

The air-cooling heat medium pump 41 is an air-cooling heat medium pumping section that draws the air-cooling heat medium flowing out of the cooler core 45 and pumps the air-cooling heat medium to the heat medium passage of the air-cooling chiller 15a. The basic configuration of the air-cooling heat medium pump 41 is similar to that of the air-heating heat medium pump 31.

The heat medium inlet side of the cooler core 45 is connected to the outlet of the heat medium passage of the air-cooling chiller 15a. The cooler core 45 is disposed in the air conditioning case 61 of the interior air conditioning unit 60 to be described later. The cooler core 45 is an air-cooling air heat exchange section that exchanges heat between the air-cooling heat medium flowing out of the air-cooling chiller 15a and ventilation air blown toward the vehicle interior from an interior blower 62 to be described later.

In the air-cooling heat medium circuit 40, the air-cooling heat medium can be cooled by heat exchange in the air-cooling chiller 15a between the refrigerant reduced in pressure by the air-cooling expansion valve 14a and the air-cooling heat medium. Moreover, in the cooler core 45, the ventilation air can be cooled by heat exchange between the air-cooling heat medium cooled by the air-cooling chiller 15a and the ventilation air.

Therefore, each component disposed in the air-cooling chiller 15a and the air-cooling heat medium circuit 40 of the present embodiment is an air-conditioning cooling section that cools the ventilation air.

Next, the cooling heat medium circuit 50 will be described. The cooling heat medium circuit 50 is a heat medium circuit that circulates the cooling heat medium. In the present embodiment, the same type of fluid as the air-heating heat medium is employed as the cooling heat medium. In the cooling heat medium circuit 50, a cooling heat medium pump 51, a heat medium passage of the cooling chiller 15b, a cooling heat medium three-way valve 52, a cooling water passage 80a of the battery 80, a low-temperature-side radiator 56, and the like are disposed.

The cooling heat medium pump 51 is a cooling heat medium pumping section that draws the cooling heat medium flowing out of a cooling three-way joint 53 and pumps the cooling heat medium to the heat medium passage of the cooling chiller 15b. The basic configuration of the cooling heat medium pump 51 is similar to that of the air-heating heat medium pump 31. The basic configuration of the cooling three-way joint 53 is similar to that of the high-temperature-side three-way joint 33.

The inflow port side of the cooling heat medium three-way valve 52 is connected to the outlet of the heat medium passage of the cooling chiller 15b. The basic configuration of the cooling heat medium three-way valve 52 is similar to that of the air-heating heat medium three-way valve 32. Therefore, the cooling heat medium three-way valve 52 also functions as a cooling heat medium circuit switching portion that switches the circuit configuration of the cooling heat medium circuit 50.

The inlet side of the cooling water passage 80a of the battery 80 is connected to one outflow port of the cooling heat medium three-way valve 52. The heat medium inlet side of the low-temperature-side radiator 56 is connected to the other outflow port of the cooling heat medium three-way valve 52.

The cooling water passage 80a of the battery 80 is a heat medium passage for cooling the battery 80 by circulating the cooling heat medium flowing out of the cooling chiller 15b. In other words, the cooling water passage 80a is a battery-cooling heat exchange section that cools the battery 80 by heat exchange between the cooling heat medium and the battery cell.

The cooling water passage 80a is formed inside a battery-dedicated case that accommodates a plurality of stacked battery cells. The passage configuration of the cooling water passage 80a is a passage configuration in which a plurality of passages are connected in parallel inside the battery-dedicated case. As a result, all the battery cells can be uniformly cooled in the cooling water passage 80a. One inflow port side of the cooling three-way joint 53 is connected to the outlet of the cooling water passage 80a of the battery 80.

The low-temperature-side radiator 56 is a low-temperature-side outside air heat exchange section that exchanges heat between the cooling heat medium flowing out of the cooling chiller 15b and outside air blown by an outside air fan (not illustrated). The low-temperature-side radiator 56 is disposed on the front side in the drive device compartment. Therefore, when the vehicle is traveling, traveling air can be applied to the low-temperature-side radiator 56.

The low-temperature-side radiator 56 may be formed integrally with the high-temperature-side radiator 36. The other inflow port side of the cooling three-way joint 53 is connected to the heat medium outlet of the low-temperature-side radiator 56.

In the cooling heat medium circuit 50, the cooling heat medium can be cooled by heat exchange in the cooling chiller 15b between the refrigerant reduced in pressure by the cooling expansion valve 14b and the cooling heat medium. Moreover, in the cooling water passage 80a of the battery 80, the battery 80 can be cooled by heat exchange between the cooling heat medium cooled by the cooling chiller 15b and the battery 80.

Therefore, each component disposed in the cooling chiller 15b and the cooling heat medium circuit 50 of the present embodiment is a device cooling section that cools the battery 80 which is an in-vehicle device.

Next, the interior air conditioning unit 60 will be described. The interior air conditioning unit 60 is a unit in which a plurality of components are integrated to blow ventilation air regulated to an appropriate temperature for air conditioning of the vehicle interior to an appropriate location of the vehicle interior. The interior air conditioning unit 60 is disposed inside an instrument panel at the foremost portion of the vehicle interior.

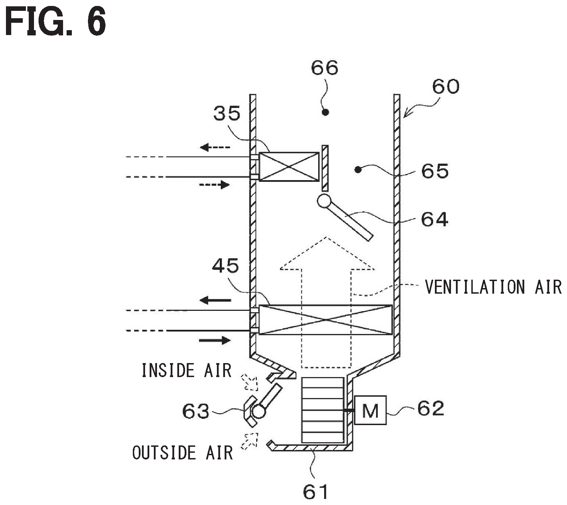

As illustrated in FIG. 6, the interior air conditioning unit 60 includes the air conditioning case 61 that forms an air passage for ventilation air. The interior blower 62, the cooler core 45, the heater core 35, and the like are accommodated in the air passage formed in the air conditioning case 61. The air conditioning case 61 is made of resin (specifically, polypropylene) having a certain degree of elasticity and excellent strength.

An inside/outside air switching device 63 is disposed on the most upstream side in the ventilation air flow of the air conditioning case 61. The inside/outside air switching device 63 performs switching to introduce inside air (i.e., air inside the vehicle interior) and outside air (i.e., air outside the vehicle interior) into the air conditioning case 61. The operation of the inside/outside air switching device 63 is controlled by a control signal output from the control device 70.

The interior blower 62 is disposed on the ventilation-air-flow downstream side of the inside/outside air switching device 63. The interior blower 62 is a blowing section that blows air drawn via the inside/outside air switching device 63 toward the vehicle interior. The rotation speed (i.e., air blowing capacity) of the interior blower 62 is controlled by a control voltage output from the control device 70.

The cooler core 45 and the heater core 35 are disposed on the ventilation-air-flow downstream side of the interior blower 62. The cooler core 45 is disposed on the ventilation-air-flow upstream side of the heater core 35. In the air conditioning case 61, a cold air bypass passage 65 through which the ventilation air after passing through the cooler core 45 flows while bypassing the heater core 35 is formed.

An air mix door 64 is disposed on the ventilation-air-flow downstream side of the cooler core 45 in the air conditioning case 61 and on the ventilation-air-flow upstream side of the heater core 35 and the cold air bypass passage 65.

The air mix door 64 regulates an air volume ratio between an air volume of ventilation air allowed to pass through the air passage in which the heater core 35 is disposed and an air volume of ventilation air allowed to pass through the cold air bypass passage 65, among the ventilation air after passing through the cooler core 45. The operation of an actuator for driving the air mix door 64 is controlled by a control signal output from the control device 70.

A mixing space 66 is disposed on the ventilation-air-flow downstream side of the heater core 35 and the cold air bypass passage 65. The mixing space 66 is a space for mixing the ventilation air heated by the heater core 35 and the ventilation air passing through the cold air bypass passage 65 and not heated.

Therefore, in the interior air conditioning unit 60, the temperature of the ventilation air (i.e., conditioned air) mixed in the mixing space 66 and blown into the vehicle interior can be regulated by regulating the opening of the air mix door 64. The air mix door 64 is a heat exchange air volume regulating section that regulates the air volume of the ventilation air subjected to heat exchange at the heater core 35.

A plurality of opening holes (not illustrated) for blowing conditioned air toward various places of the vehicle interior is formed in the most downstream portion in the ventilation air flow of the air conditioning case 61. In each of the plurality of opening holes, a blowout mode door (not illustrated), which opens and closes the opening hole, is disposed. The operation of an actuator for driving the blowout mode door is controlled by a control signal output from the control device 70.

Therefore, in the interior air conditioning unit 60, the conditioned air regulated to an appropriate temperature can be blown to an appropriate location of the vehicle interior by switching the opening hole where the blowout mode door opens and closes.

Next, the electric control section of the vehicular air conditioner 1 will be described. The control device 70 includes a known microcomputer including a central processing unit (CPU), a read-only memory (ROM), a random-access memory (RAM), and the like and peripheral circuits thereof. The control device 70 performs various calculations and processing based on a control program stored in the ROM. The control device 70 controls, based on the calculation and processing results, the operation of various control target devices connected to the output side.

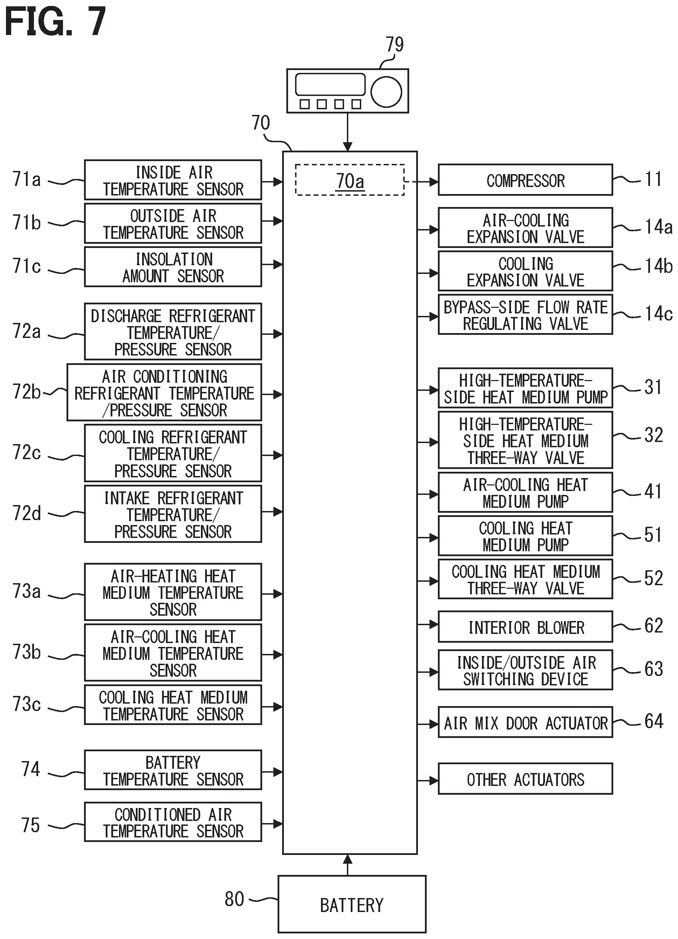

As illustrated in the block diagram of FIG. 7, a sensor group for various types of control is connected to the input side of the control device 70. The sensor group for control includes an inside air temperature sensor 71a, an outside air temperature sensor 71b, an insolation amount sensor 71c, a discharge refrigerant temperature/pressure sensor 72a, an air conditioning refrigerant temperature/pressure sensor 72b, a cooling refrigerant temperature/pressure sensor 72c, an intake refrigerant temperature/pressure sensor 72d, an air-heating heat medium temperature sensor 73a, an air-cooling heat medium temperature sensor 73b, a cooling heat medium temperature sensor 73c, a battery temperature sensor 74, a conditioned air temperature sensor 75, and the like.

The inside air temperature sensor 71a is an inside air temperature detecting section that detects a vehicle interior temperature (inside air temperature) Tr. The outside air temperature sensor 71b is an outside air temperature detecting section that detects a vehicle exterior temperature (outside air temperature) Tam. The insolation amount sensor 71c is an insolation amount detecting section that detects an insolation amount As with which the vehicle interior is irradiated.

The discharge refrigerant temperature/pressure sensor 72a is a discharge refrigerant temperature/pressure detecting section that detects a discharge refrigerant temperature Td and a discharge refrigerant pressure Pd of the discharge refrigerant discharged from the compressor 11.

The air conditioning refrigerant temperature/pressure sensor 72b is an air conditioning refrigerant temperature/pressure detecting section that detects an air-cooling chiller refrigerant temperature Tc1 and an air-cooling chiller refrigerant pressure Pc1 of the refrigerant flowing out of the refrigerant passage of the air-cooling chiller 15a.

The cooling refrigerant temperature/pressure sensor 72c is a cooling refrigerant temperature/pressure detecting section that detects a cooling chiller refrigerant temperature Tc2 and a cooling chiller refrigerant pressure Pc2 of the refrigerant flowing out of the refrigerant passage of the cooling chiller 15b.

The intake refrigerant temperature/pressure sensor 72d is an intake refrigerant temperature/pressure detecting section that detects an intake refrigerant temperature Ts and an intake refrigerant pressure Ps of the intake refrigerant drawn into the compressor 11.

The air-heating heat medium temperature sensor 73a is an air-heating heat medium temperature detecting section that detects a heater-core-side heat medium temperature TWH which is the temperature of the air-heating heat medium flowing into the heater core 35.

The air-cooling heat medium temperature sensor 73b is an air-cooling heat medium temperature detecting section that detects a cooler-core-side heat medium temperature TWC1, which is the temperature of the air-cooling heat medium flowing into the cooler core 45.

The cooling heat medium temperature sensor 73c is a cooling heat medium temperature detecting section that detects a device-side heat medium temperature TWC2, which is the temperature of the cooling heat medium on the outlet side of the cooling water passage 80a of the battery 80.

The battery temperature sensor 74 is a battery temperature detecting section that detects a battery temperature TB, which is the temperature of the battery 80. The battery temperature sensor 74 includes a plurality of temperature sensors, and detects temperatures at a plurality of locations of the battery 80. Therefore, the control device 70 can detect a temperature difference and a temperature distribution of each battery cell forming the battery 80. Furthermore, as the battery temperature TB, an average value of detection values of a plurality of temperature sensors is employed.

The conditioned air temperature sensor 75 is a conditioned air temperature detecting section that detects a ventilation air temperature TAV blown into the vehicle interior from the mixing space 66.

As illustrated in FIG. 7, an operation panel 79 disposed near the instrument panel in the front of the vehicle interior is connected to the input side of the control device 70 in a wired or wireless manner. Operation signals from various operation switches provided on the operation panel 79 are input to the control device 70.

Specific examples of the various operation switches provided on the operation panel 79 include an auto switch, an air conditioner switch, an air volume setting switch, a temperature setting switch, and an inside/outside air setting switch.

The auto switch is an automatic control setting section that sets or cancels the automatic control operation of the vehicular air conditioner 1. The air conditioner switch is a cooling requesting section that requests the air-cooling chiller 15a to cool the air-cooling heat medium. The air volume setting switch is an air volume setting section that manually sets the air blowing volume of the interior blower 62. The temperature setting switch is a temperature setting section that sets a set temperature Tset of the vehicle interior. The inside/outside air setting switch is an inside/outside air setting section that manually sets an operation state of the inside/outside air switching device 63.

The control device 70 of the present embodiment is integrally configured with a control section that controls various control target devices connected to the output side of the control device 70. Therefore, a configuration (hardware and software) that controls the operation of each control target device constitutes a control section that controls the operation of each control target device. For example, in the control device 70, a configuration that controls the refrigerant discharge capacity of the compressor 11 constitutes a discharge capacity control section 70a.

Next, the operation of the vehicular air conditioner 1 of the present embodiment having the above configuration will be described. In the vehicular air conditioner 1 of the present embodiment, various operating modes can be switched to perform air conditioning of the vehicle interior and temperature regulation of an in-vehicle device. The operating mode is switched by executing a control program stored in advance in the control device 70.

The control program is executed not only when the start switch (so-called ignition switch) of the vehicle system is turned on and the vehicle system is starting, but also when the battery 80 is being charged from an external power supply.

The control program reads the detection signal of the control sensor group and the operation signal of the operation panel 79 described above. A target blowout temperature TAO, which is a target temperature of the ventilation air blown into the vehicle interior, is calculated based on the read detection signal and operation signal. Moreover, the operating mode is selected based on the detection signal, the operation signal, the target blowout temperature TAO, and the like, and the operations of the various devices to be controlled are controlled according to the selected operating mode.

Thereafter, the control routine, including reading the detection signal and operation signal, calculating the target blowout temperature TAO, selecting the operating mode, and controlling various control target devices as described above, is repeated at each predetermined control cycle until the end condition of the control program is satisfied.

The target blowout temperature TAO is calculated using Mathematical Expression F11 below.

[Mathematical Expression 11]

$$TAO = Kset \times Tset - Kr \times Tr - Kam \times Tam - Ks \times As + C \quad \cdots \quad (F11)$$

Tset is a set temperature for the vehicle interior set by the temperature setting switch. Tr is an inside air temperature detected by the inside air temperature sensor 71a. Tam is an outside air temperature detected by the outside air temperature sensor 71b. As is an insolation amount detected by the insolation amount sensor 71c. Kset, Kr, Kam, and Ks are control gains, and C is a correction constant.

First, as basic operating modes for performing air conditioning of the vehicle interior, (a) an air-cooling mode, (b) a dehumidifying and air-heating mode, and (c) an air-heating mode will be described.

(a) Air-cooling mode

The air-cooling mode is an operating mode for performing air-cooling of the vehicle interior by blowing the cooled ventilation air into the vehicle interior. The air-cooling mode is likely to be selected in a state where the auto switch and the air conditioner switch are on, when the outside air temperature Tam is relatively high or when the target blowout temperature TAO is set to a relatively low value.

In the refrigeration cycle 10 in the air-cooling mode, the control device 70 brings the air-cooling expansion valve 14a into a throttling state exerting a pressure-reducing effect, brings the cooling expansion valve 14b into the fully closed state, and brings the bypass-side flow rate regulating valve 14c into the fully closed state.

The refrigeration cycle 10 in the air-cooling mode is thus switched to a refrigerant circuit in which the refrigerant discharged from the compressor 11 circulates through the water-refrigerant heat exchanger 12, the receiver 12a, the air-cooling expansion valve 14a, the air-cooling chiller 15a, and the intake port of the compressor 11 in this order. Therefore, in the air-cooling mode, the ejector is not used.

The control device 70 controls the refrigerant discharge capacity of the compressor 11 such that a cooler-core-side heat medium temperature TWC1 detected by the air-cooling heat medium temperature sensor 73b approaches a target cooler-core-side heat medium temperature TWCO1.

The target cooler-core-side heat medium temperature TWCO1 is determined with reference to a control map stored in advance in the control device 70, based on the target blowout temperature TAO. In the control map, the target cooler-core-side heat medium temperature TWCO1 is determined to increase as the target blowout temperature TAO increases.

The control device 70 controls the throttle opening of the air-cooling expansion valve 14a such that a superheat SH of the intake refrigerant drawn into the compressor 11 approaches a predetermined reference superheat KSH (5°C in the present embodiment). The control device 70 detects the superheat SH of the intake refrigerant using the intake refrigerant temperature Ts and the intake refrigerant pressure Ps detected by the intake refrigerant temperature/pressure sensor 72d.

In the air-heating heat medium circuit 30 in the air-cooling mode, the control device 70 operates the air-heating heat medium pump 31 to deliver a predetermined reference pumping capacity.

The control device 70 controls the operation of the air-heating heat medium three-way valve 32 such that the heater-core-side heat medium temperature TWH detected by the air-heating heat medium temperature sensor 73a approaches a predetermined target heater-core-side heat medium temperature TWHO.

In the air-cooling heat medium circuit 40 in the air-cooling mode, the control device 70 operates the air-cooling heat medium pump 41 to deliver a predetermined reference pumping capacity.

In the cooling heat medium circuit 50 in the air-cooling mode, the control device 70 operates the cooling heat medium pump 51 to deliver a predetermined reference pumping capacity.

The control device 70 controls the operation of the cooling heat medium three-way valve 52 such that a device-side heat medium temperature TWC2 detected by the cooling heat medium temperature sensor 73c approaches a predetermined target device-side heat medium temperature TWCO2.

In the interior air conditioning unit 60 in the air-cooling mode, the control device 70 controls the air blowing capacity of the interior blower 62 with reference to a control map stored in advance in the control device 70, based on the target blowout temperature TAO.

In the control map, when the target blowout temperature TAO is in an extremely low temperature range (i.e., during the maximum air-cooling) or an extremely high temperature range (i.e., during the maximum air-heating), the air blowing capacity is determined to approach the maximum air volume. Furthermore, the air blowing capacity is determined to decrease as the target blowout temperature TAO moves from the extremely low temperature range or the extremely high temperature range to the intermediate temperature range. When the target blowout temperature TAO is in the intermediate temperature range, the air blowing capacity is determined to approach the minimum air volume.

The control device 70 controls the operation of an electric actuator for the air mix door 64 such that the ventilation air temperature TAV detected by the conditioned air temperature sensor 75 approaches the target blowout temperature TAO.

The control device 70 also controls the operation of the inside/outside air switching device 63 with reference to a control map stored in advance in the control device 70, based on the operation signal and the target blowout temperature TAO. The control device 70 also controls the operation of an electric actuator for the blowout mode door with reference to a control map stored in advance in the control device 70, based on the target blowout temperature TAO. Moreover, the control device 70 appropriately controls the operation of other control target devices.

Therefore, in the refrigeration cycle 10 in the air-cooling mode, a vapor compression refrigeration cycle is configured in which the water-refrigerant heat exchanger 12 functions as a condenser and the air-cooling chiller 15a functions as an evaporator. In the water-refrigerant heat exchanger 12, the discharge refrigerant dissipates heat to the air-heating heat medium. Thus, the air-heating heat medium is heated. In the air-cooling chiller 15a, the refrigerant reduced in pressure by the air-cooling expansion valve 14a absorbs heat from the air-cooling heat medium and evaporates. Thus, the air-cooling heat medium is cooled.

In the air-heating heat medium circuit 30 in the air-cooling mode, the air-heating heat medium pumped from the air-heating heat medium pump 31 flows into the water-refrigerant heat exchanger 12. The air-heating heat medium heated by the water-refrigerant heat exchanger 12 flows into at least one of the heater core 35 or the high-temperature-side radiator 36 according to the opening of the air-heating heat medium three-way valve 32.

The air-heating heat medium flowing into the heater core 35 dissipates heat to the ventilation air according to the opening of the air mix door 64. Thus, the ventilation air is heated by the heater core 35. The air-heating heat medium flowing into the high-temperature-side radiator 36 dissipates heat to the outside air. Thus, the air-heating heat medium is cooled.

In the air-cooling heat medium circuit 40 in the air-cooling mode, the air-cooling heat medium pumped from the air-cooling heat medium pump 41 flows into the air-cooling chiller 15a. The air-cooling heat medium cooled by the air-cooling chiller 15a flows into the cooler core 45. The air-cooling heat medium flowing into the cooler core 45 exchanges heat with the ventilation air blown from the interior blower 62. Thus, the ventilation air is cooled.

In the cooling heat medium circuit 50 in the air-cooling mode, the cooling heat medium pumped from the cooling heat medium pump 51 flows into the cooling chiller 15b. In the air-cooling mode, since the refrigerant is not allowed to flow into the refrigerant passage of the cooling chiller 15b, the cooling heat medium flowing into the cooling chiller 15b flows out of the cooling chiller 15b without a temperature change.

The cooling heat medium flowing out of the cooling chiller 15b flows into at least one of the cooling water passage 80a of the battery 80 or the low-temperature-side radiator 56 according to the opening of the cooling heat medium three-way valve 52. The cooling heat medium flowing into the cooling water passage 80a of the battery 80 exchanges heat with the battery 80. Thus, the battery 80 is cooled. The cooling heat medium flowing into the low-temperature-side radiator 56 dissipates heat to the outside air. Thus, the cooling heat medium is cooled.

In the interior air conditioning unit 60 in the air-cooling mode, the air introduced via the inside/outside air switching device 63 is drawn into the interior blower 62 and blown. The ventilation air blown from the interior blower 62 exchanges heat with the air-cooling heat medium and is cooled when passing through the cooler core 45. The ventilation air cooled by the cooler core 45 flows into the air passage on the heater core 35 side and the cold air bypass passage 65 according to the opening of the air mix door 64.

The ventilation air flowing into the air passage on the heater core 35 side exchanges heat with the air-heating heat medium when passing through the heater core 35, is heated, and flows into the mixing space 66. The air flowing into the cold air bypass passage 65 flows into the mixing space 66 without being heated. The ventilation air mixed and temperature-regulated in the mixing space 66 is blown out to an appropriate location of the vehicle interior through the opening hole. This achieves air-cooling of the vehicle interior.

(b) Dehumidifying and air-heating mode

The dehumidifying and air-heating mode is an operating mode for performing dehumidification and air-heating of the vehicle interior by reheating the cooled and dehumidified ventilation air and blowing the heated air into the vehicle interior. The dehumidifying and air-heating mode is likely to be selected in a state where the auto switch and the air conditioner switch are on, when the outside air temperature Tam is in the intermediate temperature range or when the target blowout temperature TAO is in the intermediate temperature range.

In the refrigeration cycle 10 in the dehumidifying and air-heating mode, the control device 70 brings the air-cooling expansion valve 14a into the throttling state, brings the cooling expansion valve 14b into the throttling state, and brings the bypass-side flow rate regulating valve 14c into the fully closed state.

The refrigeration cycle 10 in the dehumidifying and air-heating mode is thus switched to a refrigerant circuit in which the refrigerant discharged from the compressor 11 flows through the water-refrigerant heat exchanger 12, the receiver 12a, the air-cooling expansion valve 14a, the air-cooling chiller 15a, and the intake port of the compressor 11 in this order, the refrigerant discharged from the compressor 11 flows through the water-refrigerant heat exchanger 12, the receiver 12a, the cooling expansion valve 14b, the cooling chiller 15b, and the suction port 721 of the ejector 17 in this order, and further, the refrigerant flowing out of the outlet 724 of the ejector 17 is drawn into the compressor 11.

That is, the refrigeration cycle 10 in the dehumidifying and air-heating mode is switched to a refrigerant circuit in which the air-cooling chiller 15a and the cooling chiller 15b are connected in parallel to the flow of the refrigerant flowing out of the receiver 12a. The usage mode of the ejector 17 in the dehumidifying and air-heating mode is a passage mode.

The control device 70 controls the refrigerant discharge capacity of the compressor 11 as in the air-cooling mode. The control device 70 also controls the throttle opening of the air-cooling expansion valve 14a as in the air-cooling mode. The control device 70 also controls the throttle opening of the cooling expansion valve 14b such that the cooling chiller refrigerant temperature Tc2 detected by the cooling refrigerant temperature/pressure sensor 72c is lower than the outside air temperature Tam.

In the air-heating heat medium circuit 30 in the dehumidifying and air-heating mode, the control device 70 controls the operations of various control target devices disposed in the air-heating heat medium circuit 30 as in the air-cooling mode.

In the air-cooling heat medium circuit 40 in the dehumidifying and air-heating mode, the control device 70 operates the air-cooling heat medium pump 41 as in the air-cooling mode.

In the cooling heat medium circuit 50 in the dehumidifying and air-heating mode, the control device 70 controls the operations of various control target devices disposed in the cooling heat medium circuit 50 as in the air-cooling mode.

In the interior air conditioning unit 60 in the dehumidifying and air-heating mode, the control device 70 controls the operations of various control target devices of the interior air conditioning unit 60 as in the air-cooling mode. Moreover, the control device 70 appropriately controls the operation of other control target devices.

Therefore, in the refrigeration cycle 10 in the dehumidifying and air-heating mode, a vapor compression refrigeration cycle is configured in which the water-refrigerant heat exchanger 12 functions as a condenser and the air-cooling chiller 15a and the cooling chiller 15b function as evaporators. In the water-refrigerant heat exchanger 12, the air-heating heat medium is heated as in the air-cooling mode. In the air-cooling chiller 15a, the air-cooling heat medium is cooled as in the air-cooling mode. In the cooling chiller 15b, the refrigerant reduced in pressure by the cooling expansion valve 14b absorbs heat from the cooling heat medium and evaporates. Thus, the cooling heat medium is cooled.

In the air-heating heat medium circuit 30 in the dehumidifying and air-heating mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the air-cooling heat medium circuit 40 in the dehumidifying and air-heating mode, the air-cooling heat medium circulates as in the air-cooling mode. Therefore, the air-cooling heat medium flowing into the cooler core 45 exchanges heat with the ventilation air. Thus, the ventilation air is cooled.

In the cooling heat medium circuit 50 in the dehumidifying and air-heating mode, the cooling heat medium pumped from the cooling heat medium pump 51 flows into the cooling chiller 15b. The cooling heat medium cooled by the cooling chiller 15b flows into at least one of the cooling water passage 80a of the battery 80 or the low-temperature-side radiator 56 according to the opening of the cooling heat medium three-way valve 52.

The cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the dehumidifying and air-heating mode, the ventilation air blown from the interior blower 62 is cooled and dehumidified by the cooler core 45 as in the air-cooling mode. The ventilation air cooled by the cooler core 45 flows into the air passage on the heater core 35 side and the cold air bypass passage 65 according to the opening of the air mix door 64.

As in the air-cooling mode, the ventilation air mixed and temperature-regulated in the mixing space 66 is blown out to an appropriate location of the vehicle interior through the opening hole. This achieves dehumidifying and air-heating of the vehicle interior.

Furthermore, in the dehumidifying and air-heating mode, it is possible to allow the cooling heat medium cooled by the cooling chiller 15b to flow into the cooling water passage 80a of the battery 80. Therefore, the battery 80 can be cooled using the cooling capacity of the refrigeration cycle 10. In the cooling chiller 15b, the waste heat of the battery 80 or the heat of the outside air can be absorbed by the refrigerant and used as a heat source for heating the ventilation air in the heater core 35.

(c) Air-heating mode

The air-heating mode is an operating mode for performing air-heating of the vehicle interior by blowing heated ventilation air into the vehicle interior. The air-heating mode is likely to be selected in a state where the auto switch and the air conditioner switch are on, when the outside air temperature Tam is a relatively low temperature or when the target blowout temperature TAO is a relatively high value.

In the refrigeration cycle 10 in the air-heating mode, the control device 70 brings the air-cooling expansion valve 14a into the fully closed state, brings the cooling expansion valve 14b into the throttling state, and brings the bypass-side flow rate regulating valve 14c into the fully closed state.

The refrigeration cycle 10 in the air-heating mode is thus switched to a refrigerant circuit in which the refrigerant discharged from the compressor 11 flows through the water-refrigerant heat exchanger 12, the receiver 12a, the cooling expansion valve 14b, the cooling chiller 15b, the suction port 721 of the ejector 17 in this order, and further, the refrigerant flowing out of the outlet 724 of the ejector 17 is drawn into the compressor 11. Therefore, the usage mode of the ejector 17 in the air-heating mode is a passage mode.

The control device 70 controls the refrigerant discharge capacity of the compressor 11 such that the discharge refrigerant pressure Pd detected by the discharge refrigerant temperature/pressure sensor 72a approaches a target high pressure PDO. The target high pressure PDO is determined with reference to a control map stored in advance in the control device 70, based on the target blowout temperature TAO. In the control map, the target high pressure PDO is determined to increase as the target blowout temperature TAO increases.

The control device 70 controls the throttle opening of the cooling expansion valve 14b such that the superheat SH of the intake refrigerant approaches the reference superheat KSH.

In the air-heating heat medium circuit 30 in the air-heating mode, the control device 70 controls the operations of various control target devices disposed in the air-heating heat medium circuit 30 as in the air-cooling mode.

In the air-cooling heat medium circuit 40 in the air-heating mode, the refrigerant is not allowed to flow into the refrigerant passage of the air-cooling chiller 15a, so that the control device 70 may stop the air-cooling heat medium pump 41.

In the cooling heat medium circuit 50 in the air-heating mode, the control device 70 controls the operations of various control target devices disposed in the cooling heat medium circuit 50 as in the air-cooling mode.

In the interior air conditioning unit 60 in the air-heating mode, the control device 70 controls the operations of various control target devices of the interior air conditioning unit 60 as in the air-cooling mode. Moreover, the control device 70 appropriately controls the operation of other control target devices.

Therefore, in the refrigeration cycle 10 in the air-heating mode, a vapor compression refrigeration cycle is configured in which the water-refrigerant heat exchanger 12 functions as a condenser and the cooling chiller 15b functions as an evaporator. In the water-refrigerant heat exchanger 12, the air-heating heat medium is heated as in the air-cooling mode. In the cooling chiller 15b, the cooling heat medium is cooled as in the dehumidifying and air-heating mode.

In the air-heating heat medium circuit 30 in the air-heating mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the cooling heat medium circuit 50 in the air-heating mode, the cooling heat medium circulates as in the dehumidifying and air-heating mode. Therefore, the cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the air-heating mode, the ventilation air blown from the interior blower 62 passes through the cooler core 45. In the air-heating mode, since the refrigerant is not allowed to flow into the air-cooling chiller 15a, the ventilation air flowing into the cooler core 45 flows out of the cooler core 45 without a temperature change. The ventilation air having passed through the cooler core 45 flows into the air passage on the heater core 35 side and the cold air bypass passage 65 according to the opening of the air mix door 64.

As in the air-cooling mode, the ventilation air mixed and temperature-regulated in the mixing space 66 is blown out to an appropriate location of the vehicle interior through the opening hole. This achieves air-heating of the vehicle interior.

Moreover, in the air-heating mode, it is possible to allow the cooling heat medium cooled by the cooling chiller 15b to flow into the cooling water passage 80a of the battery 80. Therefore, the battery 80 can be cooled using the cooling capacity of the refrigeration cycle 10. In the cooling chiller 15b, the waste heat of the battery 80 and the heat of the outside air can be absorbed by the refrigerant, and can be used as a heat source for heating the ventilation air in the heater core 35.

In the air-cooling mode (a) described above, the battery 80, which is an in-vehicle device, is not cooled using the cooling capacity of the refrigeration cycle 10. In contrast, the vehicular air conditioner 1 of the present embodiment can execute (d) an air-cooling and cooling mode in which air-cooling of the vehicle interior is performed and, at the same time, cooling of the battery 80 is performed using the cooling capacity of the refrigeration cycle 10. The air-cooling and cooling mode (d) will be described below.

(d) Air-cooling and cooling mode

The air-cooling and cooling mode is executed when, during execution of the air-cooling mode, it is determined that cooling of the in-vehicle device (the battery 80 in the present embodiment) using the cooling capacity of the refrigeration cycle 10 is required.

Here, in the control program of the present embodiment, it is determined at each predetermined cycle as to whether cooling of the in-vehicle device using the cooling capacity of the refrigeration cycle 10 is required.

Specifically, when the battery temperature TB detected by the battery temperature sensor 74 is equal to or higher than a predetermined reference battery temperature KTB, it is determined that cooling of the battery 80 using the cooling capacity of the refrigeration cycle 10 is required. Alternatively, when the device-side heat medium temperature TWC2 becomes equal to or higher than a reference device-side heat medium temperature KTWC2, it is determined that cooling of the battery 80 using the cooling capacity of the refrigeration cycle 10 is required.

In the refrigeration cycle 10 in the air-cooling and cooling mode, the control device 70 brings the air-cooling expansion valve 14a into the throttling state, brings the cooling expansion valve 14b into the throttling state, and brings the bypass-side flow rate regulating valve 14c into the fully closed state.

The refrigeration cycle 10 in the air-cooling and cooling mode is thus switched to a refrigerant circuit in which the refrigerant circulates in the same order as in the dehumidifying and air-heating mode. That is, the refrigeration cycle 10 in the air-cooling and cooling mode is thus switched to a refrigerant circuit in which the air-cooling chiller 15a and the cooling chiller 15b are connected in parallel to the flow of the refrigerant flowing out of the receiver 12a. The usage mode of the ejector 17 in the air-cooling and cooling mode is a passage mode.

The control device 70 controls the throttle opening of the cooling expansion valve 14b to a predetermined throttle opening for the air-cooling and cooling mode. The control device 70 also controls operations of other components of the refrigeration cycle 10 as in the air-cooling mode.

In the air-heating heat medium circuit 30 in the air-cooling and cooling mode, the control device 70 controls the operations of various control target devices disposed in the air-heating heat medium circuit 30 as in the air-cooling mode.

In the air-cooling heat medium circuit 40 in the air-cooling and cooling mode, the control device 70 operates the air-cooling heat medium pump 41 as in the air-cooling mode.

In the cooling heat medium circuit 50 in the air-cooling and cooling mode, the control device 70 controls the operations of various control target devices disposed in the cooling heat medium circuit 50 as in the air-cooling mode.

In the interior air conditioning unit 60 in the air-cooling and cooling mode, the control device 70 controls the operations of various control target devices of the interior air conditioning unit 60 as in the air-cooling mode. Moreover, the control device 70 appropriately controls the operation of other control target devices.

Therefore, in the refrigeration cycle 10 in the air-cooling and cooling mode, a vapor compression refrigeration cycle is configured in which the water-refrigerant heat exchanger 12 functions as a condenser and the air-cooling chiller 15a and the cooling chiller 15b function as evaporators. In the water-refrigerant heat exchanger 12, the air-heating heat medium is heated as in the air-cooling mode. In the air-cooling chiller 15a, the air-cooling heat medium is cooled as in the air-cooling mode. In the cooling chiller 15b, the cooling heat medium is cooled as in the dehumidifying and air-heating mode.

In the air-heating heat medium circuit 30 in the air-cooling and cooling mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the air-cooling heat medium circuit 40 in the air-cooling and cooling mode, the air-cooling heat medium circulates as in the air-cooling mode. Therefore, the air-cooling heat medium flowing into the cooler core 45 exchanges heat with the ventilation air. Thus, the ventilation air is cooled.

In the cooling heat medium circuit 50 in the air-cooling and cooling mode, the cooling heat medium circulates as in the dehumidifying and air-heating mode. Therefore, the cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the air-cooling and cooling mode, the ventilation air blown from the interior blower 62 is cooled by the cooler core 45 as in the air-cooling mode. The ventilation air cooled by the cooler core 45 flows into the air passage on the heater core 35 side and the cold air bypass passage 65 according to the opening of the air mix door 64.

As in the air-cooling mode, the ventilation air mixed and temperature-regulated in the mixing space 66 is blown out to an appropriate location of the vehicle interior through the opening hole. This achieves air-cooling of the vehicle interior. Moreover, in the air-cooling and cooling mode, it is possible to allow the cooling heat medium cooled by the cooling chiller 15b to flow into the cooling water passage 80a of the battery 80. Therefore, the battery 80 can be cooled using the cooling capacity of the refrigeration cycle 10.

The vehicular air conditioner 1 of the present embodiment can execute (e) a single cooling mode in which the battery 80 as the in-vehicle device is cooled using the cooling capacity of the refrigeration cycle 10 without air-conditioning the vehicle interior. The single cooling mode (e) will be described below.

(e) Single cooling mode

The single cooling mode is an operating mode executed when it is determined that cooling of the battery 80 using the cooling capacity of the refrigeration cycle 10 is required while air conditioning of the vehicle interior is not performed, such as during vehicle charging.

In the refrigeration cycle 10 in the single cooling mode, the control device 70 brings the air-cooling expansion valve 14a into the fully closed state, brings the cooling expansion valve 14b into the throttling state, and brings the bypass-side flow rate regulating valve 14c into the fully closed state.

The refrigeration cycle 10 in the single cooling mode is thus switched to a refrigerant circuit in which the refrigerant circulates in the same order as in the air-heating mode. Therefore, the usage mode of the ejector 17 in the single cooling mode is a passage mode.

The control device 70 controls the refrigerant discharge capacity of the compressor 11 to deliver a predetermined refrigerant discharge capacity for the single cooling mode. The control device 70 controls the throttle opening of the cooling expansion valve 14b such that the superheat SH of the intake refrigerant approaches the reference superheat KSH.

In the air-heating heat medium circuit 30 in the single cooling mode, the control device 70 operates the air-heating heat medium pump 31 as in the air-cooling mode. The control device 70 controls the operation of the air-heating heat medium three-way valve 32 such that the entire flow of the air-heating heat medium flowing out of the water-refrigerant heat exchanger 12 is directed into the high-temperature-side radiator 36.

In the air-cooling heat medium circuit 40 in the single cooling mode, the refrigerant is not allowed to flow into the refrigerant passage of the air-cooling chiller 15a, so that the control device 70 may stop the air-cooling heat medium pump 41.

In the cooling heat medium circuit 50 in the single cooling mode, the control device 70 operates the cooling heat medium pump 51 as in the air-cooling mode. The control device 70 controls the operation of the cooling heat medium three-way valve 52 such that the entire flow of the cooling heat medium flowing out of the cooling chiller 15b is directed into the cooling water passage 80a of the battery 80.

In the interior air conditioning unit 60 in the single cooling mode, the control device 70 stops the interior blower 62. Moreover, the control device 70 appropriately controls the operation of other control target devices.

Therefore, in the refrigeration cycle 10 in the single cooling mode, a vapor compression refrigeration cycle is configured in which the water-refrigerant heat exchanger 12 functions as a condenser and the cooling chiller 15b functions as an evaporator. In the water-refrigerant heat exchanger 12, the air-heating heat medium is heated as in the air-cooling mode. In the cooling chiller 15b, the cooling heat medium is cooled as in the dehumidifying and air-heating mode.

**EP 4 768 737 A1**

In the air-heating heat medium circuit 30 in the single cooling mode, the air-heating heat medium pumped from the air-heating heat medium pump 31 flows into the water-refrigerant heat exchanger 12. The air-heating heat medium heated by the water-refrigerant heat exchanger 12 flows into the high-temperature-side radiator 36 via the air-heating heat medium three-way valve 32. The air-heating heat medium flowing into the high-temperature-side radiator 36 dissipates heat to the outside air. Thus, the air-heating heat medium is cooled.

In the cooling heat medium circuit 50 in the single cooling mode, the cooling heat medium pumped from the cooling heat medium pump 51 flows into the cooling chiller 15b. The cooling heat medium cooled by the cooling chiller 15b flows into the cooling water passage 80a of the battery 80 via the cooling heat medium three-way valve 52. The cooling heat medium flowing into the cooling water passage 80a of the battery 80 exchanges heat with the battery 80. Thus, the battery 80 is cooled.

Therefore, in the single cooling mode, the battery 80 can be cooled using the cooling capacity of the refrigeration cycle 10 without air conditioning of the vehicle interior. Alternatively, the interior blower 62 may be operated during the single cooling mode. According to this, it is possible to execute the operation in the blowing mode in which ventilation air having a temperature that is not regulated is blown into the vehicle interior.

The vehicular air conditioner 1 of the present embodiment can also execute (f-1) a hot-gas air-heating mode when the outside air temperature Tam is extremely low.

When the outside air temperature Tam is extremely low, it is difficult to cause the refrigerant to absorb heat of the outside air via the cooling heat medium even when the mode is switched to the air-heating mode. Therefore, in the hot-gas air-heating mode (f-1), ventilation air or the like is heated using heat generated by the compression work of the compressor 11. The hot-gas air-heating mode (f) will be described below.

(f-1) Hot-gas air-heating mode

In the refrigeration cycle 10 in the hot-gas air-heating mode, the control device 70 brings the air-cooling expansion valve 14a into the fully closed state, brings the cooling expansion valve 14b into the throttling state, and brings the bypass-side flow rate regulating valve 14c into the throttling state.

Therefore, the refrigeration cycle 10 in the hot-gas air-heating mode is switched to a refrigerant circuit in which, as indicated by a black arrow in FIG. 1, the refrigerant discharged from the compressor 11 flows through the water-refrigerant heat exchanger 12, the receiver 12a, the cooling expansion valve 14b, the cooling chiller 15b, and the suction port 721 of the ejector 17 in this order, the refrigerant discharged from the compressor 11 flows through the bypass-side flow rate regulating valve 14c disposed in the bypass passage 20 and the nozzle portion 71 of the ejector 17 in this order, and further, the refrigerant flowing out of the outlet 724 of the ejector 17 is drawn into the compressor 11. Therefore, the usage mode of the ejector 17 in the hot-gas air-heating mode is a suction mode.

As in the air-heating mode, the control device 70 controls the refrigerant discharge capacity of the compressor 11 such that the discharge refrigerant pressure Pd approaches the target high pressure PDO. The control device 70 controls the throttle opening of the cooling expansion valve 14b such that the superheat SH of the intake refrigerant approaches the reference superheat KSH.

The control device 70 also controls the throttle opening of the bypass-side flow rate regulating valve 14c such that the jetted refrigerant enters an under-expanded state. Specifically, the control device 70 controls the throttle opening of the bypass-side flow rate regulating valve 14c with reference to a control map stored in advance in the control device 70, based on the intake refrigerant pressure Ps and the discharge refrigerant pressure Pd.

Here, the phrase that the jetted refrigerant is in the under-expanded state refers to a state in which the jetted refrigerant jetted from the jetting port 715 of the nozzle portion 71 becomes subsonic outside the refrigerant passage of the nozzle portion 71 and generates shock waves.

In the air-heating heat medium circuit 30 in the hot-gas air-heating mode, the control device 70 controls the operations of various control target devices disposed in the air-heating heat medium circuit 30 as in the air-cooling mode. As indicated by the broken arrows in FIG. 1, the air-heating heat medium circulates. In the air-heating heat medium circuit 30 in the hot-gas air-heating mode, the opening of the air-heating heat medium three-way valve 32 is often controlled such that the flow rate of the air-heating heat medium flowing into the heater core 35 is larger than the flow rate of the air-heating heat medium flowing into the high-temperature-side radiator 36.

In the air-cooling heat medium circuit 40 in the hot-gas air-heating mode, the refrigerant is not allowed to flow into the refrigerant passage of the air-cooling chiller 15a, so that the control device 70 may stop the air-cooling heat medium pump 41.

In the cooling heat medium circuit 50 in the hot-gas air-heating mode, the control device 70 stops the cooling heat medium pump 51.

In the interior air conditioning unit 60 in the hot-gas air-heating mode, the control device 70 controls the operations of various control target devices of the interior air conditioning unit 60 as in the air-cooling mode. In the hot-gas air-heating mode, the opening of the air mix door 64 is often controlled such that almost the entire volume of ventilation air blown from the interior blower 62 passes through the heater core 35. Moreover, the control device 70 appropriately controls the operation of other control target devices.

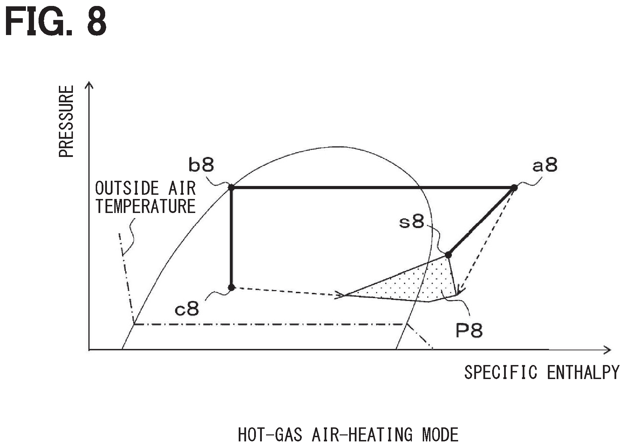

Therefore, in the refrigeration cycle 10 in the hot-gas air-heating mode, the state of the refrigerant changes as illustrated in the Mollier diagram of FIG. 8. That is, the flow of the refrigerant (point a8 in FIG. 8) discharged from the compressor 11 is branched at the first three-way joint 13a. One refrigerant branched at the first three-way joint 13a flows into the water-refrigerant heat exchanger 12.

The refrigerant flowing into the water-refrigerant heat exchanger 12 exchanges heat with the air-heating heat medium to be condensed. Thus, the air-heating heat medium is heated. The refrigerant flowing out of the water-refrigerant heat exchanger 12 flows into the receiver 12a and is separated into gas and liquid (from point a8 to point b8 in FIG. 8). The liquid-phase refrigerant flowing out of the receiver 12a flows into the cooling expansion valve 14b and is reduced in pressure (from point b8 to point c8 in FIG. 8).

The refrigerant in the gas-liquid two-phase state reduced in pressure by the cooling expansion valve 14b flows into the cooling chiller 15b. In the hot-gas air-heating mode, the cooling heat medium pump 51 is stopped. Therefore, the refrigerant in the gas-liquid two-phase state flowing into the cooling chiller 15b is drawn into the suction port 721 of the ejector 17 without exchanging heat with the cooling heat medium (from point c8 in FIG. 8 to region P8).

The other refrigerant branched at the first three-way joint 13a flows into the bypass passage 20 and is reduced in pressure by the bypass-side flow rate regulating valve 14c. Moreover, the gas-phase refrigerant reduced in pressure by the bypass-side flow rate regulating valve 14c flows into the nozzle portion 71 of the ejector 17 and is further reduced in pressure (from point a8 to region P8 in FIG. 8).

Here, region P8 indicated by dot hatching in FIG. 8 indicates the state of the refrigerant in the mixing portion 722 and the area-expanding portion 723 of the ejector 17. As described above, refrigerant in a non-equilibrium state exists in the mixing portion 722 of the ejector 17 in the suction mode, and it is difficult to clearly indicate the dryness or superheat. Therefore, in FIG. 8, the state of the refrigerant inside the ejector 17 is not indicated by a dot, but is indicated by a substantial region.

The thin broken line arrow from point a8 to region P8 in FIG. 8 represents an ideal pressure-reducing process by combining the pressure-reducing process of the refrigerant in the bypass-side flow rate regulating valve 14c and the pressure-reducing process of the refrigerant in the nozzle portion 71. Therefore, the relationship between the actual refrigerant pressure and specific enthalpy may not match the thin broken line arrow from point a8 to region P8 in FIG. 8. The same applies to the following Mollier diagram.

Inside the ejector 17, the jetted refrigerant having a relatively high enthalpy jetted from the nozzle portion 71 and the suction refrigerant having a relatively low enthalpy drawn from the suction port 721 are merged at the tapered mixing portion 722a. As described with reference to FIG. 3, pressure of the mixed refrigerant is increased by the action of shock waves generated in the divergent mixing portion 722b. As a result, the refrigerant flowing out of the outlet 724 of the ejector 17 (point s8 in FIG. 8) becomes gas-phase refrigerant having superheat.

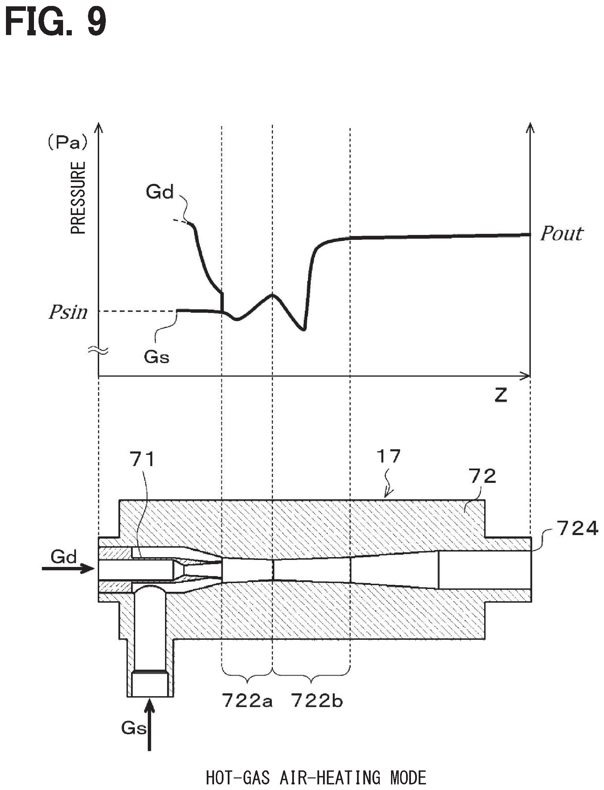

More specifically, the average refrigerant pressure in the ejector 17 in the hot-gas air-heating mode changes as illustrated in FIG. 9 toward the Z direction that is the refrigerant flow direction. In the hot-gas air-heating mode, the jetted refrigerant enters the under-expanded state, so that shock waves are generated in the divergent mixing portion 722b. A pressure increase ratio (Pout/Psin) due to the shock waves becomes about two to six times, and the pressure-increasing capacity of the ejector 17 approaches the maximum pressure increase state.

Pout is pressure of the refrigerant flowing out of the ejector 17, that is, the refrigerant pressure at the outlet 724 of the ejector 17. Psin is pressure of suction refrigerant in the gas-liquid two-phase state at the suction port 721.

Moreover, the refrigerant flowing out of the outlet 724 of the ejector 17 is drawn into the compressor 11 and compressed again (from point s8 to point a8 in FIG. 8).

In the air-heating heat medium circuit 30 in the hot-gas air-heating mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the interior air conditioning unit 60 in the hot-gas air-heating mode, as in the air-heating mode, the ventilation air flows into the air passage on the heater core 35 side and the cold air bypass passage 65 according to the opening of the air mix door 64. The ventilation air mixed and temperature-regulated in the mixing space 66 is blown out to an appropriate location of the vehicle interior through the opening hole. This achieves air-heating of the vehicle interior.

Here, the hot-gas air-heating mode is an operating mode executed when the outside air temperature Tam is extremely low. Therefore, when the hot-gas air-heating mode is selected during start-up of the vehicular air conditioner 1, that is, during start-up of the compressor 11, there is a possibility that the intake refrigerant is in the gas-liquid two-phase state. Therefore, when the throttle opening of the cooling expansion valve 14b is controlled such that the superheat SH of the intake refrigerant approaches the reference superheat KSH, the cooling expansion valve 14b approaches the fully closed state.

Therefore, in the present embodiment, when the hot-gas air-heating mode is selected and the throttle opening of the cooling expansion valve 14b is equal to or less than a predetermined reference start-up opening, the mode shifts to (f-2) a hot-gas start-up mode. Hereinafter, the hot-gas start-up mode (f-2) will be described.

(f-2) Hot-gas start-up mode

In the refrigeration cycle 10 in the hot-gas start-up mode, the control device 70 brings the air-cooling expansion valve 14a into the fully closed state, brings the cooling expansion valve 14b into the throttling state, and brings the bypass-side flow rate regulating valve 14c into the throttling state by the same control as in the hot-gas air-heating mode. Accordingly, the cooling expansion valve 14b enters a substantially fully closed state.

Thus, the refrigeration cycle 10 in the hot-gas start-up mode is switched to a refrigerant circuit in which, substantially, as indicated by an outlined arrow in FIG. 1, the refrigerant discharged from the compressor 11 flows through the bypass-side flow rate regulating valve 14c disposed in the bypass passage 20 and the nozzle portion 71 of the ejector 17 in this order, and the refrigerant flowing out of the outlet 724 of the ejector 17 is drawn into the compressor 11. Therefore, the usage mode of the ejector 17 in the hot-gas start-up mode is a nozzle mode.

The control device 70 controls the refrigerant discharge capacity of the compressor 11 at low speed rotation within a range in which liquid compression can be avoided. This is because, when the outside air temperature Tam is extremely low, the intake refrigerant drawn into the compressor 11 may be in a gas-liquid two-phase state.

The control device 70 controls the throttle opening of the bypass-side flow rate regulating valve 14c such that the jetted refrigerant jetted from the nozzle portion 71 enters an over-expanded state. Specifically, the control device 70 controls the throttle opening of the bypass-side flow rate regulating valve 14c with reference to a control map stored in advance in the control device 70, based on the intake refrigerant pressure Ps and the discharge refrigerant pressure Pd.

Here, the phrase that the jetted refrigerant is in the over-expanded state refers to a state in which the refrigerant flowing through the refrigerant passage of the nozzle portion 71 becomes subsonic and generates shock waves in the refrigerant passage of the nozzle portion 71.

In the air-heating heat medium circuit 30 in the hot-gas start-up mode, the control device 70 controls the operations of various control target devices disposed in the air-heating heat medium circuit 30 as in the hot-gas air-heating mode. As indicated by the broken arrows in FIG. 1, the air-heating heat medium circulates.

In the air-cooling heat medium circuit 40 in the hot-gas start-up mode, the control device 70 may stop the air-cooling heat medium pump 41 as in the hot-gas air-heating mode.

In the cooling heat medium circuit 50 in the hot-gas start-up mode, the control device 70 stops the cooling heat medium pump 51 as in the hot-gas air-heating mode.

In the interior air conditioning unit 60 in the hot-gas start-up mode, the control device 70 controls the operations of the various control target devices of the interior air conditioning unit 60 as in the hot-gas air-heating mode. Moreover, the control device 70 appropriately controls the operation of other control target devices.

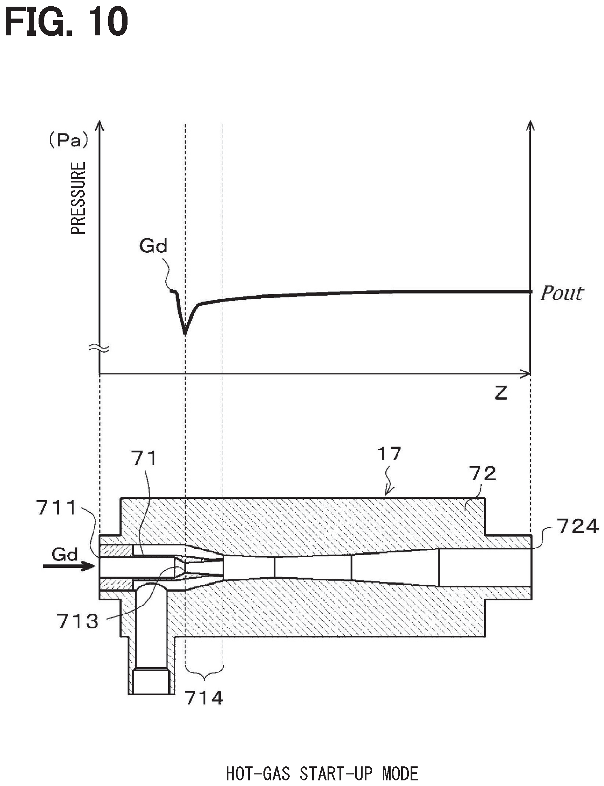

Therefore, in the refrigeration cycle 10 in the hot-gas start-up mode, the refrigerant discharged from the compressor 11 is reduced in pressure by the bypass-side flow rate regulating valve 14c and flows into the nozzle portion 71 of the ejector 17. As illustrated in FIG. 10, the refrigerant flowing into the nozzle portion 71 is reduced in pressure in the refrigerant passage from the nozzle inlet 711 to the throat portion 713, and reaches supersonic speed in the throat portion 713.

The refrigerant having become supersonic in the throat portion 713 becomes subsonic in the divergent portion 714. The pressure and enthalpy of the refrigerant increase due to shock waves generated when the refrigerant becomes subsonic. Moreover, the jetted refrigerant jetted from the jetting port 715 flows into the mixing portion 722 and the area-expanding portion 723. In the divergent mixing portion 722b and the area-expanding portion 723, the velocity energy of the refrigerant is converted into pressure energy by the expansion of the area of the refrigerant passage, and pressure of the refrigerant increases.

Therefore, in the ejector 17 in the hot-gas start-up mode, pressure of the refrigerant flowing out of the outlet 724 is recovered to a degree slightly lower than pressure of the refrigerant flowing into the nozzle inlet 711. The refrigerant flowing out of the outlet 724 of the ejector 17 is drawn into the compressor 11 and compressed again.

In the hot-gas start-up mode, operation is performed as described above, so that the intake refrigerant pressure Ps and the intake refrigerant temperature Ts can be rapidly increased by continuously utilizing the pressure-increasing effect of the ejector 17. In other words, in the hot-gas start-up mode, the refrigerant flowing out of the outlet 724 can be quickly brought close to the gas-phase refrigerant having the superheat.

When the refrigerant flowing out of the outlet 724 becomes gas-phase refrigerant having superheat, the throttle opening of the cooling expansion valve 14b is controlled as in the hot-gas air-heating mode. Accordingly, the hot-gas start-up mode is shifted to the hot-gas air-heating mode.

As described above, in the vehicular air conditioner 1 of the present embodiment, comfortable air conditioning of the vehicle interior and appropriate temperature regulation of the in-vehicle device can be performed by switching the operating mode. Furthermore, in the vehicular air conditioner 1 of the present embodiment, air-heating of the vehicle interior can be achieved by executing the hot-gas air-heating mode even at an extremely low outside air temperature. In the hot-gas air-heating mode, the operating efficiency of the vehicular air conditioner 1 can be sufficiently improved.

In the hot-gas air-heating mode of the present embodiment, the ventilation air is heated using the heat generated by the compression work of the compressor 11 without absorbing the heat of the outside air or the in-vehicle device. Therefore, to improve the air-heating capacity of the ventilation air during the hot-gas air-heating mode, it is effective to increase the compression workload of the compressor 11 by increasing the intake refrigerant pressure Ps to increase the density of the intake refrigerant.

In contrast, in the present embodiment, since the ejector 17 is employed, the intake refrigerant pressure Ps can be rapidly and effectively increased.

More specifically, in the hot-gas air-heating mode in which the usage mode of the ejector 17 is a suction mode, the velocity of the mixed refrigerant can be accelerated to a value equal to or higher than the speed of sound in the refrigerant passage formed in the tapered mixing portion 722a of the ejector 17. In the refrigerant passage formed in the divergent mixing portion 722b, the mixed refrigerant can be made subsonic to generate shock waves, and the generated shock waves can be eliminated.

Therefore, in the divergent mixing portion 722b, the mixed refrigerant can be effectively increased in pressure by the action of shock waves and allowed to flow out of the outlet 724. As a result, the intake refrigerant pressure Ps of the intake refrigerant flowing out of the outlet 724 and drawn into the compressor 11 can be sufficiently increased to exceed pressure of the refrigerant at the suction port 721.

Accordingly, in the refrigeration cycle 10 in the hot-gas air-heating mode, the compression workload can be increased by increasing the density of the intake refrigerant by the pressure-increasing effect of the ejector 17 without increasing the rotation speed of the compressor 11. As a result, according to the vehicular air conditioner 1 of the present embodiment, the operating efficiency can be sufficiently improved during the hot-gas air-heating mode in which the ventilation air serving as the heating target is heated.

The tapered mixing portion 722a of the ejector 17 of the present embodiment reduces the passage cross-sectional area of the refrigerant passage such that pressure of at least a portion of the mixed refrigerant in the tapered mixing portion 722a is lower than pressure of the jetted refrigerant at the jetting port 715 of the nozzle portion 71. According to this, the jetted refrigerant can be accelerated in the tapered mixing portion 722a, and the mixed refrigerant can be accelerated to a value equal to or higher than the speed of sound.

In the tapered mixing portion 722a of the ejector 17 of the present embodiment, the tapered mixing distance LMIX1 is set to satisfy Mathematical Expressions F1 and F2 described above.

According to this, the mixed refrigerant in the vicinity of the neck portion 722c on the downstream side of the tapered mixing portion 722a can be brought close to the equilibrium state. That is, the average axial velocity of the droplets included in the mixed refrigerant in the vicinity of the neck portion 722c can be made equal to the average axial velocity of the gas-phase refrigerant. Therefore, the speed of sound in the mixed refrigerant in the vicinity of the neck portion 722c can be reduced from a gas-phase speed of sound (in other words, a frozen speed of sound) to a two-phase speed of sound.

As a result, in the tapered mixing portion 722a, the mixed refrigerant can be rapidly accelerated to the two-phase speed of sound or higher. This leads to an increase in the Mach number $M_{neck}$ of the mixed refrigerant in the neck portion 722c, thereby making it possible to improve the pressure increase ratio (Pout/Psin). That is, the pressure-increasing capacity of the ejector 17 can be increased.

The divergent mixing portion 722b of the ejector 17 of the present embodiment is formed in a shape with a passage cross-sectional area increased in the flow direction of the mixed refrigerant such that the velocity of the mixed refrigerant at the outlet portion of the divergent mixing portion 722b becomes a subsonic speed. According to this, the pseudo shock waves can be eliminated in the divergent mixing portion 722b to reduce the energy loss due to friction of the mixed refrigerant.

The divergent mixing portion 722b of the ejector 17 of the present embodiment is set such that the divergent mixing distance LMIX2 satisfies Mathematical Expressions F3 and F4 described above. According to this, the mixed fluid at the outlet portion of the divergent mixing portion 722b can be brought close to the equilibrium state. Therefore, the pseudo shock waves can be reliably eliminated in the divergent mixing portion 722b.

Moreover, the ejector 17 of the present embodiment can allow the refrigerant approaching the equilibrium state to flow out of the outlet 724 of the ejector 17.

According to this, the intake refrigerant temperature/pressure sensor 72d can detect the intake refrigerant temperature Ts and the intake refrigerant pressure Ps of the intake refrigerant approaching the equilibrium state. Therefore, the control device 70 can accurately detect the superheat SH of the intake refrigerant, and can accurately bring the superheat SH of the intake refrigerant close to the reference superheat KSH. That is, liquid compression of the compressor 11 can be accurately suppressed.

In the vehicular air conditioner 1 of the present embodiment, the throttle opening of the bypass-side flow rate regulating valve 14c is controlled such that the jetted refrigerant enters the under-expanded state during a hot gas operating mode in which the usage mode of the ejector 17 is a suction mode.

According to this, shock waves are reliably generated in the mixed refrigerant in the divergent mixing portion 722b, and the ejector 17 can be brought close to the maximum pressure increase state by the refrigerant pressure-increasing effect of shock waves. Therefore, the operating efficiency of the vehicular air conditioner 1 can be further improved.

The vehicular air conditioner 1 of the present embodiment can execute the hot-gas start-up mode. According to this, even when the compressor 11 is started at an extremely low temperature or the like, the intake refrigerant can be made into gas-phase refrigerant having superheat in a relatively short time.

In addition, in the vehicular air conditioner 1 of the present embodiment, the throttle opening of the bypass-side flow rate regulating valve 14c is controlled such that the jetted refrigerant enters the over-expanded state during the hot-gas start-up mode in which the usage mode of the ejector 17 is a nozzle mode.

According to this, shock waves can be reliably generated in the refrigerant passage of the nozzle portion 71, and refrigerant in the refrigerant passage of the nozzle portion 71 can be increased in pressure by a refrigerant pressure-increasing effect of shock waves. Therefore, the intake refrigerant pressure Ps and the enthalpy of the intake refrigerant can be rapidly increased to shift to the hot-gas air-heating mode.

(Second Embodiment)

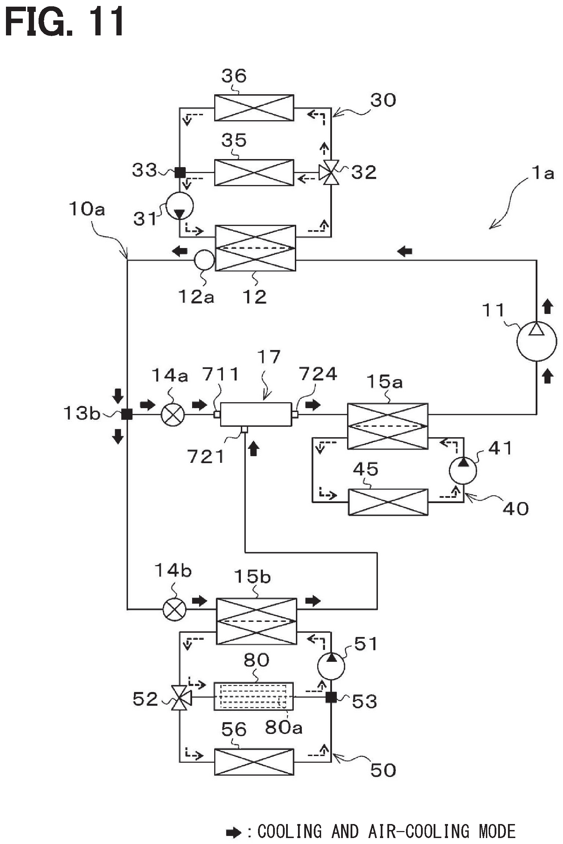

In the present embodiment, the refrigeration cycle device according to the present disclosure is applied to a vehicular air conditioner 1a mounted on an electric vehicle. As illustrated in the overall configuration diagram of FIG. 11, the vehicular air conditioner 1a includes a refrigeration cycle 10a, an air-heating heat medium circuit 30, an air-cooling heat medium circuit 40, a cooling heat medium circuit 50, an interior air conditioning unit 60, a control device 70, and the like.

In the refrigeration cycle 10a, the first three-way joint 13a, the bypass passage 20, and the bypass-side flow rate regulating valve 14c are eliminated from the refrigeration cycle 10 described in the first embodiment.

Therefore, in the refrigeration cycle 10a, the nozzle inlet 711 side of the ejector 17 is connected to the outlet side of the air-cooling expansion valve 14a. The inlet side of the refrigerant passage of the air-cooling chiller 15a is connected to the outlet 724 of the ejector 17. The intake port side of the compressor 11 is connected to the outlet of the refrigerant passage of the air-cooling chiller 15a. The suction port 721 side of the ejector 17 is connected to the outlet of the refrigerant passage of the cooling chiller 15b.

Therefore, the second three-way joint 13b of the refrigeration cycle 10a is a downstream branch section that branches the flow of the refrigerant flowing out of the water-refrigerant heat exchanger 12. The cooling expansion valve 14b is a suction-side pressure-reducing section that reduces pressure of one refrigerant branched at the downstream branch section. Each component disposed in the cooling chiller 15b and the cooling heat medium circuit 50 is a suction-side evaporating section that evaporates the refrigerant reduced in pressure by the suction-side pressure-reducing section to cool the battery 80 that is the cooling target of the present embodiment.

Other configurations of the vehicular air conditioner 1a are the same as those of the vehicular air conditioner 1 described in the first embodiment.

Next, the operation of the vehicular air conditioner 1a of the present embodiment in the above configuration will be described. The vehicular air conditioner 1a can switch the operating mode as in the first embodiment. Specifically, the vehicular air conditioner 1a can execute (a) an air-cooling mode, (c) an air-heating mode, and (d) a cooling and air-cooling mode.

(a) Air-cooling mode

In the refrigeration cycle 10a in the air-cooling mode, the control device 70 brings the air-cooling expansion valve 14a into the throttling state and brings the cooling expansion valve 14b into the fully closed state.

Therefore, the refrigeration cycle 10a in the air-cooling mode is switched to a refrigerant circuit in which the refrigerant discharged from the compressor 11 flows through the water-refrigerant heat exchanger 12, the receiver 12a, the air-cooling expansion valve 14a, the air-cooling chiller 15a, and the nozzle inlet 711 of the ejector 17 in this order, and the refrigerant flowing out of the outlet 724 of the ejector 17 flows through the air-cooling chiller 15a and the intake port of the compressor 11 in this order. Therefore, the usage mode of the ejector 17 in the air-cooling mode is a nozzle mode.

As in the first embodiment, the control device 70 controls the refrigerant discharge capacity of the compressor 11 such that the cooler-core-side heat medium temperature TWC1 approaches the target cooler-core-side heat medium temperature TWCO1. As in the first embodiment, the control device 70 controls the throttle opening of the air-cooling expansion valve 14a such that the superheat SH of the intake refrigerant approaches the reference superheat KSH.

In the air-heating heat medium circuit 30 in the air-cooling mode, the control device 70 controls the operations of various control target devices disposed in the air-heating heat medium circuit 30 as in the air-cooling mode of the first embodiment.

In the air-cooling heat medium circuit 40 in the air-cooling mode, the control device 70 operates the air-cooling heat medium pump 41 as in the air-cooling mode of the first embodiment.

In the cooling heat medium circuit 50 in the air-cooling mode, the control device 70 controls the operations of various control target devices disposed in the cooling heat medium circuit 50 as in the air-cooling mode of the first embodiment.

In the interior air conditioning unit 60 in the air-cooling mode, the control device 70 controls the operations of various control target devices of the interior air conditioning unit 60 as in the air-cooling mode of the first embodiment. Moreover, the control device 70 appropriately controls the operation of other control target devices.

Therefore, in the refrigeration cycle 10a in the air-cooling mode, a vapor compression refrigeration cycle is configured in which the water-refrigerant heat exchanger 12 functions as a condenser and the air-cooling chiller 15a functions as an evaporator. In the water-refrigerant heat exchanger 12, the air-heating heat medium is heated as in the first embodiment. In the air-cooling chiller 15a, the air-cooling heat medium is cooled as in the first embodiment.

In the refrigeration cycle 10a in the air-cooling mode, although the usage mode of the ejector 17 is a nozzle mode, the throttle opening of the air-cooling expansion valve 14a is not controlled such that the jetted refrigerant enters the over-expanded state. Therefore, the refrigerant flowing out of the water-refrigerant heat exchanger 12 is reduced in pressure by both the air-cooling expansion valve 14a and the nozzle portion 71.

In the air-heating heat medium circuit 30 in the air-cooling mode, the air-heating heat medium circulates as in the air-cooling mode of the first embodiment. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the air-cooling heat medium circuit 40 in the air-cooling mode, the air-cooling heat medium circulates as in the air-cooling mode of the first embodiment. Therefore, the air-cooling heat medium flowing into the cooler core 45 exchanges heat with the ventilation air. Thus, the ventilation air is cooled.

In the cooling heat medium circuit 50 in the air-cooling mode, the cooling heat medium circulates as in the air-cooling mode of the first embodiment. Therefore, the cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the air-cooling mode, as in the air-cooling mode of the first embodiment, the ventilation air cooled by the cooler core 45 flows into the air passage on the heater core 35 side and the cold air bypass passage 65 according to the opening of the air mix door 64. The ventilation air temperature-regulated in the mixing space 66 is blown out to an appropriate location of the vehicle interior through the opening hole. This achieves air-cooling of the vehicle interior.

(c) Air-heating mode

In the refrigeration cycle 10a in the air-heating mode, the control device 70 brings the air-cooling expansion valve 14a into the fully closed state and brings the cooling expansion valve 14b into the throttling state.

Therefore, the refrigeration cycle 10a in the air-heating mode is switched to a refrigerant circuit in which the refrigerant discharged from the compressor 11 flows through the water-refrigerant heat exchanger 12, the receiver 12a, the cooling expansion valve 14b, the cooling chiller 15b, and the suction port 721 of the ejector 17 in this order, and the refrigerant flowing out of the outlet 724 of the ejector 17 flows through the air-cooling chiller 15a and the intake port of the compressor 11 in this order. The usage mode of the ejector 17 in the air-heating mode is a passage mode.

As in the first embodiment, the control device 70 controls the refrigerant discharge capacity of the compressor 11 such that the discharge refrigerant pressure Pd approaches the target high pressure PDO. As in the first embodiment, the control device 70 controls the throttle opening of the cooling expansion valve 14b such that the superheat SH of the intake refrigerant approaches the reference superheat KSH.

In the air-heating heat medium circuit 30 in the air-heating mode, the control device 70 controls the operations of various control target devices disposed in the air-heating heat medium circuit 30 as in the air-cooling mode.

In the air-cooling heat medium circuit 40 in the air-heating mode, the control device 70 stops the air-cooling heat medium pump 41.

In the cooling heat medium circuit 50 in the air-heating mode, the control device 70 controls the operations of various control target devices disposed in the cooling heat medium circuit 50 as in the air-cooling mode.

In the interior air conditioning unit 60 in the air-heating mode, the control device 70 controls the operations of various control target devices of the interior air conditioning unit 60 as in the air-cooling mode. Moreover, the control device 70 appropriately controls the operation of other control target devices.

Therefore, in the refrigeration cycle 10a in the air-heating mode, a vapor compression refrigeration cycle is configured in which the water-refrigerant heat exchanger 12 functions as a condenser and the cooling chiller 15b functions as an evaporator. In the water-refrigerant heat exchanger 12, the air-heating heat medium is heated as in the air-cooling mode. In the cooling chiller 15b, the cooling heat medium is cooled as in the first embodiment.

In the air-cooling heat medium circuit 40 in the air-heating mode, since the air-cooling heat medium pump 41 is stopped, the refrigerant flowing into the air-cooling chiller 15a is drawn into the compressor 11 and compressed again without exchanging heat with the air-cooling heat medium.

In the air-heating heat medium circuit 30 in the air-heating mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the cooling heat medium circuit 50 in the air-heating mode, the cooling heat medium circulates as in the air-cooling mode. Therefore, the cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the air-heating mode, as in the air-cooling mode, the ventilation air having passed through the cooler core 45 flows into the air passage on the heater core 35 side and the cold air bypass passage 65 according to the opening of the air mix door 64. The ventilation air temperature-regulated in the mixing space 66 is blown out to an appropriate location of the vehicle interior through the opening hole. This achieves air-heating of the vehicle interior.

Moreover, in the air-heating mode, it is possible to allow the cooling heat medium cooled by the cooling chiller 15b to flow into the cooling water passage 80a of the battery 80. Therefore, the battery 80 can be cooled using the cooling capacity of the refrigeration cycle 10. In the cooling chiller 15b, the waste heat of the battery 80 and the heat of the outside air can be absorbed by the refrigerant, and can be used as a heat source for heating the ventilation air in the heater core 35.

(d) Cooling and air-cooling mode

In the refrigeration cycle 10a in the cooling and air-cooling mode, the control device 70 brings the air-cooling expansion valve 14a into the throttling state and brings the cooling expansion valve 14b into the throttling state.

Thus, the refrigeration cycle 10a in the cooling and air-cooling mode is switched to a refrigerant circuit in which, as indicated by black arrows in FIG. 11, the refrigerant discharged from the compressor 11 flows through the water-refrigerant heat exchanger 12, the receiver 12a, the air-cooling expansion valve 14a, and the nozzle inlet 711 of the ejector 17 in this order, the refrigerant discharged from the compressor 11 flows through the water-refrigerant heat exchanger 12, the receiver 12a, the cooling expansion valve 14b, the cooling chiller 15b, and the suction port 721 of the ejector 17 in this order, and the refrigerant flowing out of the outlet 724 of the ejector 17 circulates through the air-cooling chiller 15a and the intake port of the compressor 11 in this order. Therefore, the usage mode of the ejector 17 in the cooling and air-cooling mode is a suction mode.

In the refrigeration cycle 10a in the cooling and air-cooling mode, the refrigerant discharge capacity of the compressor 11 and the throttle opening of the air-cooling expansion valve 14a are controlled as in the air-cooling mode.

The control device 70 controls the throttle opening of the cooling expansion valve 14b to approach the target cooling throttle opening. The target cooling throttle opening is determined with reference to a control map stored in advance in the control device 70, based on the throttle opening of the air-cooling expansion valve 14a. In the control map, the target cooling throttle opening is determined such that the flow rate ratio between the flow rate Gd of the jetted refrigerant and the flow rate Gs of the suction refrigerant becomes an appropriate value within a range in which the outlet-side refrigerant of the cooling chiller 15b enters the gas-liquid two-phase state.

In the air-heating heat medium circuit 30 in the air-cooling and cooling mode, the control device 70 controls the operations of various control target devices disposed in the air-heating heat medium circuit 30 as in the air-cooling mode.

In the air-cooling heat medium circuit 40 in the air-cooling and cooling mode, the control device 70 operates the air-cooling heat medium pump 41 as in the air-cooling mode.

In the cooling heat medium circuit 50 in the air-cooling and cooling mode, the control device 70 controls the operations of various control target devices disposed in the cooling heat medium circuit 50 as in the air-cooling mode.

In the interior air conditioning unit 60 in the air-cooling and cooling mode, the control device 70 controls the operations of various control target devices of the interior air conditioning unit 60 as in the air-cooling mode. Moreover, the control device 70 appropriately controls the operation of other control target devices.

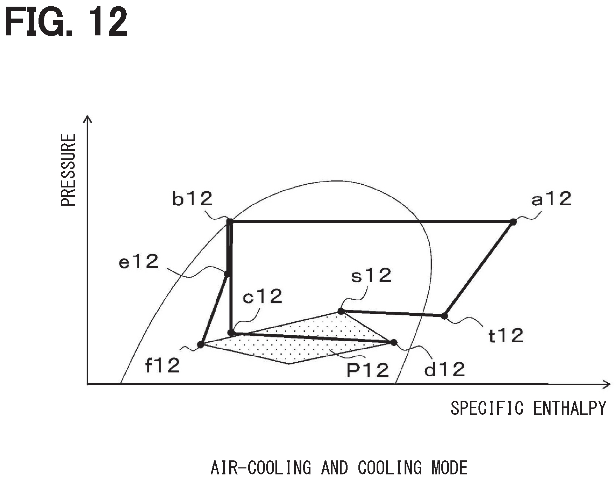

Therefore, in the refrigeration cycle 10a in the air-cooling and cooling mode, the state of the refrigerant changes as illustrated in the Mollier diagram of FIG. 12. In FIG. 12, the states of the refrigerant at points in the cycle configuration equivalent to those in FIG. 8 described in the first embodiment are denoted by the same signs (alphabet letters), and only subscripts (numerals) are changed in accordance with the figure number.

In the air-cooling and cooling mode, the refrigerant discharged from the compressor 11 (point a12 in FIG. 12) flows into the water-refrigerant heat exchanger 12. The refrigerant flowing into the water-refrigerant heat exchanger 12 exchanges heat with the air-heating heat medium to be condensed. Thus, the air-heating heat medium is heated. The refrigerant flowing out of the water-refrigerant heat exchanger 12 flows into the receiver 12a and is separated into gas and liquid (from point a12 to point b12 in FIG. 12).

The flow of the liquid-phase refrigerant flowing out of the receiver 12a is branched at the second three-way joint 13b. One refrigerant branched at the second three-way joint 13b flows into the cooling expansion valve 14b and is reduced in pressure (from point b12 to point c12 in FIG. 12). The refrigerant in the gas-liquid two-phase state reduced in pressure by the cooling expansion valve 14b flows into the cooling chiller 15b.

In the cooling chiller 15b, the low-pressure refrigerant reduced in pressure by the cooling expansion valve 14b absorbs heat from the cooling heat medium and evaporates (from point c12 to point d12 in FIG. 12). Thus, the cooling heat medium is cooled. The refrigerant flowing out of the cooling chiller 15b (point d12 in FIG. 12) is drawn into the suction port 721 of the ejector 17 (from point d12 in FIG. 12 to region P12).

The other refrigerant branched at the second three-way joint 13b flows into the air-cooling expansion valve 14a and is reduced in pressure (from point b12 to point e12 in FIG. 12). The refrigerant in the gas-liquid two-phase state reduced in pressure by the air-cooling expansion valve 14a flows into the nozzle portion 71 of the ejector 17, is isentropically reduced in pressure, and is jetted (from point e12 to region P12 via point f12 in FIG. 12).

Inside the ejector 17, the jetted refrigerant having a relatively low enthalpy jetted from the nozzle portion 71 and the suction refrigerant having a relatively high enthalpy drawn from the suction port 721 are merged at the mixing portion 722.

As described with reference to FIG. 3 of the first embodiment, pressure of the mixed refrigerant is increased by the action of shock waves generated in the divergent mixing portion 722b. As a result, pressure of the refrigerant flowing out of the outlet 724 (point r12 in FIG. 12) increases to exceed pressure of the suction refrigerant at the suction port 721 (point d12 in FIG. 12).

The refrigerant flowing out of the outlet 724 of the ejector 17 flows into the air-cooling chiller 15a. In the air-cooling chiller 15a, the refrigerant flowing out of the ejector 17 absorbs heat from the air-cooling heat medium and evaporates (from point r12 to point s12 in FIG. 12). Thus, the air-cooling heat medium is cooled. The refrigerant flowing out of the air-cooling chiller 15a is drawn into the compressor 11 and compressed again (from point s12 to point a12 in FIG. 12).

In the air-heating heat medium circuit 30 in the air-cooling and cooling mode, the air-heating heat medium circulates as in the air-cooling mode. Therefore, the air-heating heat medium flowing into the heater core 35 dissipates heat to the ventilation air according to the opening of the air mix door 64. Thus, the ventilation air is heated. The air-heating heat medium flowing into the high-temperature-side radiator 36 dissipates heat to the outside air. Thus, the air-heating heat medium is cooled.

In the air-cooling heat medium circuit 40 in the air-cooling and cooling mode, the air-cooling heat medium circulates as in the air-cooling mode. Therefore, the air-cooling heat medium flowing into the cooler core 45 exchanges heat with the ventilation air. Thus, the ventilation air is cooled.

In the cooling heat medium circuit 50 in the air-cooling and cooling mode, the cooling heat medium circulates as in the air-heating mode. Therefore, the cooling heat medium flowing into the cooling water passage 80a of the battery 80 exchanges heat with the battery 80. Thus, the battery 80 is cooled. The cooling heat medium flowing into the low-temperature-side radiator 56 absorbs heat from the outside air.

In the interior air conditioning unit 60 in the air-cooling and cooling mode, the ventilation air blown from the interior blower 62 is cooled by the cooler core 45 as in the air-cooling mode. The ventilation air cooled by the cooler core 45 flows into the air passage on the heater core 35 side and the cold air bypass passage 65 according to the opening of the air mix door 64.

As in the air-cooling mode, the ventilation air mixed and temperature-regulated in the mixing space 66 is blown out to an appropriate location of the vehicle interior through the opening hole. This achieves air-cooling of the vehicle interior. Moreover, in the air-cooling and cooling mode, it is possible to allow the cooling heat medium cooled by the cooling chiller 15b to flow into the cooling water passage 80a of the battery 80. Therefore, the battery 80 can be cooled using the cooling capacity of the refrigeration cycle 10.

As described above, in the vehicular air conditioner 1a of the present embodiment, comfortable air conditioning of the vehicle interior and appropriate temperature regulation of the in-vehicle device can be performed by switching the operating mode. Moreover, the vehicular air conditioner 1a of the present embodiment can sufficiently improve the operating efficiency of the vehicular air conditioner 1 during the cooling and air-cooling mode.

More specifically, in the present embodiment, pressure of the refrigerant flowing out of the outlet 724 of the ejector 17 can be sufficiently increased to exceed pressure of the refrigerant at the suction port 721 during the cooling and air-cooling mode in which the usage mode of the ejector 17 is a suction mode. That is, the intake refrigerant pressure Ps can be sufficiently increased to exceed pressure of the refrigerant at the suction port 721.

Accordingly, in the refrigeration cycle 10a in the cooling and air-cooling mode, the refrigerant evaporating pressure in the cooling chiller 15b can be reduced without increasing the rotation speed of the compressor 11. That is, according to the vehicular air conditioner 1a of the present embodiment, the operating efficiency can be sufficiently improved during the cooling and air-cooling mode for heating the battery 80 serving as the cooling target.

(Third Embodiment)

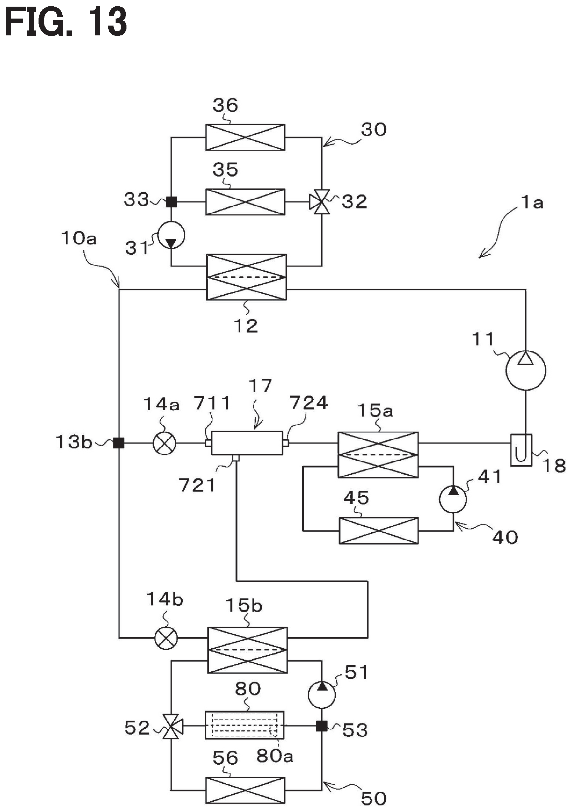

In the present embodiment, a modification of the second embodiment will be described. In the present embodiment, carbon dioxide (i.e., R744), which is a natural refrigerant, is employed as the refrigerant of the refrigeration cycle 10a illustrated in the overall configuration diagram of FIG. 13. Therefore, the refrigeration cycle 10a of the present embodiment constitutes a supercritical refrigeration cycle in which the pressure of the high-pressure-side refrigerant is equal to or higher than the critical pressure of the refrigerant.

In the refrigeration cycle 10a of the present embodiment, refrigerant in a supercritical state may flow into the nozzle portion 71 of the ejector 17. When the specific enthalpy of the refrigerant in the supercritical state flowing into the nozzle portion 71 is lower than the specific enthalpy at the critical point, the refrigerant in the supercritical state flowing into the nozzle portion 71 enters a liquid-phase state in the pressure-reducing process, and then enters a gas-liquid two-phase state.

The velocity of the droplets included in the refrigerant changed from the liquid-phase state to the gas-liquid two-phase state in the pressure-reducing process is faster than the equilibrium speed of sound of the gas-liquid two-phase refrigerant. Thus, the heat dissipation time from the droplets generated by low-pressure foaming to the surrounding gas-phase refrigerant is insufficient, and the temperature of droplets becomes higher than the saturation temperature of the refrigerant. That is, part of the pressure energy of the refrigerant flowing into the nozzle portion 71 cannot be converted into kinetic energy, and is stored as thermal energy in the droplets.

In the following description, a state in which the temperature of the droplets included in the gas-liquid two-phase refrigerant is higher than the saturation temperature of the refrigerant having the same pressure is referred to as a thermodynamic non-equilibrium state. A state in which the temperature of the droplets included in the gas-liquid two-phase refrigerant is equivalent to the saturation temperature of the refrigerant having the same pressure is referred to as a thermodynamic equilibrium state.

That is, in the refrigeration cycle 10a constituting the supercritical refrigeration cycle, the refrigerant may enter a thermodynamic non-equilibrium state at the most downstream portion of the tapered portion 712 or the throat portion 713, where the velocity difference between the droplets and the gas-phase refrigerant is likely to increase, in the refrigerant passage of the nozzle portion 71. When the refrigerant is in the thermodynamic non-equilibrium state, the velocity of the refrigerant in the ejector 17 cannot be sufficiently accelerated, and the ejector 17 cannot exert a sufficient fluid pressure-increasing effect.

Therefore, in the ejector 17 of the present embodiment, the passage cross-sectional area of the refrigerant passage of the nozzle portion 71 is changed such that the divergent portion 714 can resolve the thermodynamic non-equilibrium state generated in the refrigerant of the tapered portion 712 or the throat portion 713 of the nozzle portion 71.

Specifically, the cross-sectional area ratio of the passage cross-sectional area of the inlet portion of the tapered portion 712 to the passage cross-sectional area of the throat portion 713 is set to ten times or less. Thus, the slip ratio of the gas-liquid two-phase refrigerant in the tapered portion 712 or the throat portion 713 is set to an appropriate value, thereby enabling the thermodynamic non-equilibrium state to be resolved in the divergent portion 714.

Moreover, in the ejector 17 of the present embodiment, the passage cross-sectional area of the mixing portion 722 is changed such that the thermodynamic non-equilibrium state of the mixed refrigerant in the mixing portion 722 can be resolved even when the jetted refrigerant jetted from the nozzle portion 71 enters the thermodynamic non-equilibrium state.

Specifically, the degree of reduction in the passage cross-sectional area of the tapered mixing portion 722a is set such that the velocity of the suction refrigerant can be sufficiently accelerated. Thus, the heat of the droplets included in the jetted refrigerant is effectively dissipated to the suction refrigerant, thereby enabling the thermodynamic non-equilibrium state to be resolved in the mixing portion 722.

In the tapered mixing portion 722a of the present embodiment, pressure of at least a portion of the mixed refrigerant in the tapered mixing portion 722a becomes lower than pressure of the jetted refrigerant at the jetting port 715 of the nozzle portion 71, so that the velocity of the suction refrigerant is sufficiently accelerated. In the tapered mixing portion 722a of the present embodiment, the degree of reduction in passage cross-sectional area is determined within a range in which the tapered mixing distance LMIX1 satisfies Mathematical Expressions F1 and F2 described in the first embodiment.

The refrigeration cycle 10a of the present embodiment differs from the refrigeration cycle of the second embodiment in that the receiver 12a is eliminated and an accumulator 18 is added. The accumulator 18 is a low-pressure-side gas-liquid separating section that separates the low-pressure refrigerant flowing out of the air-cooling chiller 15a into gas and liquid. The accumulator 18 is a low-pressure-side liquid storage section that allows the separated gas-phase refrigerant to flow out to the intake port side of the compressor 11 and stores the separated liquid-phase refrigerant as surplus refrigerant in the cycle.

Other configurations and basic operations of the vehicular air conditioner 1a are similar to those of the second embodiment. Therefore, the vehicular air conditioner 1a of the present embodiment can execute (a) an air-cooling mode, (c) an air-heating mode, and (d) a cooling and air-cooling mode.

(a) Air-cooling mode

In the air-cooling mode of the present embodiment, the control device 70 controls the throttle opening of the air-cooling expansion valve 14a such that pressure P1 and a temperature T1 of the refrigerant flowing out of the water-refrigerant heat exchanger 12 approach target pressure PO1 and a target temperature TO1. The target pressure PO1 and the target temperature TO1 are determined such that the coefficient of performance (COP) of the cycle approaches the maximum value. Other control target devices are controlled as in the air-cooling mode of the second embodiment. Therefore, in the air-cooling mode of the present embodiment, air-cooling of the vehicle interior is achieved as in the second embodiment.

(c) Air-heating mode

In the air-heating mode of the present embodiment, the control device 70 controls the throttle opening of the cooling expansion valve 14b such that the pressure P1 and the temperature T1 of the refrigerant flowing out of the water-refrigerant heat exchanger 12 approach the target pressure PO1 and the target temperature TO1. Other control target devices are controlled as in the air-heating mode of the second embodiment. Therefore, in the air-heating mode of the present embodiment, air-heating of the vehicle interior is achieved as in the second embodiment.

(d) Cooling and air-cooling mode

In the cooling and air-cooling mode of the present embodiment, the control device 70 controls the throttle opening of the air-cooling expansion valve 14a as in the air-cooling mode. The control device 70 controls the throttle opening of the cooling expansion valve 14b to approach the target cooling throttle opening. Other control target devices are controlled as in the air-cooling mode of the second embodiment.

In the refrigeration cycle 10a in the cooling and air-cooling mode of the present embodiment, a change in the state of the refrigerant during normal operation in which the flow rate of the refrigerant circulating through the cycle is relatively small differs from a change in the state of the refrigerant during high-load operation in which the flow rate of the refrigerant circulating through the cycle is relatively large.

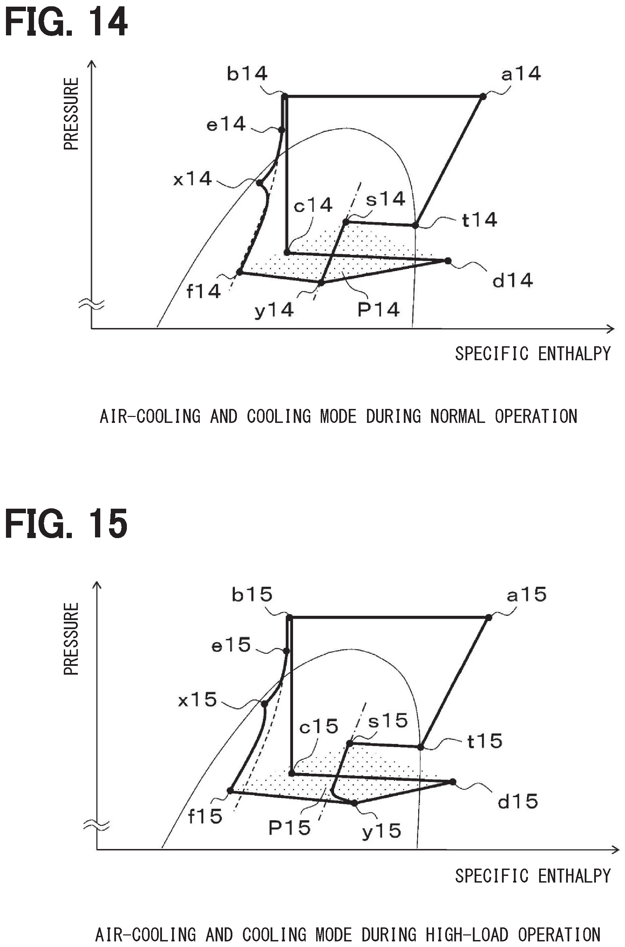

First, during the normal operation, as illustrated in the Mollier diagram of FIG. 14, refrigerant in a supercritical state (point a14 in FIG. 14) discharged from the compressor 11 flows into the water-refrigerant heat exchanger 12. The refrigerant flowing into the water-refrigerant heat exchanger 12 exchanges heat with the air-heating heat medium to decrease enthalpy (from point a14 to point b14 in FIG. 14). Thus, the air-heating heat medium is heated. The flow of the refrigerant flowing out of the water-refrigerant heat exchanger 12 is branched at the second three-way joint 13b.

One refrigerant branched at the second three-way joint 13b flows into the cooling expansion valve 14b and is reduced in pressure (from point b14 to point c14 in FIG. 14). The refrigerant in the gas-liquid two-phase state reduced in pressure by the cooling expansion valve 14b flows into the cooling chiller 15b. The refrigerant flowing into the cooling chiller 15b absorbs heat from the cooling heat medium and evaporates (from point c14 to point d14 in FIG. 14). Thus, the cooling heat medium is cooled. The refrigerant flowing out of the cooling chiller 15b is drawn into the suction port 721 of the ejector 17.

The other refrigerant branched at the second three-way joint 13b flows into the air-cooling expansion valve 14a and is reduced in pressure (from point b14 to point e14 in FIG. 14). The refrigerant reduced in pressure by the air-cooling expansion valve 14a flows into the nozzle portion 71 of the ejector 17. The refrigerant flowing into the nozzle portion 71 enters a thermodynamic non-equilibrium state at the tapered portion 712 or the throat portion 713 of the nozzle portion 71.

Here, the thin broken line in FIG. 14 is an isentropic line on the inlet side indicating an entropy equivalent to the refrigerant flowing into the nozzle portion 71 (point e14 in FIG. 14). As illustrated in FIG. 14, the refrigerant in the thermodynamic non-equilibrium state (point x14 in FIG. 14) is separated from the isentropic line on the inlet side because the droplets store thermal energy.

In the ejector 17 of the present embodiment, the passage cross-sectional area of the refrigerant passage of the nozzle portion 71 is changed such that the thermodynamic non-equilibrium state of the refrigerant can be resolved in the divergent portion 714 during the normal operation. Therefore, the jetted refrigerant jetted from the jetting port 715 approaches the isentropic line on the inlet side (from point x14 to point f14 in FIG. 14).

Thus, mixed refrigerant of the jetted refrigerant jetted from the nozzle portion 71 and the suction refrigerant drawn from the suction port 721 also enters a thermodynamic equilibrium state. Therefore, the states of many mixed refrigerants approach point y14 in region P14 of FIG. 14. Here, the dashed-dotted line in FIG. 14 is a pressure-increasing-side isentropic line indicating an entropy equivalent to the refrigerant immediately after flowing out of the outlet 724 of the ejector 17. Point y14 is positioned on the pressure-increasing-side isentropic line.

Pressure of the mixed refrigerant is isentropically increased by the action of shock waves generated in the divergent mixing portion 722b (from point y14 to point s14 in FIG. 14). Other operations are the same as those of the second embodiment.

Next, the high-load operation will be described. In the high-load operation, since the flow rate of the circulating refrigerant circulating through the cycle increases, the velocity of the refrigerant flowing through the refrigerant passage of the nozzle portion 71 increases more than in the normal operation. Therefore, in the divergent portion 714, the thermodynamic non-equilibrium state of the refrigerant generated in the tapered portion 712 or the throat portion 713 of the nozzle portion 71 cannot be resolved. As a result, the refrigerant in the thermodynamic non-equilibrium state is jetted from the jetting port 715.

Therefore, during the high-load operation, as illustrated in the Mollier diagram of FIG. 15, the refrigerant in the thermodynamic non-equilibrium state (point x15 in FIG. 15) is jetted in the tapered portion 712 or the throat portion 713 of the nozzle portion 71 in a state separated from the isentropic line on the inlet side (from point x15 to point f15 in FIG. 15).

For the mixed refrigerant of the jetted refrigerant and the suction refrigerant in the thermodynamic non-equilibrium state, the thermodynamic non-equilibrium state is not resolved. Thus, the states of many mixed refrigerants approach point y15 in region P15 of FIG. 15. The mixed refrigerant at point y15 is positioned to have a higher enthalpy than the pressure-increasing-side isentropic line.

In the ejector 17 of the present embodiment, the passage cross-sectional area of the mixing portion 722 is changed such that the thermodynamic non-equilibrium state of the mixed refrigerant can be resolved in the mixing portion 722 during the high-load operation. Therefore, the mixed refrigerant of the suction refrigerant and the jetted refrigerant accelerated by the tapered mixing portion 722a approaches the pressure-increasing-side isentropic line. Pressure of the mixed refrigerant is isentropically increased by the action of shock waves generated in the divergent mixing portion 722b (from point y15 to point s15 in FIG. 15). Other operations are the same as those in the normal operation.

As described above, the vehicular air conditioner 1a provided with the refrigeration cycle 10a constituting the supercritical refrigeration cycle can also perform comfortable air conditioning of the vehicle interior and appropriate temperature regulation of the in-vehicle device. Furthermore, in the vehicular air conditioner 1a of the present embodiment, during the cooling and air-cooling mode, it is possible to resolve the thermodynamic non-equilibrium state of the refrigerant in the refrigeration cycle 10a regardless of load fluctuation, thereby sufficiently improving the operating efficiency of the vehicular air conditioner 1a.

(Fourth Embodiment)

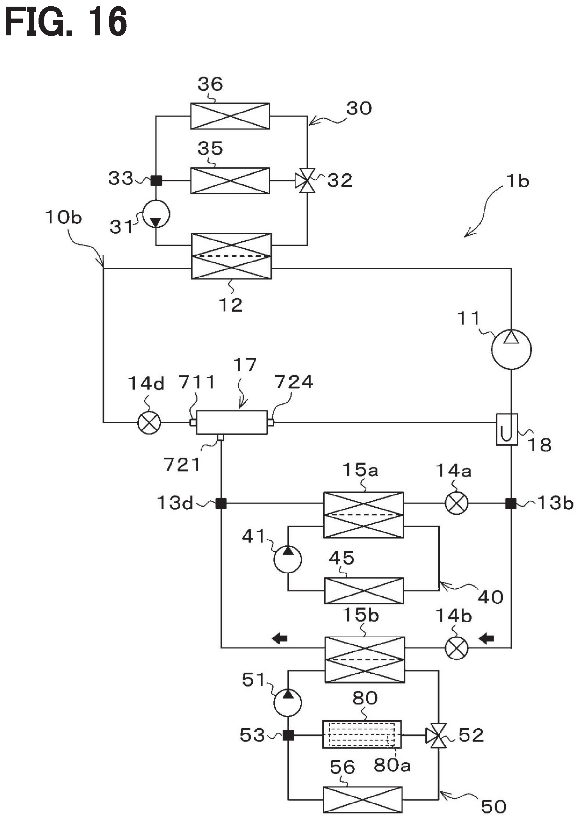

In the present embodiment, the refrigeration cycle device according to the present disclosure is applied to a vehicular air conditioner 1b mounted on an electric vehicle. As illustrated in the overall configuration diagram of FIG. 16, the vehicular air conditioner 1b includes a refrigeration cycle 10b, an air-heating heat medium circuit 30, an air-cooling heat medium circuit 40, a cooling heat medium circuit 50, an interior air conditioning unit 60, a control device 70, and the like.

In the refrigeration cycle 10b, carbon dioxide is used as the refrigerant as in the second embodiment. The refrigeration cycle 10b constitutes a supercritical refrigeration cycle. In the refrigeration cycle 10b, the placement of the second three-way joint 13b is changed from that of the refrigeration cycle 10a described in the third embodiment.

Therefore, in the refrigeration cycle 10b, the inlet side of the nozzle-side flow rate regulating valve 14d is connected to the outlet of the refrigerant passage of the water-refrigerant heat exchanger 12. The nozzle-side flow rate regulating valve 14d is a nozzle-side pressure-reducing section that reduces pressure of the refrigerant flowing out of the water-refrigerant heat exchanger 12. Moreover, the nozzle-side flow rate regulating valve 14d is a nozzle-side flow rate regulating section that regulates the flow rate of the refrigerant flowing into the nozzle portion 71 of the ejector 17.

The inlet side of the nozzle portion 71 of the ejector 17 is connected to the outlet side of the nozzle-side flow rate regulating valve 14d. The inlet side of the accumulator 18 is connected to the outlet 724 of the ejector 17. The inflow port side of the second three-way joint 13b is connected to the liquid-phase refrigerant outlet of the accumulator 18.

The refrigerant inlet side of the air-cooling chiller 15a is connected to one outflow port of the second three-way joint 13b via the air-cooling expansion valve 14a. The refrigerant inlet side of the cooling chiller 15b is connected to the other outflow port of the second three-way joint 13b via the cooling expansion valve 14b.

One inflow port side of a fourth three-way joint 13d is connected to the refrigerant outlet of the air-cooling chiller 15a. The other inflow port side of the fourth three-way joint 13d is connected to the refrigerant outlet of the cooling chiller 15b. The suction port 721 side of the ejector 17 is connected to the outflow port of the fourth three-way joint 13d. Other configurations of the vehicular air conditioner 1b are the same as those of the vehicular air conditioner 1a described in the third embodiment.

Next, the operation of the vehicular air conditioner 1b of the present embodiment in the above configuration will be described. The vehicular air conditioner 1b can switch the operating mode as in the second embodiment. Specifically, the vehicular air conditioner 1b can execute (a) an air-cooling mode, (c) an air-heating mode, and (d) a cooling and air-cooling mode.

(a) Air-cooling mode

In the refrigeration cycle 10b in the air-cooling mode, the control device 70 brings the nozzle-side flow rate regulating valve 14d into the throttling state, brings the air-cooling expansion valve 14a into the throttling state, and brings the cooling expansion valve 14b into the fully closed state.

Therefore, the refrigeration cycle 10b in the air-cooling mode is switched to a refrigerant circuit in which the refrigerant discharged from the compressor 11 flows through the water-refrigerant heat exchanger 12, the nozzle-side flow rate regulating valve 14d, the nozzle inlet 711 of the ejector 17, and the accumulator 18 in this order. Moreover, the gas-phase refrigerant flowing out of the gas-phase refrigerant outlet of the accumulator 18 flows to the intake port side of the compressor 11. The liquid-phase refrigerant flowing out of the liquid-phase refrigerant outlet of the accumulator 18 flows through the air-cooling expansion valve 14a, the air-cooling chiller 15a, and the suction port 721 of the ejector 17 in this order. Therefore, the usage mode of the ejector 17 in the air-cooling mode is a suction mode.

As in the air-cooling mode of the first embodiment, the control device 70 controls the refrigerant discharge capacity of the compressor 11 and the throttle opening of the air-cooling expansion valve 14a. The control device 70 also controls the throttle opening of the nozzle-side flow rate regulating valve 14d such that the pressure P1 and the temperature T1 of the refrigerant flowing out of the water-refrigerant heat exchanger 12 approach the target pressure PO1 and the target temperature TO1. Other control target devices are controlled as in the air-cooling mode of the first embodiment.

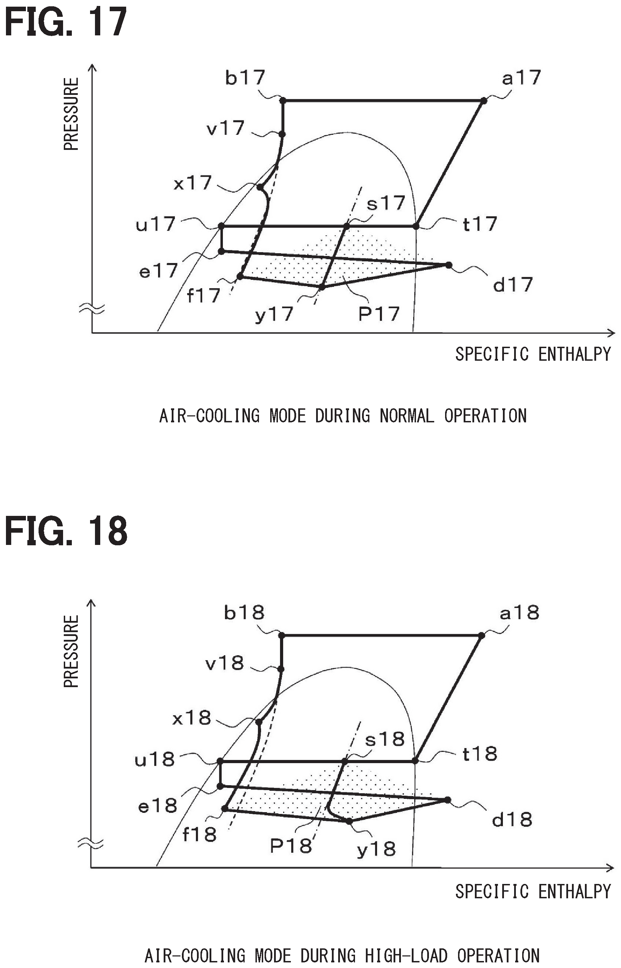

Therefore, in the refrigeration cycle 10b in the air-cooling mode, the state of the refrigerant changes as illustrated in the Mollier diagrams of FIGS. 17 and 18. FIG. 17 is a Mollier diagram illustrating a change in the state of the refrigerant during the normal operation described in the third embodiment. FIG. 18 is a Mollier diagram illustrating a change in the state of the refrigerant during the high-load operation described in the third embodiment.

During the normal operation, as illustrated in the Mollier diagram of FIG. 17, refrigerant in a supercritical state (point a17 in FIG. 17) discharged from the compressor 11 flows into the water-refrigerant heat exchanger 12. The refrigerant flowing into the water-refrigerant heat exchanger 12 exchanges heat with the air-heating heat medium to decrease enthalpy (from point a17 to point b17 in FIG. 17). Thus, the air-heating heat medium is heated.

The refrigerant flowing out of the water-refrigerant heat exchanger 12 is reduced in pressure by the nozzle-side flow rate regulating valve 14d to regulate the flow rate (from point b17 to point v17 in FIG. 17). The refrigerant flowing out of the nozzle-side flow rate regulating valve 14d flows into the nozzle portion 71 of the ejector 17. The refrigerant flowing into the nozzle portion 71 enters a thermodynamic non-equilibrium state at the tapered portion 712 or the throat portion 713 of the nozzle portion 71 (point x17 in FIG. 17).

For the refrigerant in the thermodynamic non-equilibrium state, as in the third embodiment, the thermodynamic non-equilibrium state is resolved in the divergent portion 714. Therefore, the jetted refrigerant jetted from the jetting port 715 approaches the isentropic line on the inlet side (from point x14 to point f14 in FIG. 14). As in the third embodiment, most of the mixed refrigerant of the jetted refrigerant jetted from the nozzle portion 71 and the suction refrigerant drawn from the suction port 721 approaches point y17 in region P17 of FIG. 17.

The mixed refrigerant is isentropically increased in pressure by the action of shock waves generated in the divergent mixing portion 722b (from point y17 to point s17 in FIG. 17), and flows out of the outlet 724 of the ejector 17. The refrigerant flowing out of the outlet 724 of the ejector 17 flows into the accumulator 18 and is separated into gas and liquid (from point s17 to point t17, from point s17 to point u17 in FIG. 17).

The liquid-phase refrigerant flowing out of the liquid-phase refrigerant outlet of the accumulator 18 flows into the air-cooling expansion valve 14a and is reduced in pressure (from point u17 to point e17 in FIG. 17). The refrigerant reduced in pressure by the air-cooling expansion valve 14a flows into the air-cooling chiller 15a. In the air-cooling chiller 15a, the refrigerant flowing out of the ejector 17 absorbs heat from the air-cooling heat medium and evaporates (from point e12 to point d12 in FIG. 17). Thus, the air-cooling heat medium is cooled. The refrigerant flowing out of the air-cooling chiller 15a is drawn from the suction port 721 of the ejector 17.

The gas-phase refrigerant flowing out of the gas-phase refrigerant outlet of the accumulator 18 is drawn into the compressor 11 and compressed again (from point t17 to point a17 in FIG. 17). Other operations are similar to those of the first embodiment.

Next, the high-load operation will be described. In the high-load operation, as illustrated in the Mollier diagram of FIG. 18, the refrigerant in the thermodynamic non-equilibrium state (point x18 in FIG. 18) is jetted in the tapered portion 712 or the throat portion 713 of the nozzle portion 71 in a state separated from the isentropic line on the inlet side (from point x18 to point f18 in FIG. 18). As in the third embodiment, most of the mixed refrigerant of the jetted refrigerant and the suction refrigerant in the thermodynamic non-equilibrium state approaches point y18 in region P18 of FIG. 18.

As in the third embodiment, the mixed refrigerant of the suction refrigerant and the jetted refrigerant accelerated by the tapered mixing portion 722a approaches the pressure-increasing-side isentropic line. Pressure of the mixed refrigerant is isentropically increased by the action of shock waves generated in the divergent mixing portion 722b (from point y18 to point s18 in FIG. 18). Other operations are the same as those in the normal operation.

Therefore, also in the air-cooling mode of the present embodiment, air-cooling of the vehicle interior is achieved as in the first embodiment.

(b) Air-heating mode

In the refrigeration cycle 10b in the air-heating mode, the control device 70 brings the nozzle-side flow rate regulating valve 14d into the throttling state, brings the air-cooling expansion valve 14a into the fully closed state, and brings the cooling expansion valve 14b into the throttling state.

Therefore, the refrigeration cycle 10b in the air-heating mode is switched to a refrigerant circuit in which the refrigerant discharged from the compressor 11 flows through the water-refrigerant heat exchanger 12, the nozzle-side flow rate regulating valve 14d, the nozzle inlet 711 of the ejector 17, and the accumulator 18 in this order. Moreover, the gas-phase refrigerant flowing out of the gas-phase refrigerant outlet of the accumulator 18 flows to the intake port side of the compressor 11. The liquid-phase refrigerant flowing out of the liquid-phase refrigerant outlet of the accumulator 18 flows through the cooling expansion valve 14b, the cooling chiller 15b, and the suction port 721 of the ejector 17 in this order. Therefore, the usage mode of the ejector 17 in the air-heating mode is a suction mode.

As in the air-heating mode of the first embodiment, the control device 70 controls the refrigerant discharge capacity of the compressor 11 and the throttle opening of the cooling expansion valve 14b. The control device 70 also controls the throttle opening of the nozzle-side flow rate regulating valve 14d such that the pressure P1 and the temperature T1 of the refrigerant flowing out of the water-refrigerant heat exchanger 12 approach the target pressure PO1 and the target temperature TO1. Other control target devices are controlled as in the air-heating mode of the first embodiment.

Therefore, in the refrigeration cycle 10b in the air-heating mode, a vapor compression refrigeration cycle is configured in which the water-refrigerant heat exchanger 12 functions as a condenser and the cooling chiller 15b functions as an evaporator. In the water-refrigerant heat exchanger 12, the air-heating heat medium is heated. In the cooling chiller 15b, the cooling heat medium is cooled. Other operations are similar to those of the first embodiment.

Therefore, in the air-heating mode of the present embodiment, air-heating of the vehicle interior is achieved as in the first embodiment. Furthermore, in the air-heating mode, the battery 80 can be cooled using the cooling capacity of the refrigeration cycle 10b. In the cooling chiller 15b, the waste heat of the battery 80 and the heat of the outside air can be absorbed by the refrigerant, and can be used as a heat source for heating the ventilation air in the heater core 35.

(c) Cooling and air-cooling mode

In the refrigeration cycle 10b in the cooling and air-cooling mode, the control device 70 brings the nozzle-side flow rate regulating valve 14d into the throttling state, brings the air-cooling expansion valve 14a into the throttling state, and brings the cooling expansion valve 14b into the throttling state.

Therefore, the refrigeration cycle 10b in the cooling and air-cooling mode is switched to a refrigerant circuit in which the refrigerant discharged from the compressor 11 flows through the water-refrigerant heat exchanger 12, the nozzle-side flow rate regulating valve 14d, the nozzle inlet 711 of the ejector 17, and the accumulator 18 in this order. Moreover, the gas-phase refrigerant flowing out of the gas-phase refrigerant outlet of the accumulator 18 flows to the intake port side of the compressor 11. The liquid-phase refrigerant flowing out of the liquid-phase refrigerant outlet of the accumulator 18 flows through the air-cooling expansion valve 14a, the air-cooling chiller 15a, and the suction port 721 of the ejector 17 in this order, and further flows through the cooling expansion valve 14b, the cooling chiller 15b, and the suction port 721 of the ejector 17 in this order. That is, the refrigeration cycle 10b is switched to a refrigerant circuit in which the air-cooling chiller 15a and the cooling chiller 15b are connected in parallel to the flow of the refrigerant flowing out of the accumulator 18. Therefore, the usage mode of the ejector 17 in the air-heating mode is a suction mode.

As in the cooling and air-cooling mode of the first embodiment, the control device 70 controls the refrigerant discharge capacity of the compressor 11 and the throttle openings of the air-cooling expansion valve 14a and the cooling expansion valve 14b. The control device 70 also controls the throttle opening of the nozzle-side flow rate regulating valve 14d such that the pressure P1 and the temperature T1 of the refrigerant flowing out of the water-refrigerant heat exchanger 12 approach the target pressure PO1 and the target temperature TO1. Other control target devices are controlled as in the cooling and air-cooling mode of the first embodiment.

Therefore, in the refrigeration cycle 10b in the cooling and air-cooling mode, a vapor compression refrigeration cycle is configured in which the water-refrigerant heat exchanger 12 functions as a condenser and the air-cooling chiller 15a and the cooling chiller 15b function as evaporators. In the water-refrigerant heat exchanger 12, the air-heating heat medium is heated. In the air-cooling chiller 15a, the air-cooling heat medium is cooled. In the cooling chiller 15b, the cooling heat medium is cooled. Other operations are similar to those of the first embodiment.

Therefore, also in the cooling and air-cooling mode of the present embodiment, air-cooling of the vehicle interior is achieved as in the first embodiment. Furthermore, in the cooling and air-cooling mode, the battery 80 can be cooled using the cooling capacity of the refrigeration cycle 10b.

As described above, the vehicular air conditioner 1b provided with the refrigeration cycle 10b constituting the supercritical refrigeration cycle can also perform comfortable air conditioning of the vehicle interior and appropriate temperature regulation of the in-vehicle device. Moreover, in the vehicular air conditioner 1b, it is possible to resolve the thermodynamic non-equilibrium state of the refrigerant in the refrigeration cycle 10b regardless of the load variation in any operating mode, thereby sufficiently improving the operating efficiency of the vehicular air conditioner 1b.

The present disclosure is not limited to the embodiments described above but can be variously modified as follows without departing from the gist of the present disclosure.

In the embodiments described above, an example in which the refrigeration cycle device according to the present disclosure is applied to the vehicular air conditioner has been described. However, the application target of the refrigeration cycle device is not limited to the vehicular air conditioner.

For example, the refrigeration cycle device according to the present disclosure may be applied to a hot water supply device that heats domestic water serving as a heating target. For example, the refrigeration cycle device according to the present disclosure may be applied to an air conditioner having a server cooling function, which performs interior air conditioning while cooling a computer server as an object to be cooled.

When the refrigeration cycle device according to the present disclosure is applied to a vehicular air conditioner, temperatures of a motor generator, an inverter, a sensor processing unit, a transaxle, a control device for ADAS, and the like may be regulated as in-vehicle devices serving as temperature regulation targets.

The motor generator is an electric motor having a function as a motor that outputs driving force for traveling and a function as a generator. The inverter is an electric circuit device that supplies electric power to a motor generator and the like. The sensor processing unit is a control device in which an interface and a communication function of an environmental sensor are integrated for automatic operation and energy saving operation. The transaxle is a power transmission mechanism in which a transmission, a differential gear, and the like are integrated. The control device for ADAS is a control device for advanced driver assistance systems.

The configuration of the refrigeration cycle device according to the present disclosure is not limited to the configurations disclosed in the embodiments described above.

For example, in the refrigeration cycle 10 of the first embodiment, the bypass-side flow rate regulating valve 14c as the bypass-side flow rate regulating section and the ejector 17 may be integrated. Specifically, the bypass-side flow rate regulating section may regulate the flow rate of the refrigerant flowing through the bypass passage 20 by changing the passage cross-sectional area of the refrigerant passage formed in the nozzle portion 71.

Similarly, in the refrigeration cycle 10a of the second embodiment, the air-cooling expansion valve 14a and the ejector 17 may be integrated. Specifically, the air-cooling expansion valve 14a may regulate the flow rate Gd of the refrigerant flowing into the nozzle portion 71 by changing the passage cross-sectional area of the refrigerant passage formed in the nozzle portion 71.

According to this, a pressure-reducing process of the refrigerant in the nozzle portion 71 can be brought close to an isentropic pressure-reducing expansion.

In the embodiments described above, an example in which the heating section is formed by each component of the water-refrigerant heat exchanger 12 and the air-heating heat medium circuit 30 has been described, but the present disclosure is not limited thereto.

For example, an interior condenser may be employed as the heating section. The interior condenser is a heat exchange section that exchanges heat between the refrigerant discharged from the compressor 11 and the ventilation air having passed through the cooler core 45 to heat the ventilation air. The interior condenser only need be disposed in the air passage of the interior air conditioning unit 60 in the same manner as the heater core 35.

Furthermore, the heating target described above in the heating section is not limited to the ventilation air. For example, an in-vehicle device such as a battery or a motor generator may be employed as the heating target to warm up the in-vehicle device.

In the embodiments described above, an example in which the air-conditioning cooling section is formed by each component of the air-cooling chiller 15a and the air-cooling heat medium circuit 40 has been described, but the present disclosure is not limited thereto.

For example, an interior evaporator may be employed as the air-conditioning cooling section. The interior evaporator is a heat exchange section that exchanges heat between the low-pressure refrigerant and the ventilation air to evaporate the low-pressure refrigerant, thereby cooling the ventilation air. The interior evaporator only need be disposed in the air passage of the interior air conditioning unit 60 in the same manner as the cooler core 45.

In the embodiments described above, an example has been described in which, in the cooling heat medium circuit 50, heat of the battery 80 as a temperature regulation target and heat of outside air are absorbed by the refrigerant and used as a heat source for heating ventilation air as a heating target. However, the present disclosure is not limited thereto. For example, heat of interior air may be absorbed.

In the embodiments described above, an example in which the heat of the refrigerant is dissipated to the outside air through the air-heating heat medium during the air-cooling mode or the like has been described, but the present disclosure is not limited thereto. For example, an exterior heat exchanger for heat dissipation that exchanges heat between the high-pressure refrigerant and the outside air may be provided. In the refrigeration cycle 10 or the like in the embodiments described above, the refrigerant absorbs the heat of the outside air via the cooling heat medium during the air-heating mode or the like, but the present disclosure is not limited thereto. For example, an exterior heat exchanger for heat absorption that causes heat exchange between the low-pressure refrigerant and the outside air may be provided.

Moreover, one interior heat exchanger may be used for both heat dissipation and heat absorption by switching the refrigerant circuit.

The circuit configuration of the refrigeration cycle 10 or the like is not limited to the circuit configurations disclosed in the embodiments described above.

For example, in the refrigeration cycle 10 described with reference to FIG. 1, the third three-way joint 13c may be disposed in the refrigerant passage from the refrigerant outlet of the cooling chiller 15b to the suction port 721 of the ejector 17. That is, a refrigerant circuit may be formed in which both the refrigerant flowing out of the air-cooling chiller 15a and the refrigerant flowing out of the cooling chiller 15b can be drawn from the suction port 721 of the ejector 17.

For example, in the refrigeration cycle 10a described with reference to FIGS. 13 and 16, a dryness regulating section may be employed instead of the second three-way joint 13b. The dryness regulating section is a branch section that allows refrigerants having different dryness to flow out.

More specifically, as the dryness regulating section, a centrifugal gas-liquid separator that separates the refrigerant into gas and liquid by the action of centrifugal force can be employed. The refrigerant having a relatively high dryness on the center side may flow out to the air-cooling expansion valve 14a side, and the refrigerant having a relatively low dryness on the outer peripheral side may flow out to the cooling expansion valve 14b side.

For example, in the refrigeration cycle 10a described with reference to FIGS. 13 and 16, an internal heat exchanger may be disposed instead of the air-cooling chiller 15a. The internal heat exchanger is an internal heat exchange section that exchanges heat between the high-pressure refrigerant flowing out of the water-refrigerant heat exchanger 12 and the refrigerant flowing out of the outlet 724 of the ejector 17. According to this, the enthalpy of the refrigerant flowing into the cooling chiller 15b can be reduced, and the cooling capacity delivered by the cooling chiller 15b can be increased.

An example in which the air-heating heat medium three-way valve 32 is employed in the air-heating heat medium circuit 30 of the embodiments described above has been described, but the present disclosure is not limited thereto. For example, a plurality of heat medium flow rate regulating valves may be employed as long as the flow rate ratio between the flow rate of the air-heating heat medium flowing into the heater core 35 and the flow rate of the air-heating heat medium flowing into the high-temperature-side radiator 36 can be appropriately regulated. As the heat medium flow rate regulating valve, a flow rate regulating valve having a configuration equivalent to that of the bypass-side flow rate regulating valve 14c may be employed.

Further, an example in which the cooling heat medium three-way valve 52 is employed in the cooling heat medium circuit 50 of the embodiments described above has been described, but the present disclosure is not limited thereto. For example, a plurality of heat medium flow rate regulating valves may be employed as long as the flow rate ratio between the flow rate of the cooling heat medium flowing into the cooling water passage 80a of the battery 80 and the flow rate of the cooling heat medium flowing into the low-temperature-side radiator 56 can be appropriately regulated.

In the embodiments described above, an example in which the air-heating heat medium circuit 30, the air-cooling heat medium circuit 40, and the cooling heat medium circuit 50 are formed as independent circuits has been described, but the present disclosure is not limited thereto. For example, the air-cooling heat medium circuit 40 and the cooling heat medium circuit 50 may be caused to communicate with each other to enable regulation of the temperature of the heat medium flowing into the cooler core 45 and the temperature of the heat medium flowing out of the cooling water passage 80a of the battery 80.

The sensor group for control connected to the input side of the control device 70 is not limited to the detecting section disclosed in the embodiments described above. Various detecting sections may be added, as necessary.

In the embodiments described above, an example in which R1234yf and R744 are employed as the refrigerant of the refrigeration cycle 10 or the like has been described, but the present disclosure is not limited thereto. For example, R134a, R600a, R410A, R404A, R32, R407C, R290, and the like may be employed. Mixed refrigerant, obtained by mixing a plurality of types of these refrigerants, or the like may be employed. As the refrigerant, it is desirable to employ refrigerant having saturation pressure equal to or higher than the saturation pressure of R1234yf at the same temperature.

In the embodiments described above, an example in which an ethylene glycol aqueous solution is employed as the low-temperature-side heat medium and the air-heating heat medium has been described, but the present disclosure is not limited thereto. As the air-heating heat medium and the low-temperature-side heat medium, for example, dimethylpolysiloxane, a solution containing a nanofluid or the like, an antifreeze liquid, aqueous liquid refrigerant containing alcohol or the like, or a liquid medium containing oil or the like may be employed.

The control mode of the refrigeration cycle device according to the present disclosure is not limited to the control mode disclosed in the embodiments described above.

In the embodiments described above, the vehicular air conditioner 1 or the like capable of executing various operating modes has been described, but execution of all the operating modes described above is not required. For example, in the vehicular air conditioner 1, as long as the hot-gas air-heating mode (f-1) in which the usage mode of the ejector 17 is a suction mode can be executed, the effects described in the first embodiment can be obtained.

Similarly, in the vehicular air conditioners 1a, 1b, as long as the operating mode in which the usage mode of the ejector 17 is a suction mode can be executed, the operating efficiency of the vehicular air conditioners 1a, 1b, and the like can be sufficiently improved, as described in the second to fourth embodiments.

Alternatively, execution of other operating modes may be possible. For example, in the air-heating mode (c) of the second embodiment, the interior blower 62 may be stopped to execute the operating mode corresponding to the single cooling mode (e). In the cooling and air-cooling mode (d) of the second embodiment, the operating mode corresponding to the dehumidifying and air-heating mode (b) may be executed by increasing the heat dissipation amount of the air-heating heat medium to the ventilation air in the heater core 35.

In the third and fourth embodiments described above, an example has been described in which the throttle opening of the cooling expansion valve 14b or the nozzle-side flow rate regulating valve 14d is controlled such that the pressure P1 and the temperature T1 of the refrigerant flowing out of the water-refrigerant heat exchanger 12 approach the target pressure PO1 and the target temperature TO1. However, the present disclosure is not limited thereto. The throttle opening may be controlled such that the degree of subcooling of the refrigerant flowing out of the water-refrigerant heat exchanger 12 approaches a predetermined reference degree of subcooling.

Features of the refrigeration cycle device disclosed in the present specification are as follows.

(Article 1)

An ejector includes: a nozzle portion (71) configured to accelerate and jet drive-side fluid; and a body portion (72) having a suction port (721) configured to draw suction-side fluid. The body portion has a mixing portion (722) configured to mix jetted fluid, which is jetted from the nozzle portion, with suction fluid, which is drawn from the suction port, and an outlet (724) configured to cause mixed fluid, which is mixed in the mixing portion, to flow out. The mixing portion includes a tapered mixing portion (722a) configured to accelerate velocity of the mixed fluid to a value equal to or higher than speed of sound, and a divergent mixing portion (722b) configured to generate a shock wave in the mixed fluid, which flows out of the tapered mixing portion and eliminate the generated shock wave. The tapered mixing portion forms a fluid passage having a shape with a passage cross-sectional area reduced in a flow direction of the mixed fluid. The divergent mixing portion forms a fluid passage having a shape with a passage cross-sectional area increased in the flow direction of the mixed fluid.

(Article 2)

The ejector according to article 1, in which the tapered mixing portion is formed in a shape with a passage cross-sectional area that is reduced in the flow direction of the mixed fluid, such that pressure of at least a portion of the mixed fluid in the tapered mixing portion is lower than pressure of the jetted fluid at a jetting port (715) of the nozzle portion.

(Article 3)

The ejector according to article 1 or 2, in which a length of the tapered mixing portion in the flow direction of the mixed fluid is a tapered mixing distance LMIX1, and Equation (1) and Equation (2) are satisfied:

[Mathematical Expression 12]

$$Lv1 \ < LMIX1 \ \le 3 \times Lv1 \ \text{...} \quad \text{Equation (2)}$$

[Mathematical Expression 13]

$$Lv1 = \frac{u_{snin}\rho_{l1}D_{l1}^2}{18\mu_{g1}} \quad \text{...Equation (2)}$$

$u_{snin}$ is velocity of the suction-side fluid at the suction port; $\rho_{l1}$ is density of liquid-phase fluid at the suction port; $D_{l1}$

is droplet diameter of the liquid-phase fluid at the suction port; and$\mu_{g1}$ is viscosity of gas-phase fluid at the suction port.

(Article 4)

The ejector according to any one of articles 1 to 3, in which the divergent mixing portion is formed in a shape with a passage cross-sectional area that is increased in the flow direction of the mixed fluid, such that velocity of the mixed fluid at an outlet portion of the divergent mixing portion becomes a subsonic speed.

(Article 5)

The ejector according to any one of articles 1 to 4, in which a length of the divergent mixing portion in the flow direction of the mixed fluid is a divergent mixing distance LMIX2, and Equation (3) and Equation (4) are satisfied:

[Mathematical Expression 14]

$$Lv2 < LMIX2 \leq 6 \times Lv2 \quad \text{...} \quad \text{Equation (3)}$$

[Mathematical Expression 15]

$$Lv2 = \frac{u_{neck}\rho_{l2}D_{l2}^2}{18\mu_{g2}} \quad \text{...} \quad \text{Equation (4)}$$

$u_{neck}$ is velocity of the mixed fluid at an outlet portion of the tapered mixing portion; $_{\rho l2}$ is density of liquid-phase fluid at the outlet portion of the tapered mixing portion; $D_{l2}$ is droplet diameter of the liquid-phase fluid at the outlet portion of the tapered mixing portion; and$\mu_{g2}$ is viscosity of gas-phase fluid at the outlet portion of the tapered mixing portion.

(Article 6)

The ejector according to any one of articles 1 to 5, in which the tapered mixing portion is formed in a shape with a passage cross-sectional area that is reduced in the flow direction of the mixed fluid, such that when the jetted fluid is in a thermodynamic non-equilibrium state, the mixed fluid enters a thermodynamic equilibrium state.

(Article 7)

A refrigeration cycle device includes: a compressor (11) configured to compress and discharge refrigerant; an upstream branch section (13a) configured to branch a flow of refrigerant discharged from the compressor into flows of refrigerant; a heating section (12, 30) configured to heat a heating target using, as a heat source, one of the flows of refrigerant branched at the upstream branch section; a heating-section-side pressure-reducing section (14b) configured to reduce pressure of the refrigerant flowing out of the heating section; a bypass passage (20) configured to cause an other of the flows of refrigerant, which is branched at the upstream branch section, to flow therethrough to bypass the heating section; a bypass-side flow rate regulating section (14c) configured to regulate a flow rate of refrigerant flowing through the bypass passage; and an ejector (17) including a nozzle portion (71) configured to accelerate and jet refrigerant, which flows out of the bypass passage, and a body portion (72) having a suction port (721) configured to draw refrigerant, which is reduced in pressure in the heating-section-side pressure-reducing section. The body portion includes a mixing portion (722) configured to mix jetted refrigerant, which is jetted from the nozzle portion, with suction refrigerant, which is drawn from the suction port, and an outlet

(724) configured to cause mixed refrigerant, which is mixed in the mixing portion, to flow out to an intake port side of the compressor. The mixing portion includes a tapered mixing portion (722a) configured to accelerate velocity of the mixed refrigerant to a value equal to or higher than speed of sound, and a divergent mixing portion (722b) configured to generate a shock wave in the mixed refrigerant, which flows out of the tapered mixing portion and eliminate the generated shock wave. The tapered mixing portion forms a refrigerant passage having a shape with a passage cross-sectional area reduced in a flow direction of the mixed refrigerant. The divergent mixing portion forms a refrigerant passage having a shape with a passage cross-sectional area increased in the flow direction of the mixed refrigerant.

(Article 8)

A refrigeration cycle device includes: a compressor (11) configured to compress and discharge refrigerant; a heat dissipating section (12, 30) configured to dissipate heat from the refrigerant, which is discharged from the compressor; a suction-side evaporating section (15b, 50) configured to evaporate the refrigerant; and an ejector (17) including a nozzle portion (71) configured to accelerate and jet refrigerant, which flows out of the heat dissipating section, and a body portion (72) having a suction port (721) configured to draw refrigerant, which flows out of the suction-side evaporating section. The body portion includes a mixing portion (722) configured to mix jetted refrigerant, which is jetted from the nozzle portion, with suction refrigerant, which is drawn from the suction port, and an outlet (724) configured to cause mixed refrigerant, which is mixed in the mixing portion, to flow out to an intake port side of the compressor. The mixing portion includes a tapered mixing portion (722a) configured to accelerate velocity of the mixed refrigerant to a value equal to or higher than speed of sound, and a divergent mixing portion (722b) configured to generate a shock wave in the mixed refrigerant, which flows out of the tapered mixing portion and eliminate the generated shock wave. The tapered mixing portion forms a refrigerant passage having a shape with a passage cross-sectional area reduced in a flow direction of the mixed refrigerant. The divergent mixing portion forms a refrigerant passage having a shape with a passage cross-sectional area increased in the flow direction of the mixed refrigerant.

(Article 9)

The refrigeration cycle device according to article 8, further includes: a downstream branch section (13b) configured to branch a flow of refrigerant flowing out of the heat dissipating section into flows of refrigerant; and a suction-side pressure-reducing section (14b) configured to reduce pressure of one of the flows of refrigerant, which is branched at the downstream branch section, and cause the one of the flows of refrigerant to flow out to an inlet side of the suction-side evaporating section. The nozzle portion is configured to accelerate and jet an other of the flows of refrigerant, which is branched at the downstream branch section.

(Article 10)

The refrigeration cycle device according to article 8, further includes: a gas-liquid separating section (18) configured to separate refrigerant, which flows out of the outlet, into gas and liquid. The intake port side of the compressor is connected to a gas-phase refrigerant outlet of the gas-liquid separating section. An inlet side of the suction-side evaporating section is connected to a liquid-phase refrigerant outlet of the gas-liquid separating section.

Although the present disclosure has been described in accordance with the embodiments, it is understood that the present disclosure is not limited to the embodiments and structures. The present disclosure encompasses various modifications and variations within an equivalent scope. In addition, various combinations and forms, as well as other combinations and forms including only one element, more than that, or less than that, are also within the scope and idea of the present disclosure.

**Claims**

1.  An ejector comprising:

    a nozzle portion (71) configured to accelerate and jet drive-side fluid; and
    a body portion (72) having a suction port (721) configured to draw suction-side fluid, wherein the body portion has

    a mixing portion (722) configured to mix jetted fluid, which is jetted from the nozzle portion, with suction fluid, which is drawn from the suction port, and
    an outlet (724) configured to cause mixed fluid, which is mixed in the mixing portion, to flow out,

    the mixing portion includes

    a tapered mixing portion (722a) configured to accelerate velocity of the mixed fluid to a value equal to or higher than speed of sound, and
    a divergent mixing portion (722b) configured to generate a shock wave in the mixed fluid, which flows out of the tapered mixing portion and eliminate the generated shock wave,

    the tapered mixing portion forms a fluid passage having a shape with a passage cross-sectional area reduced in a flow direction of the mixed fluid, and

the divergent mixing portion forms a fluid passage having a shape with a passage cross-sectional area increased in the flow direction of the mixed fluid.

2. The ejector according to claim 1, wherein
the tapered mixing portion is formed in a shape with a passage cross-sectional area that is reduced in the flow direction of the mixed fluid, such that pressure of at least a portion of the mixed fluid in the tapered mixing portion is lower than pressure of the jetted fluid at a jetting port (715) of the nozzle portion.

3. The ejector according to claim 1, wherein

a length of the tapered mixing portion in the flow direction of the mixed fluid is a tapered mixing distance LMIX1, and

Equation (1) and Equation (2) are satisfied:

[Mathematical Expression 1]

$$Lv1 < LMIX1 \leq 3 \times Lv1 \quad ... \quad \text{Equation (1)}$$

[Mathematical Expression 2]

$$Lv1 = \frac{u_{snin}\rho_{l1}D_{l1}^2}{18\mu_{g1}} \quad ... \text{Equation (2)}$$

where:

$u_{snin}$ is velocity of the suction-side fluid at the suction port;
$\rho_{l1}$ is density of liquid-phase fluid at the suction port;
$D_{l1}$ is droplet diameter of the liquid-phase fluid at the suction port; and
$\mu_{g1}$ is viscosity of gas-phase fluid at the suction port.

4. The ejector according to claim 1, wherein
the divergent mixing portion is formed in a shape with a passage cross-sectional area that is increased in the flow direction of the mixed fluid, such that velocity of the mixed fluid at an outlet portion of the divergent mixing portion becomes a subsonic speed.

5. The ejector according to claim 1, wherein

a length of the divergent mixing portion in the flow direction of the mixed fluid is a divergent mixing distance LMIX2, and

Equation (3) and Equation (4) are satisfied:

[Mathematical Expression 3]

$$Lv2 < LMIX2 \leq 6 \times Lv2 \quad ... \quad \text{Equation (3)}$$

[Mathematical Expression 4]

$$Lv2 = \frac{u_{neck}\rho_{l2}D_{l2}^2}{18\mu_{g2}} \quad ... \quad \text{Equation (4)}$$

where:

$u_{neck}$ is velocity of the mixed fluid at an outlet portion of the tapered mixing portion;
$\rho_{l2}$ is density of liquid-phase fluid at the outlet portion of the tapered mixing portion;
$D_{l2}$ is droplet diameter of the liquid-phase fluid at the outlet portion of the tapered mixing portion; and
$\mu_{g2}$ is viscosity of gas-phase fluid at the outlet portion of the tapered mixing portion.

6. The ejector according to claim 1, wherein
the tapered mixing portion is formed in a shape with a passage cross-sectional area that is reduced in the flow direction of the mixed fluid, such that when the jetted fluid is in a thermodynamic non-equilibrium state, the mixed fluid enters a thermodynamic equilibrium state.

7. A refrigeration cycle device comprising:

   a compressor (11) configured to compress and discharge refrigerant;
   an upstream branch section (13a) configured to branch a flow of refrigerant discharged from the compressor into flows of refrigerant;
   a heating section (12, 30) configured to heat a heating target using, as a heat source, one of the flows of refrigerant branched at the upstream branch section;
   a heating-section-side pressure-reducing section (14b) configured to reduce pressure of the refrigerant flowing out of the heating section;
   a bypass passage (20) configured to cause an other of the flows of refrigerant, which is branched at the upstream branch section, to flow therethrough to bypass the heating section;
   a bypass-side flow rate regulating section (14c) configured to regulate a flow rate of refrigerant flowing through the bypass passage; and
   an ejector (17) including

      a nozzle portion (71) configured to accelerate and jet refrigerant, which flows out of the bypass passage, and
      a body portion (72) having a suction port (721) configured to draw refrigerant, which is reduced in pressure in the heating-section-side pressure-reducing section, wherein

   the body portion includes

      a mixing portion (722) configured to mix jetted refrigerant, which is jetted from the nozzle portion, with suction refrigerant, which is drawn from the suction port, and
      an outlet (724) configured to cause mixed refrigerant, which is mixed in the mixing portion, to flow out to an intake port side of the compressor,

   the mixing portion includes

      a tapered mixing portion (722a) configured to accelerate velocity of the mixed refrigerant to a value equal to or higher than speed of sound, and
      a divergent mixing portion (722b) configured to generate a shock wave in the mixed refrigerant, which flows out of the tapered mixing portion and eliminate the generated shock wave,

   the tapered mixing portion forms a refrigerant passage having a shape with a passage cross-sectional area reduced in a flow direction of the mixed refrigerant, and
   the divergent mixing portion forms a refrigerant passage having a shape with a passage cross-sectional area increased in the flow direction of the mixed refrigerant.

8. A refrigeration cycle device comprising:

   a compressor (11) configured to compress and discharge refrigerant;
   a heat dissipating section (12, 30) configured to dissipate heat from the refrigerant, which is discharged from the compressor;
   a suction-side evaporating section (15b, 50) configured to evaporate the refrigerant; and
   an ejector (17) including

      a nozzle portion (71) configured to accelerate and jet refrigerant, which flows out of the heat dissipating section, and
      a body portion (72) having a suction port (721) configured to draw refrigerant, which flows out of the suction-side evaporating section, wherein

   the body portion includes

a mixing portion (722) configured to mix jetted refrigerant, which is jetted from the nozzle portion, with suction refrigerant, which is drawn from the suction port, and

an outlet (724) configured to cause mixed refrigerant, which is mixed in the mixing portion, to flow out to an intake port side of the compressor,

the mixing portion includes

a tapered mixing portion (722a) configured to accelerate velocity of the mixed refrigerant to a value equal to or higher than speed of sound, and

a divergent mixing portion (722b) configured to generate a shock wave in the mixed refrigerant, which flows out of the tapered mixing portion and eliminate the generated shock wave,

the tapered mixing portion forms a refrigerant passage having a shape with a passage cross-sectional area reduced in a flow direction of the mixed refrigerant, and

the divergent mixing portion forms a refrigerant passage having a shape with a passage cross-sectional area increased in the flow direction of the mixed refrigerant.

9. The refrigeration cycle device according to claim 8, further comprising:

a downstream branch section (13b) configured to branch a flow of refrigerant flowing out of the heat dissipating section into flows of refrigerant; and

a suction-side pressure-reducing section (14b) configured to reduce pressure of one of the flows of refrigerant, which is branched at the downstream branch section, and cause the one of the flows of refrigerant to flow out to an inlet side of the suction-side evaporating section, wherein

the nozzle portion is configured to accelerate and jet an other of the flows of refrigerant, which is branched at the downstream branch section.

10. The refrigeration cycle device according to claim 8, further comprising:

a gas-liquid separating section (18) configured to separate refrigerant, which flows out of the outlet, into gas and liquid, wherein

the intake port side of the compressor is connected to a gas-phase refrigerant outlet of the gas-liquid separating section, and

an inlet side of the suction-side evaporating section is connected to a liquid-phase refrigerant outlet of the gas-liquid separating section.

# FIG. 1

➡ : HOT-GAS AIR-HEATING MODE

⇨ : HOT-GAS START-UP MODE

# FIG. 2

# FIG. 3

# FIG. 4

# FIG. 5

# FIG. 6

66

60

35

65

64

45

VENTILATION AIR

INSIDE AIR

63

M  62

OUTSIDE AIR

61

EP 4 768 737 A1

# FIG. 7

79

70

| 71a | INSIDE AIR TEMPERATURE SENSOR | → | 70a | → | COMPRESSOR | 11 |

| 71b | OUTSIDE AIR TEMPERATURE SENSOR |

| 71c | INSOLATION AMOUNT SENSOR |

| 72a | DISCHARGE REFRIGERANT TEMPERATURE/ PRESSURE SENSOR |

| 72b | AIR CONDITIONING REFRIGERANT TEMPERATURE /PRESSURE SENSOR |

| 72c | COOLING REFRIGERANT TEMPERATURE/ PRESSURE SENSOR |

| 72d | INTAKE REFRIGERANT TEMPERATURE/ PRESSURE SENSOR |

| 73a | AIR-HEATING HEAT MEDIUM TEMPERATURE SENSOR |

| 73b | AIR-COOLING HEAT MEDIUM TEMPERATURE SENSOR |

| 73c | COOLING HEAT MEDIUM TEMPERATURE SENSOR |

| 74 | BATTERY TEMPERATURE SENSOR |

| 75 | CONDITIONED AIR TEMPERATURE SENSOR |

AIR-COOLING EXPANSION VALVE — 14a

COOLING EXPANSION VALVE — 14b

BYPASS-SIDE FLOW RATE REGULATING VALVE — 14c

HIGH-TEMPERATURE-SIDE HEAT MEDIUM PUMP — 31

HIGH-TEMPERATURE-SIDE HEAT MEDIUM THREE-WAY VALVE — 32

AIR-COOLING HEAT MEDIUM PUMP — 41

COOLING HEAT MEDIUM PUMP — 51

COOLING HEAT MEDIUM THREE-WAY VALVE — 52

INTERIOR BLOWER — 62

INSIDE/OUTSIDE AIR SWITCHING DEVICE — 63

AIR MIX DOOR ACTUATOR — 64

OTHER ACTUATORS

80 — BATTERY

48

# FIG. 8

HOT-GAS AIR-HEATING MODE

# FIG. 9

HOT-GAS AIR-HEATING MODE

# FIG. 10

HOT-GAS START-UP MODE

# FIG. 11

➡ : COOLING AND AIR-COOLING MODE

# FIG. 12

AIR-COOLING AND COOLING MODE

# FIG. 13

# FIG. 14

AIR-COOLING AND COOLING MODE DURING NORMAL OPERATION

# FIG. 15

AIR-COOLING AND COOLING MODE DURING HIGH-LOAD OPERATION

# FIG. 16

# FIG. 17

AIR-COOLING MODE DURING NORMAL OPERATION

# FIG. 18

AIR-COOLING MODE DURING HIGH-LOAD OPERATION

## INTERNATIONAL SEARCH REPORT

| International application No. |
| --- |
| **PCT/JP2024/028436** |

**A. CLASSIFICATION OF SUBJECT MATTER**

*F04F 5/18*(2006.01)i; *F04F 5/44*(2006.01)i; *F25B 1/00*(2006.01)i; *F25B 41/42*(2021.01)i
FI:   F04F5/18; F25B1/00 389A; F04F5/44 D; F25B41/42; F25B1/00 101Z

According to International Patent Classification (IPC) or to both national classification and IPC

**B. FIELDS SEARCHED**

Minimum documentation searched (classification system followed by classification symbols)

F04F1/00-99/00; F25B1/00; F25B41/42;B01F21/00-25/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2014-115069 A (DENSO CORPORATION) 26 June 2014 (2014-06-26) paragraphs [0001], [0303]-[0321], fig. 1, 23-24 | 1-10 |

| ☐ Further documents are listed in the continuation of Box C. | ☑ See patent family annex. |
| --- | --- |

| Date of the actual completion of the international search | Date of mailing of the international search report |
| --- | --- |
| **09 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

### INTERNATIONAL SEARCH REPORT
**Information on patent family members**

International application No.

**PCT/JP2024/028436**

| Patent document cited in search report | | | Publication date (day/month/year) | Patent family member(s) | | | Publication date (day/month/year) |
|---|---|---|---|---|---|---|---|
| JP | 2014-115069 | A | 26 June 2014 | US 2015/0308462 A1 paragraphs [0002], [0293]-[0304], fig. 1, 23-24 WO 2014/076903 A1 CN 104797894 A | | | |

Form PCT/ISA/210 (patent family annex) (July 2022)

**EP 4 768 737 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023134625 A
- JP 2024112472 A
- JP 2010116927 A